# EUROPEAN PATENT APPLICATION

(11) **EP 2 138 551 A2**
(43) Date of publication of application: **30.12.2009**
(21) Application number: 09155999.7
(22) Date of filing: 24.03.2009
(51) Int. Cl.: C09K 11/06

(54) **Fluorene-derivatives and organic electroluminescent device using the same**

(30) Priority: 25.06.2008 KR 20080060393
(71) Applicant: Gracel Display Inc., Seoul 133-833 (KR)
(72) Inventor: Cho, Young Jun, Seoul 136-060 (KR); Kwon, Hyuck Joo, Seoul 130-100 (KR); Kim, Bong Ok, Seoul 135-090 (KR); Kim, Sung Min, Seoul 157-886 (KR); Yoon, Seung Soo, Seoul 135-884 (KR)
(74) Representative: Kent, Venetia Katherine

(57) **Abstract**

The present invention relates to novel organic electroluminescent compounds, and organic electroluminescent devices comprising the same as electroluminescent material. Specifically, the organic electroluminescent compounds according to the invention are **characterized in that** they are represented by Chemical Formula (1): 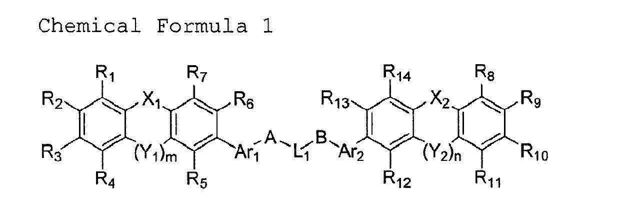 wherein, L₁ is a substituent selected from the following structures;

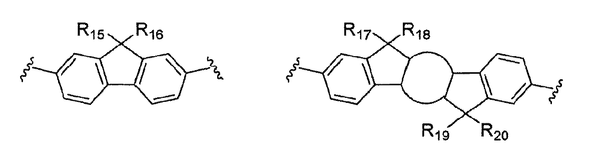

A and B independently represent a chemical bond, or a substituent selected from the following structures; 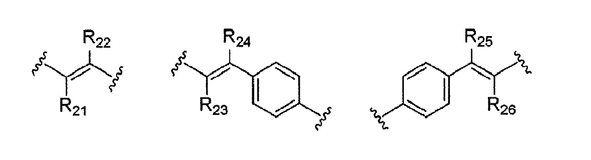 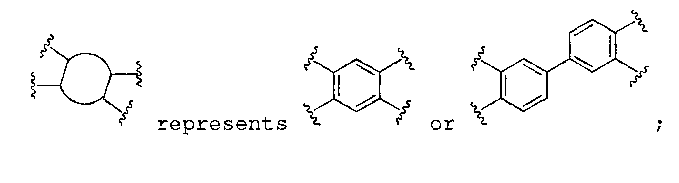 and m and n independently represent an integer from 0 to 4; provided that, if 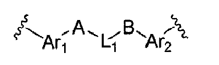 represents 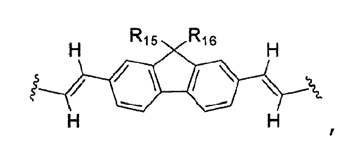 both X₁ and X₂ represent NR₃₃, and both Y₁ and Y₂ represent a chemical bond, then R₃₃ does not represent hydrogen or (C1-C5)alkyl.

The organic electroluminescent compounds according to the invention exhibit high luminous efficiency in blue color and excellent life property of material, so that an OLED having very good operation life can be prepared therefrom.

## Description

### FIELD OF THE INVENTION

The present invention relates to novel organic electroluminescent compounds, and organic electroluminescent devices employing the same in an electroluminescent layer. More specifically, the invention relates to novel organic electroluminescent compounds to be employed as blue electroluminescent material, and organic electroluminescent devices employing the same as dopant.

### BACKGROUND OF THE INVENTION

Among display devices, electroluminescence devices (EL devices) are self-luminescent display devices showing the advantage of wide angle of view, excellent contrast and rapid response rate. Eastman Kodak developed an organic EL device which employs a low molecular weight aromatic diamine and an aluminum complex as material for forming an EL layer, in 1987 for the first time [Appl. Phys. Lett. 51, 913, 1987].

The most important factor to determine the performances such as luminous efficiency, lifetime or the like in an organic EL device is electroluminescent material. Several properties required for such electroluminescent materials include that the material should have high fluorescent quantum yield in solid state and high mobility of electrons and holes, is not easily decomposed during vapor-deposition in vacuo, and forms uniform and stable thin film.

Organic electroluminescent materials can be generally classified into high-molecular materials and low-molecular materials. The low-molecular materials include metal complexes and thoroughly organic electroluminescent materials which do not contain metal, from the aspect of molecular structure. Such electroluminescent materials include chelate complexes such as tris(8-quinolinolato)aluminum complexes, coumarin derivatives, tetraphenylbutadiene derivatives, bis(styrylarylene) derivatives, and oxadiazole derivatives. From those materials, it is reported that light emission of visible region from blue to red can be obtained; and realization of full-colored display devices is expected thereby.

In the meanwhile, for conventional blue materials, a number of materials have been developed and commercialized since the development of diphenylvinyl-biphenyl (DPVBi) (Compound a) by Idemitsu-Kosan. In addition to the blue material system from Idemitsu-Kosan, dinaphthylanthracene (DNA) (Compound b) of Kodac, tetra(t-butyl)perylene (Compound c) system or the like have been known. However, extensive research and development should be performed with respect to these materials. The distryl compound system of Idemitsu-Kosan, which is known to have highest efficiency up to now, has 6 lm/W power efficiency and beneficial device lifetime of more than 30,000 hr. However, when it is applied to a full-colored display, the lifetime is merely several thousand hours, owing to decrease of color purity over operation time. In case of blue electroluminescence, it becomes advantageous from the aspect of the luminous efficiency, if the electroluminescent wavelength is shifted a little toward longer wavelength. However, it is not easy to apply the material to a display of high quality because of unsatisfactory color purity in blue. Furthermore, the research and development of such materials are urgent because of the problems in color purity, efficiency and thermal stability.

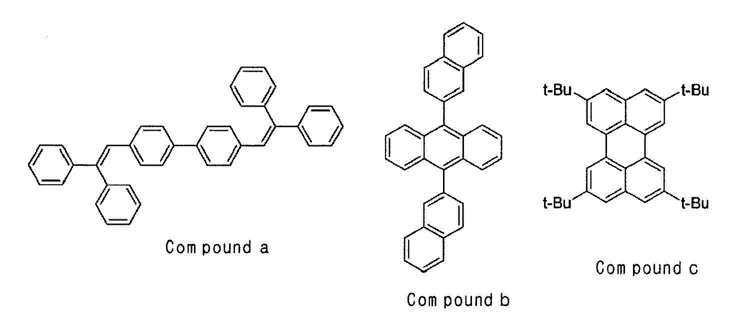

### SUMMARY OF THE INVENTION

With intensive efforts to overcome the problems of conventional techniques as described above, the present inventors have invented novel electroluminescent compounds to realize an organic electroluminescent device having excellent luminous efficiency and noticeably improved lifetime.

The object of the present invention is to provide organic electroluminescent compounds having the backbone to give more excellent electroluminescent properties, longer device life and appropriate color coordinate, as compared to those of conventional dopant materials, with overcoming disadvantages of them.

Another object of the invention is to provide organic electroluminescent devices of high efficiency and long life, which employ said organic electroluminescent compounds as electroluminescent material.

The present invention relates to organic electroluminescent compounds represented by Chemical Formula (1), and organic electroluminescent devices comprising the same. Since the organic electroluminescent compounds according to the invention show good luminous efficiency and excellent color purity and life property of material, OLED's having very good operation life can be manufactured therefrom.

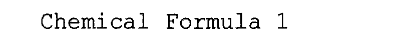

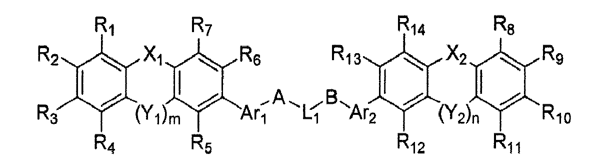

In Chemical Formula (1), L₁ is a substituent selected from the following structures;

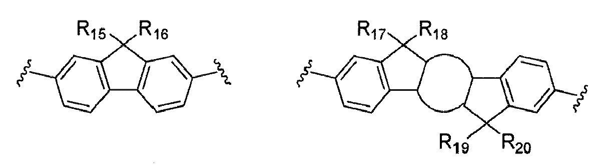

A and B independently represent a chemical bond, or a substituent selected from the following structures;

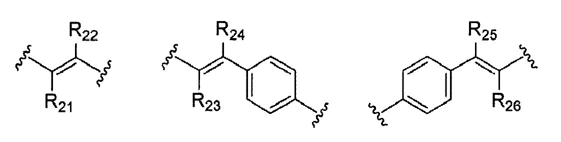

Ar₁ and Ar₂ independently represent a chemical bond, or (C6-C60)arylene, (C3-C60)heteroarylene, 5- or 6-membered heterocycloalkylene containing one or more heteroatom(s) selected from N, O and S, (C3-C60)cycloalkylene, (C2-C60)alkenylene, (C2-C60)alkynylene, (C1-C60)alkylenoxy, (C6-C60)arylenoxy or (C6-C60)arylenethio; the arylene, heteroarylene, heterocycloalkylene, cycloalkylene, alkenylene, alkynylene, alkylenoxy, arylenoxy or arylenethio of Ar₁ and Ar₂ may be further substituted by one or more substituent(s) selected from a group consisting of halogen, (C1-C60)alkyl, halo(C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; 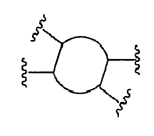 represents 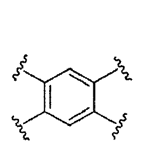 or

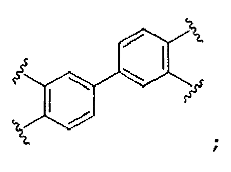

R₁ through R₂₀ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or each of R₁ through R₂₀ may be linked to an adjacent substituent via (C3-C60)alkylene or (C3-C60)alkenylene with or without a fused ring to form an alicyclic ring, or a monocyclic or polycyclic aromatic ring;

R₂₁ through R₂₆ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl;

X₁, X₂, Y₁ and Y₂ independently represent a chemical bond, or -C(R₃₁)(R₃₂)-, -N(R₃₃)-, -S-, -O-, -Si-(R₃₄)(R₃₅)-, -P(R₃₆)-, - C(=O)-, -B(R₃₇)-, -In(R₃₈)-, -Se-, -Ge(R₃₉)(R₄₀)-, -Sn(R₄₁)(R₄₂)-, -Ga (R₄₃)- or -(R₄₄)C=C(R₄₅)-;

R₃₁ through R₄₅ independently represent hydrogen, halogen, (C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or R₃₁ and R₃₂, R₃₄ and R₃₅, R₃₉ and R₄₀, R₄₁ and R₄₂, or R₄₄ and R₄₅ may be linked via (C3-C60)alkylene or (C3-C60)alkenylene with or without a fused ring to form an alicyclic ring, or a monocyclic or polycyclic aromatic ring;
the alkyl, aryl, heteroaryl, heterocycloalkyl, cycloalkyl, trialkylsilyl, dialkylarylsilyl, triarylsilyl, adamantyl, bicycloalkyl, alkenyl, alkynyl, alkylamino or arylamino of R₁ through R₂₆ and R₃₁ through R₄₅ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; and
m and n independently represent an integer from 0 to 4; provided that, if 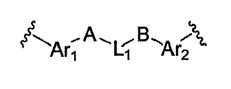 represents 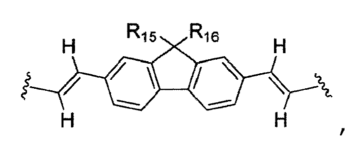 both X₁ and X₂ represent NR₃₃, and both Y₁ and Y₂ represent a chemical bond, then R₃₃ does not represent hydrogen or (C1-C5)alkyl.

### BRIEF DESCRIPTION OF THE DRAWINGS

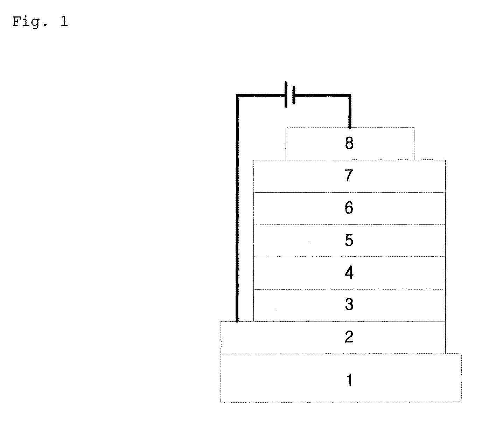

Fig. 1 is a cross-sectional view of an organic light emitting diode (OLED).

### DETAILED DESCRIPTION OF THE INVENTION

Referring now to the Drawings, Fig. 1 illustrates a cross-sectional view of an OLED of the present invention comprising a Glass 1, Transparent electrode 2, Hole injecting layer 3, Hole transport layer 4, Electroluminescent layer 5, Electron transport layer 6, Electron injecting layer 7 and Al cathode 8.

The terms "alkyl", "alkoxy" and other subsituents containing "alkyl" moiety described herein include both linear and branched species.

The term "aryl" described herein means an organic radical derived from aromatic hydrocarbon via elimination of one hydrogen atom. Each ring suitably comprises a monocyclic or fused ring system containing from 4 to 7, preferably from 5 to 6 cyclic atoms. Specific examples include phenyl, naphthyl, biphenyl, anthryl, indenyl, fluorenyl, phenanthryl, triphenylenyl, pyrenyl, perylenyl, chrysenyl, naphthacenyl and fluoranthenyl, but they are not restricted thereto.

The term "heteroaryl" described herein means an aryl group containing from 1 to 4 heteroatom(s) selected from N, O and S for the aromatic cyclic backbone atoms, and carbon atom(s) for remaining aromatic cyclic backbone atoms. The heteroaryl may be 5- or 6-membered monocyclic heteroaryl or a polycyclic heteroaryl which is fused with one or more benzene ring(s), and may be partially saturated. The heteroaryl groups include bivalent aryl group of which the heteroatom in the ring is oxidized or quarternized to form an N-oxide or a quaternary salt. Specific examples include monocyclic heteroaryl groups such as furyl, thiophenyl, pyrrolyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl; and polycyclic heteroaryl groups such as benzofuranyl, benzothiophenyl, isobenzofuranyl, benzimidazolyl, benzothiazolyl, benzisothiazolyl, benzisoxazolyl, benzoxazolyl, isoindolyl, indolyl, indazolyl, benzothiadiazolyl, quinolyl, isoquinolyl, cinnolinyl, quinazolinyl, quinolizinyl, quinoxalinyl, carbazolyl, phenanthridinyl and benzodioxolyl; and corresponding N-oxides (for example, pyridyl N-oxide, quinolyl N-oxide) or quaternary salt thereof, but they are not restricted thereto.

The substituents comprising "(C1-C60)alkyl" moiety described herein may contain 1 to 60 carbon atoms, 1 to 20 carbon atoms, or 1 to 10 carbon atoms. The substituents comprising "(C6-C60)aryl" moiety may contain 6 to 60 carbon atoms, 6 to 20 carbon atoms, or 6 to 12 carbon atoms. The substituents comprising "(C3-C60)heteroaryl" moiety may contain 3 to 60 carbon atoms, 4 to 20 carbon atoms, or 4 to 12 carbon atoms. The substituents comprising "(C3-C60)cycloalkyl" moiety may contain 3 to 60 carbon atoms, 3 to 20 carbon atoms, or 3 to 7 carbon atoms. The substituents comprising "(C2-C60)alkenyl or alkynyl" moiety may contain 2 to 60 carbon atoms, 2 to 20 carbon atoms, or 2 to 10 carbon atoms.

The organic electroluminescent compounds according to the present invention may be selected from the compounds represented by one of Chemical Formulas (2) to (4): 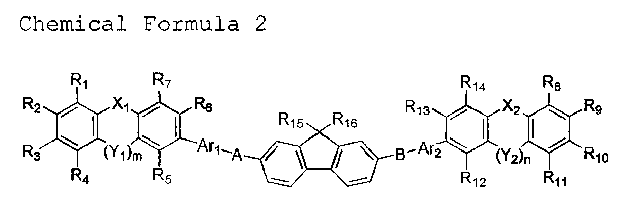 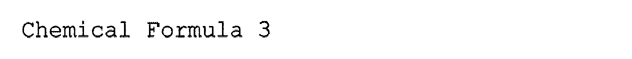 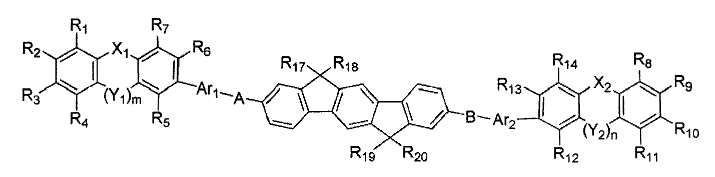 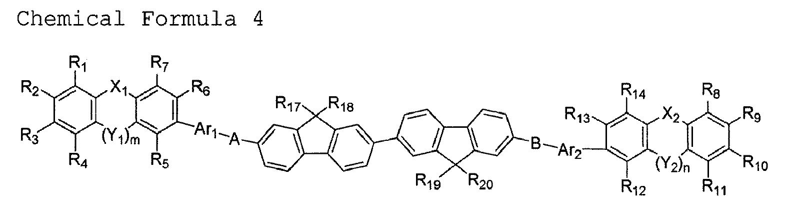 wherein, A, B, Ar₁, Ar₂, R₁ through R₂₀, X₁, X₂, Y₁, Y₂, m and n are defined as in Chemical Formula (1).

In Chemical Formula (1), L₁ is selected from the following structures, but not restricted thereto: 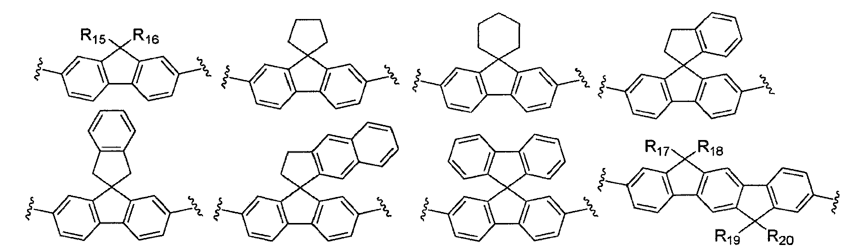 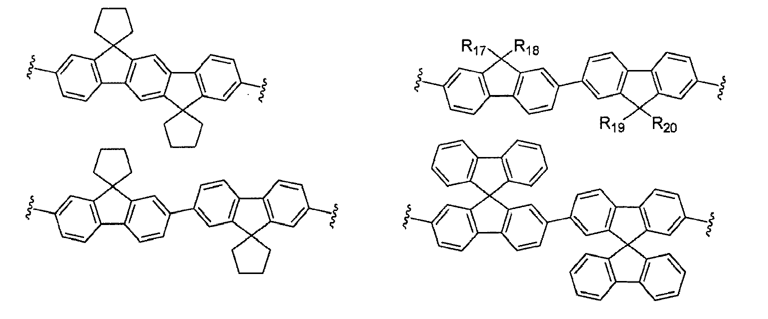 wherein, R₁₅ through R₂₀ independently represent hydrogen, methyl, ethyl, n-propyl, i-propyl, n-butyl, i-butyl, t-butyl, n-pentyl, i-pentyl, n-hexyl, n-heptyl, n-octyl, 2-ethylhexyl, n-nonyl, decyl, dodecyl, hexadecyl, benzyl, trifluoromethyl, perfluoroethyl, trifluoroethyl, perfluoropropyl, perfluorobutyl, methoxy, ethoxy, n-propoxy, i-propoxy, n-butoxy, i-butoxy, t-butoxy, n-pentoxy, i-pentoxy, n-hexyloxy, n-heptoxy, trimethylsilyl, triethylsilyl, tripropylsilyl, tri(t-butyl)silyl, t-butyldimethylsilyl, dimethylphenylsilyl, triphenylsilyl, cyclopropyl, cyclobutyl, cyclopentyl, cyclohexyl, cycloheptyl, cyclooctyl, cyclononyl, cyclodecyl, phenyl, naphthyl, biphenyl, 9,9-dimethylfluorenyl, 9,9-diphenylfluorenyl, phenanthryl, anthryl, fluoranthenyl, triphenylenyl, pyrenyl, chrysenyl, naphthacenyl, perylenyl, morpholino, thiomorpholino, adamantyl, bicyclo[2.2.1]heptyl, bicyclo[2.2.2]octyl, bicyclo[3.2.1]octyl, bicyclo[5.2.0]nonyl, bicyclo[4.2.2]decyl, bicyclo[2.2.2]octyl, 4-pentylbicyclo[2.2.2]octyl, ethenyl, phenylethenyl, ethynyl, phenylethynyl, cyano, dimethylamino, diphenylamino, monomethylamino, monophenylamino, phenyloxy, phenylthio, methoxycarbonyl, ethoxycarbonyl, t-butoxycarbonyl, carboxyl, nitro, chloro, fluoro or hydroxyl.

In the formulas, 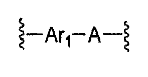 and 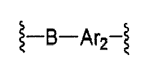 independently represent a chemical bond, or a structure selected, without restriction, from the followings: 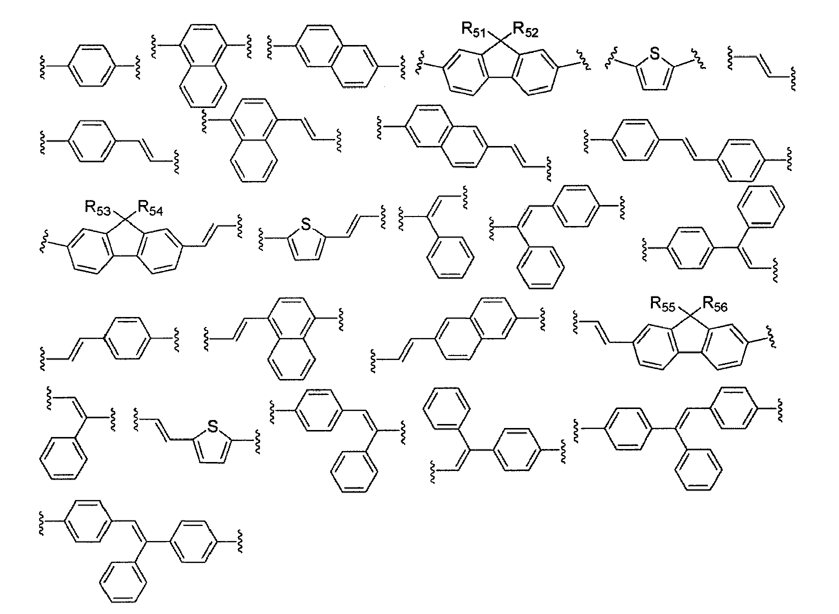 wherein, R₅₁ through R₅₆ independently represent methyl, ethyl, n-propyl, i-propyl, n-butyl, i-butyl, t-butyl, n-pentyl, i-pentyl, n-hexyl, n-heptyl, n-octyl, 2-ethylhexyl, n-nonyl, decyl, dodecyl, hexadecyl, benzyl, phenyl, naphthyl or anthryl.

In the formulas, 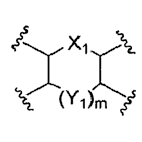 and 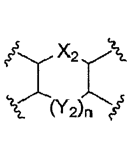 are selected from the following structures, but not restricted thereto: 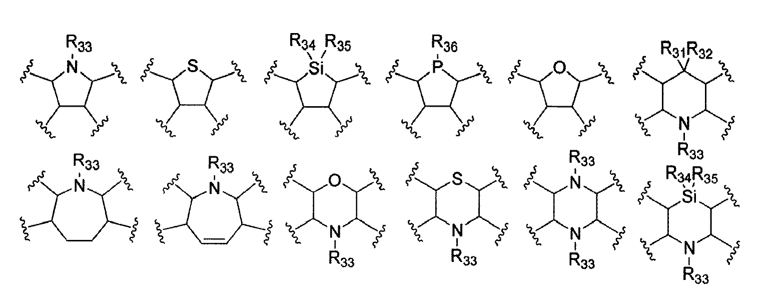 wherein, R₃₁ through R₃₆ independently represent (C1-C60)alkyl, (C6-C60)aryl or (C3-C60)heteroaryl, or R₃₁ and R₃₂ or R₃₄ and R₃₅ may be linked via (C3-C60)alkylene or (C3-C60)alkenylene with or without a fused ring to form an alicyclic ring, or a monocyclic or polycyclic aromatic ring; and the alkyl, aryl or heteroaryl of R₃₁ through R₃₆ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; provided that if both 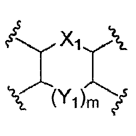 and 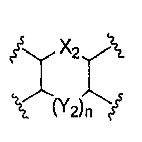 represent 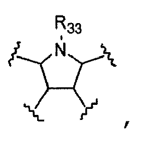 R₃₃ does not represent (C1-C5)alkyl.

The organic electroluminescent compounds according to the present invention can be more specifically exemplified by the following compounds, but they are not restricted thereto.

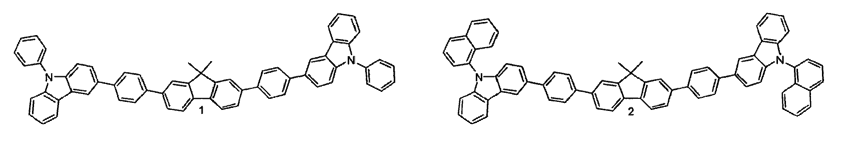

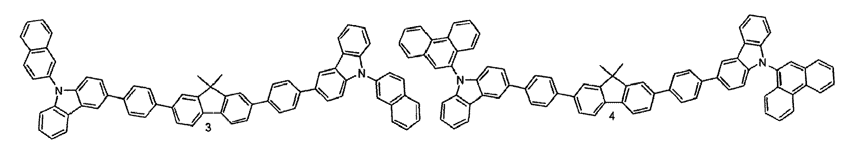

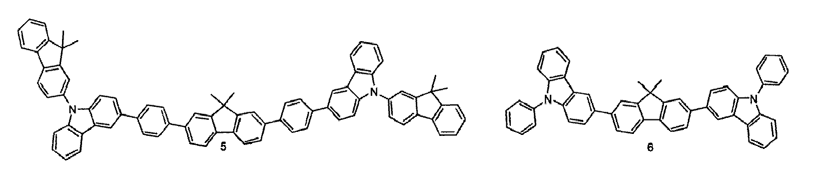

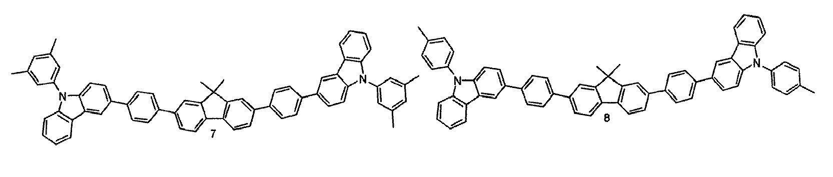

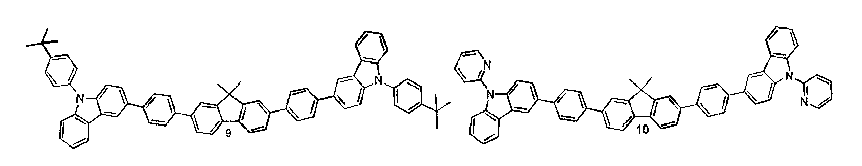

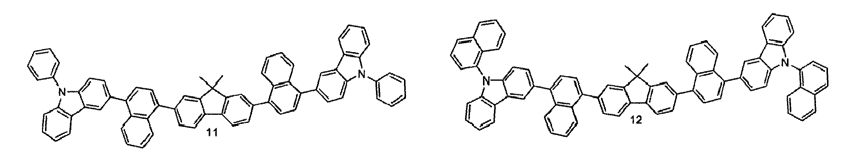

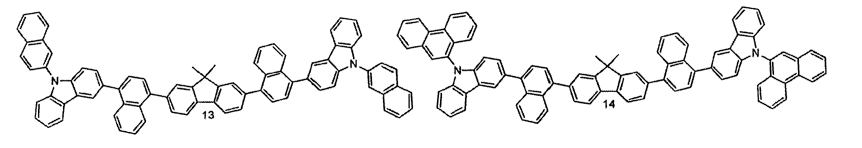

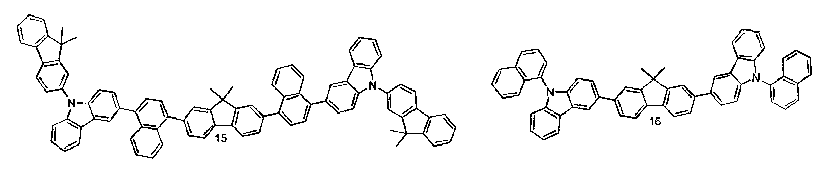

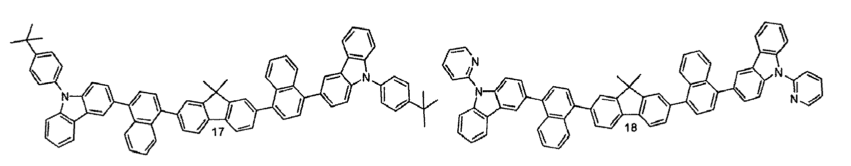

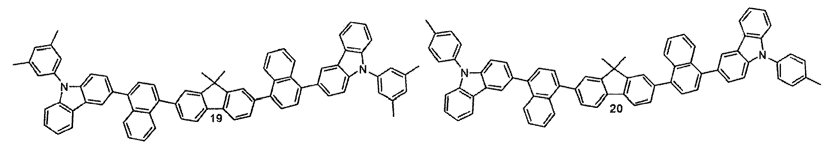

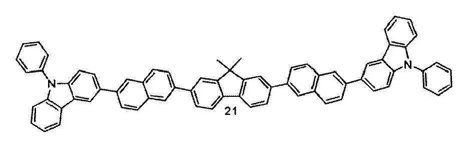

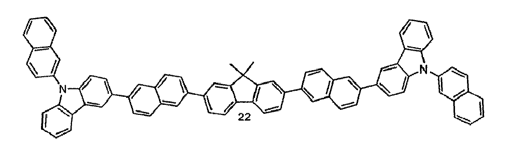

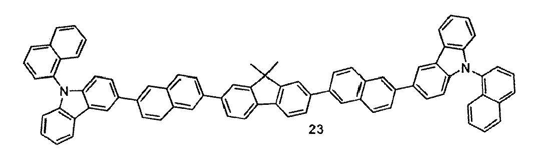

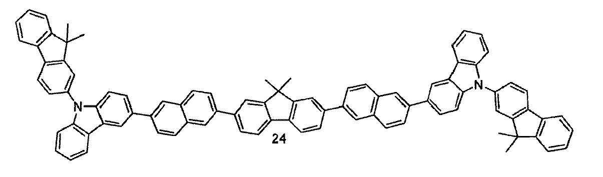

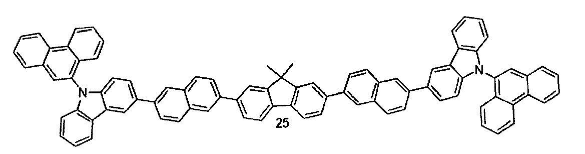

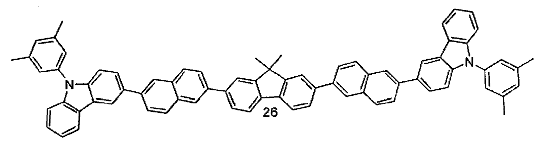

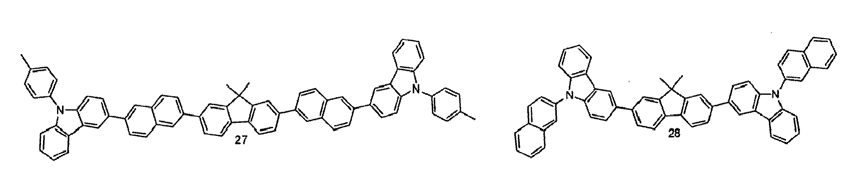

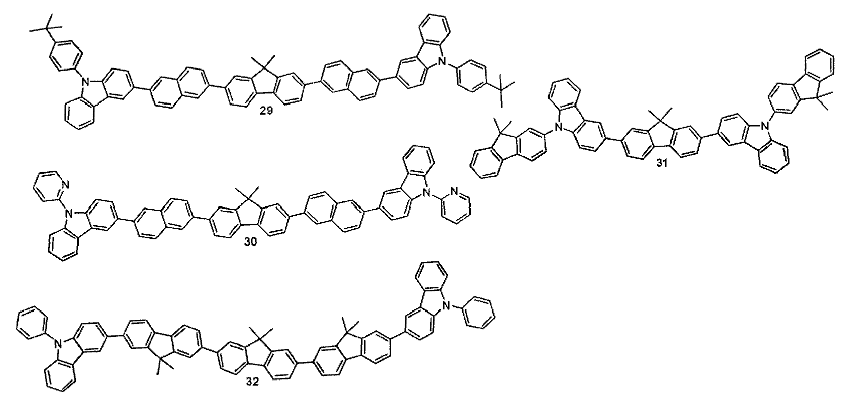

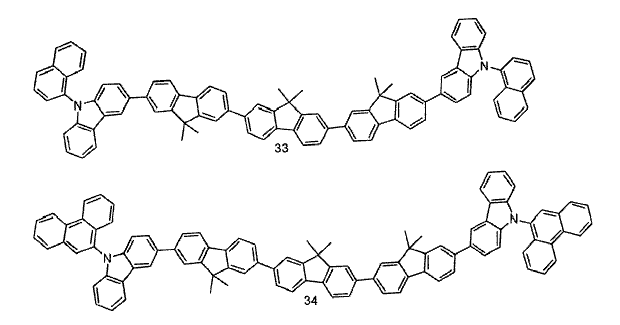

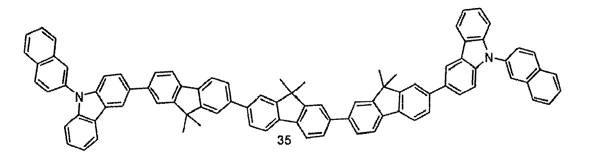

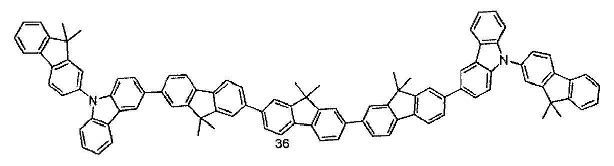

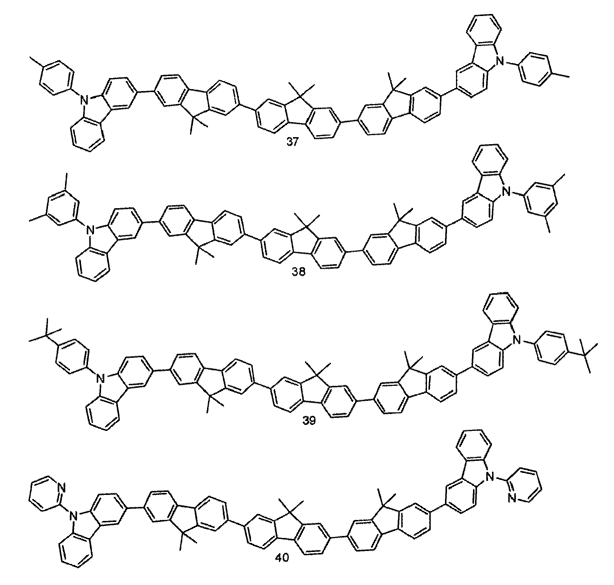

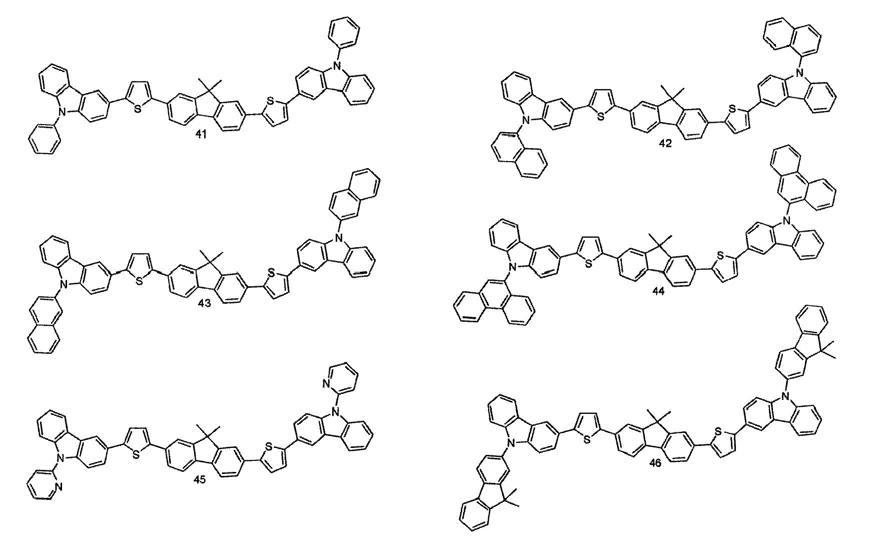

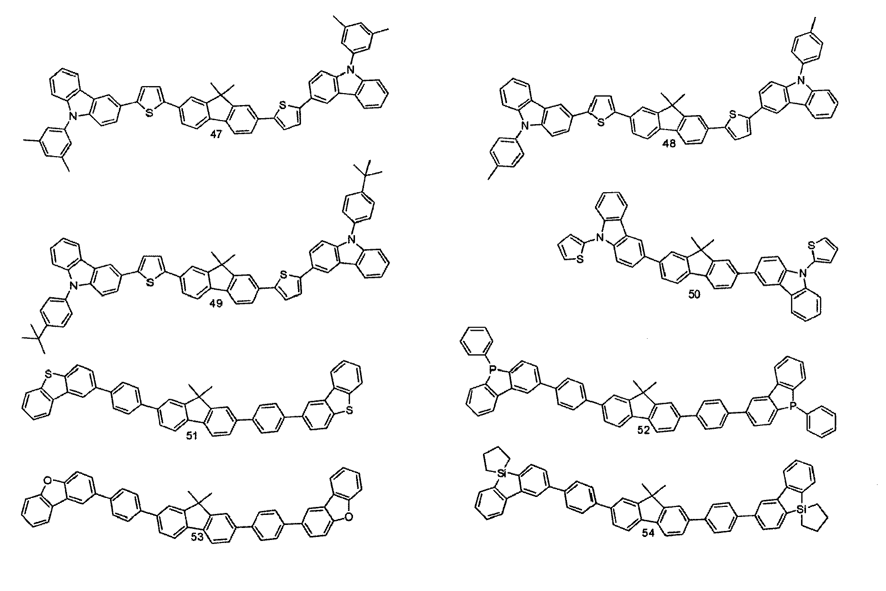

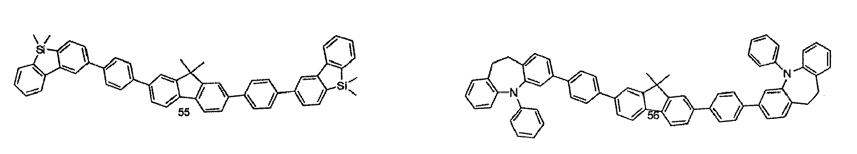

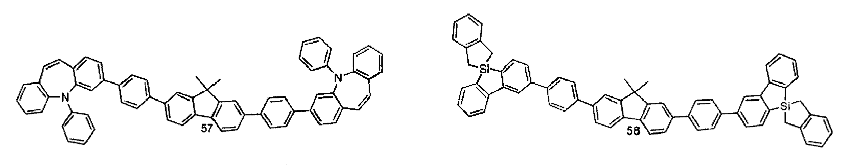

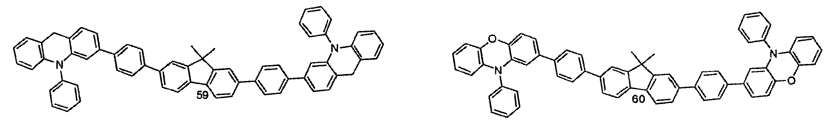

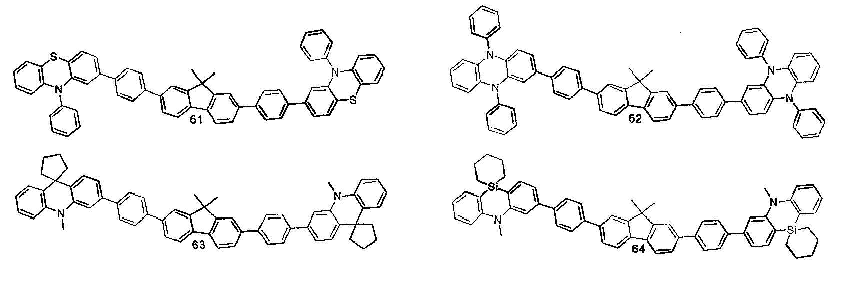

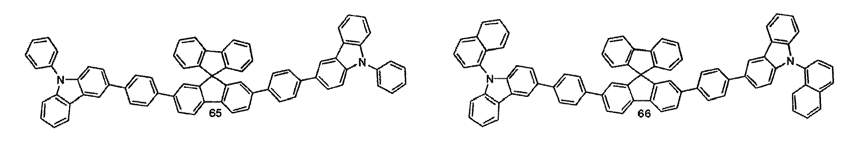

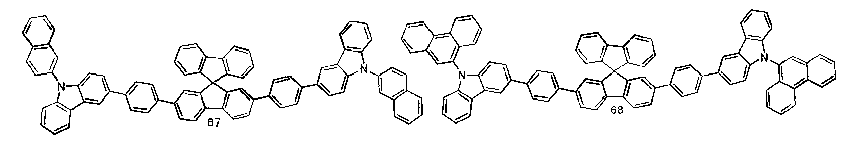

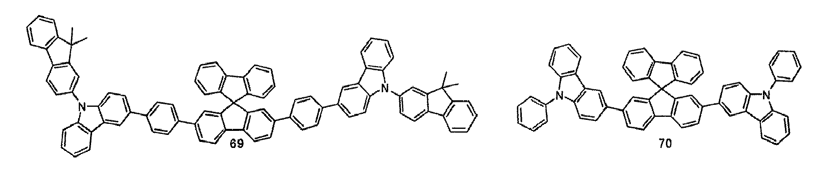

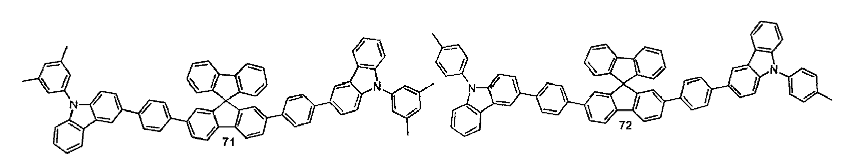

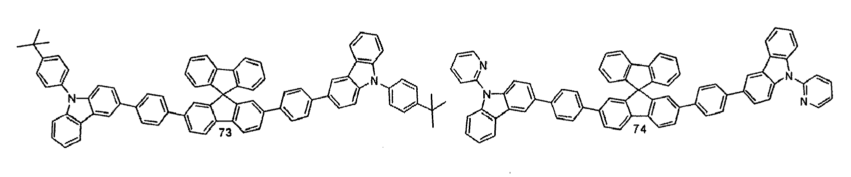

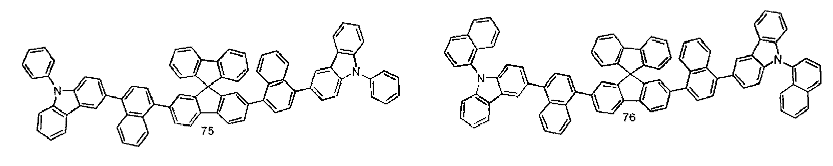

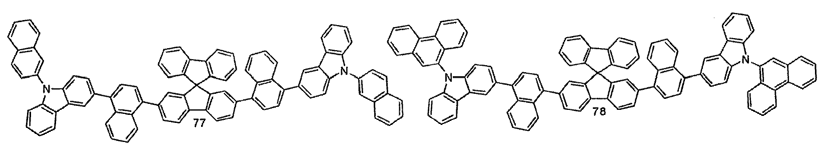

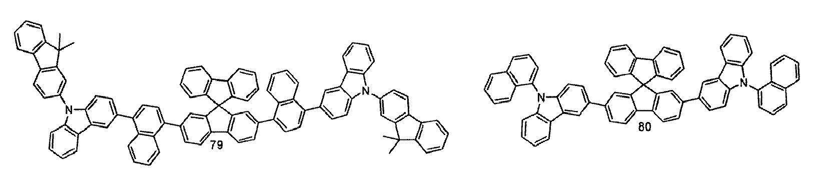

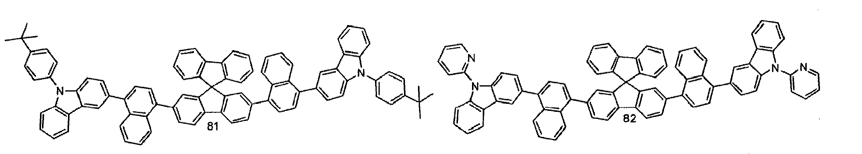

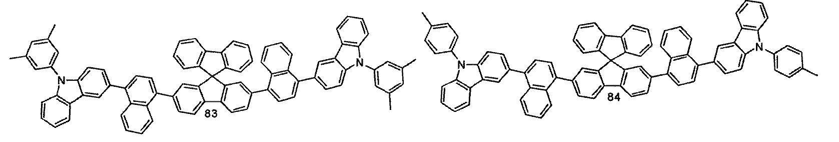

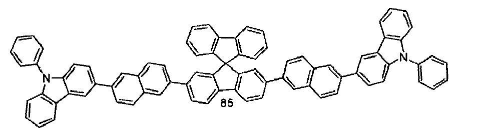

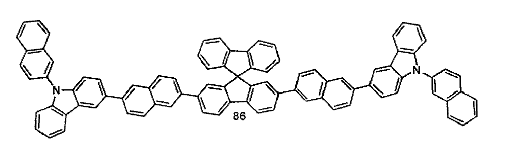

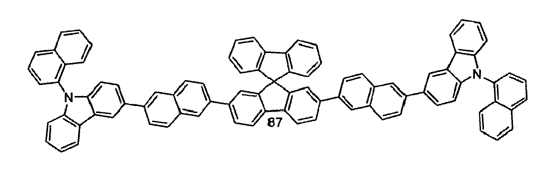

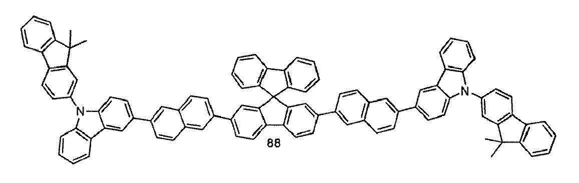

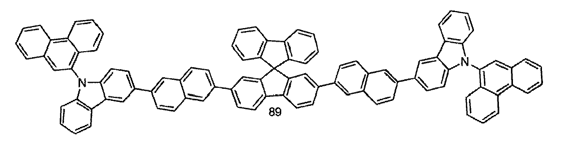

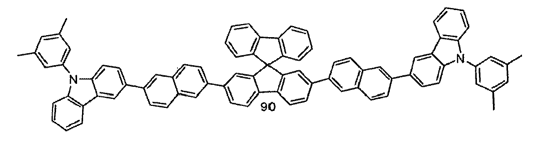

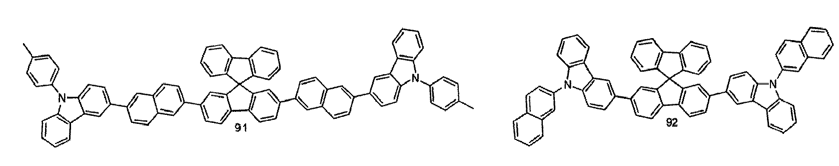

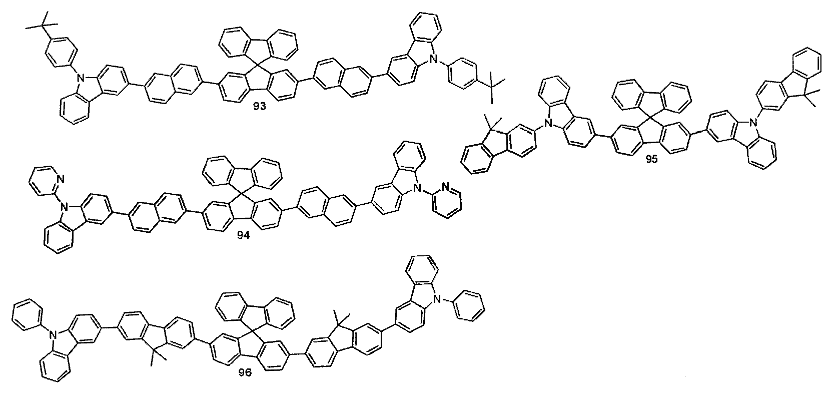

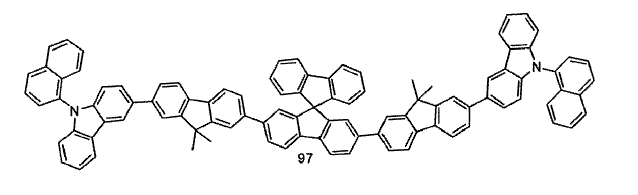

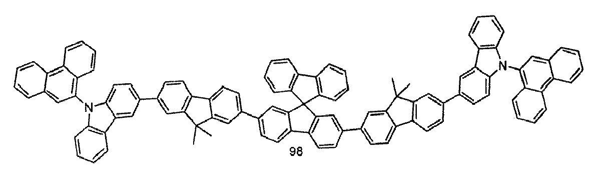

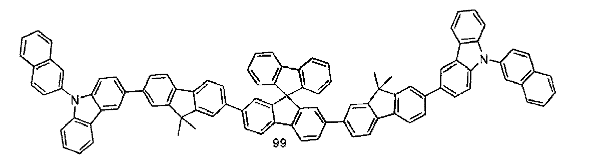

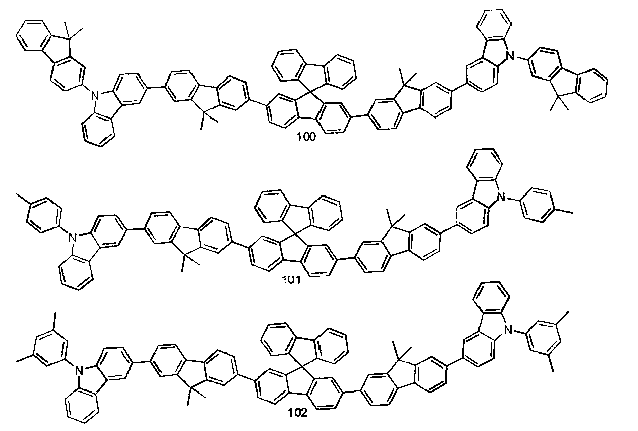

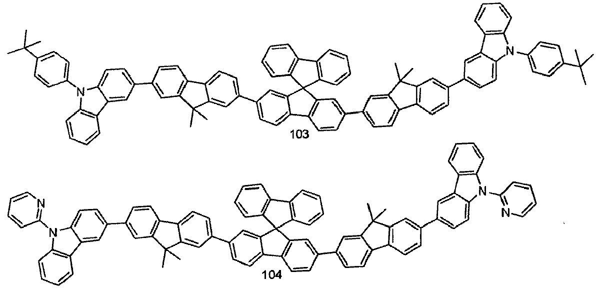

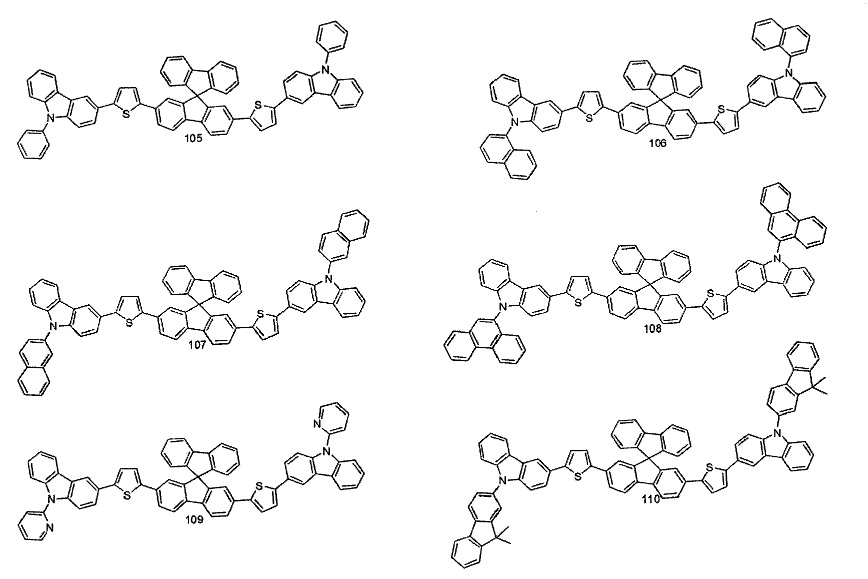

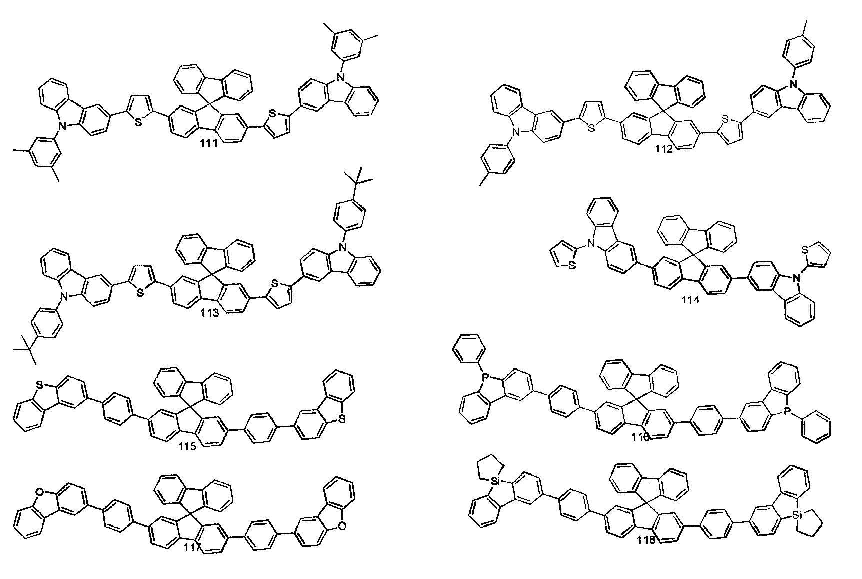

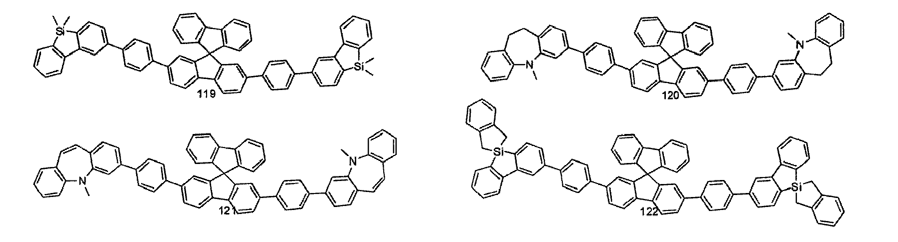

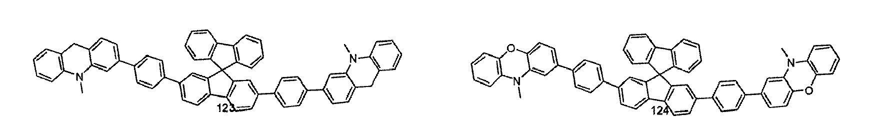

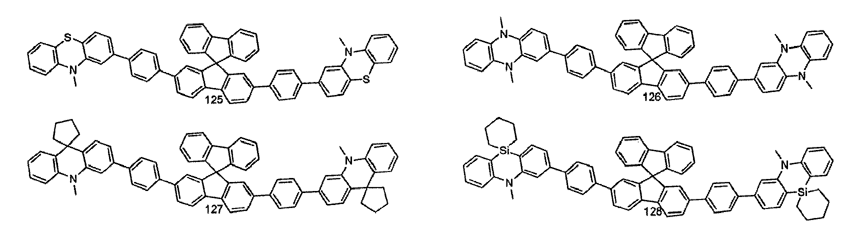

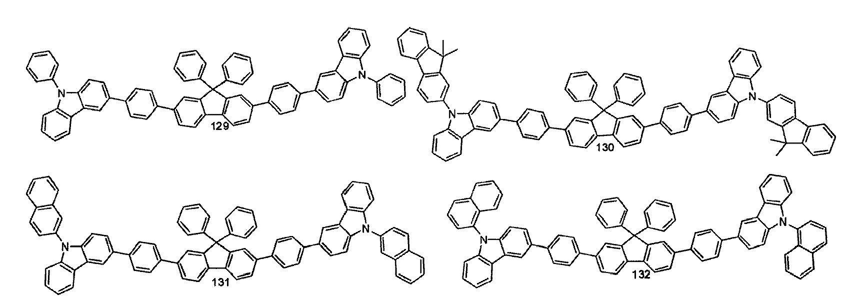

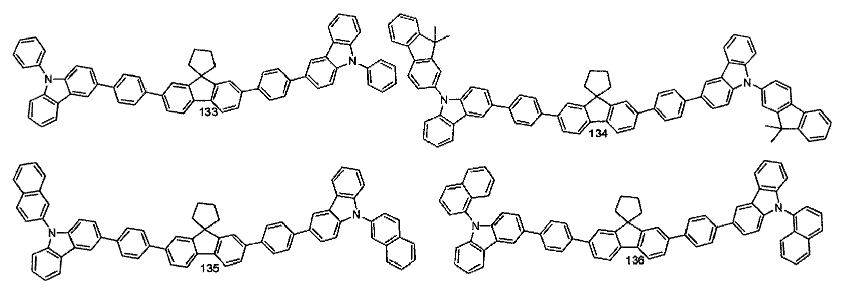

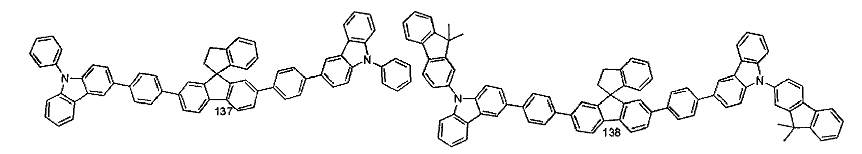

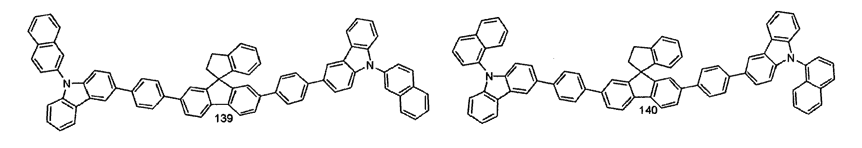

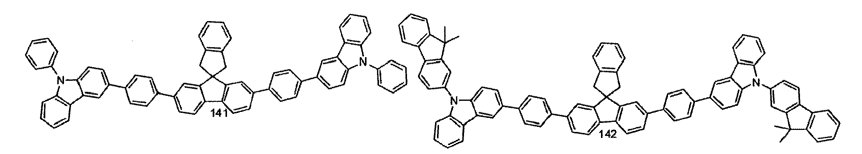

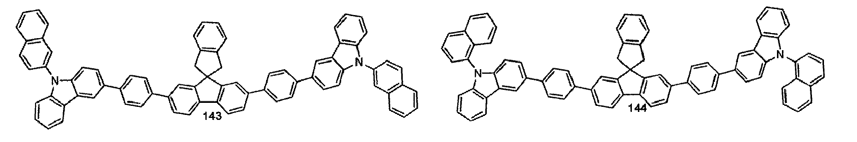

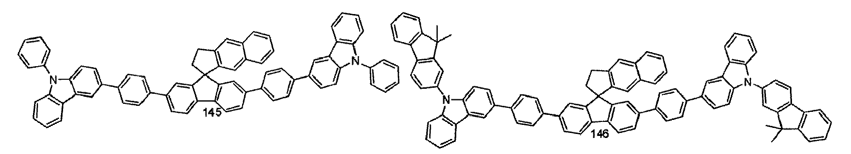

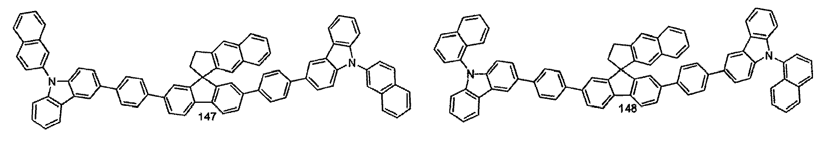

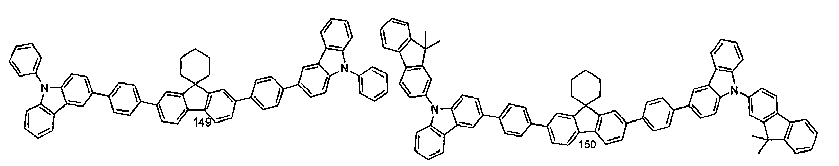

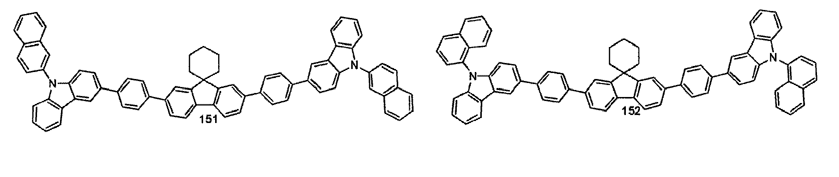

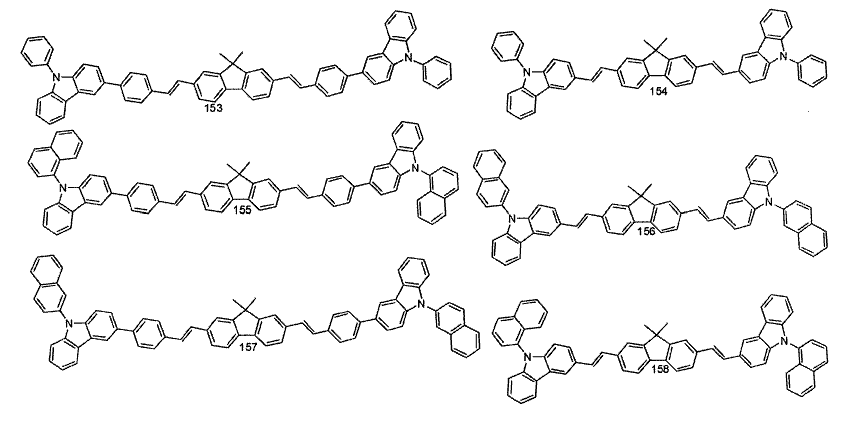

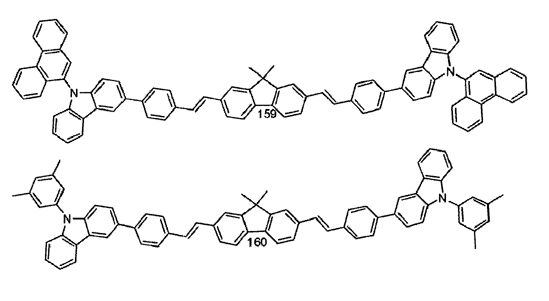

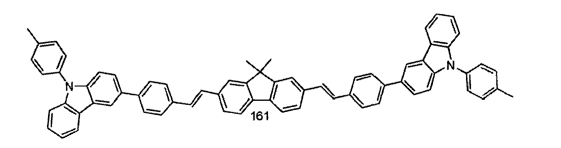

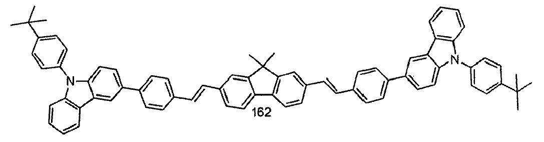

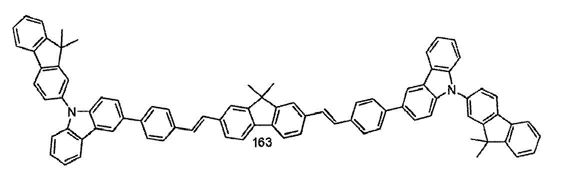

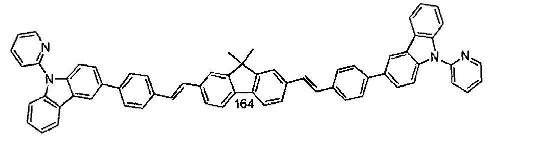

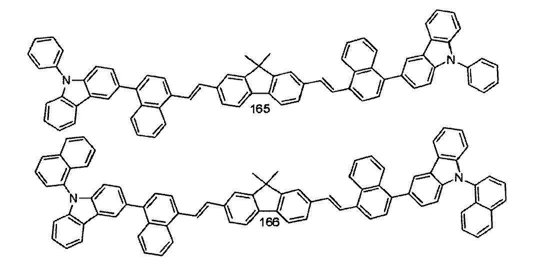

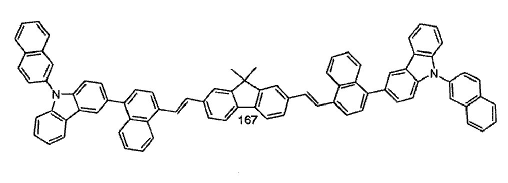

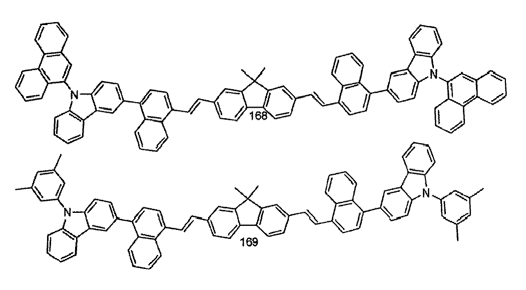

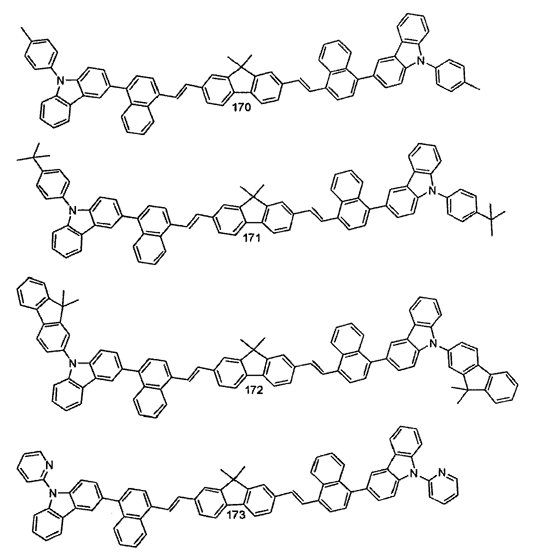

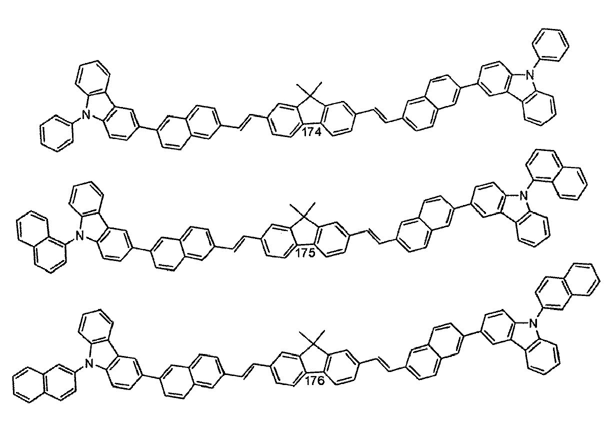

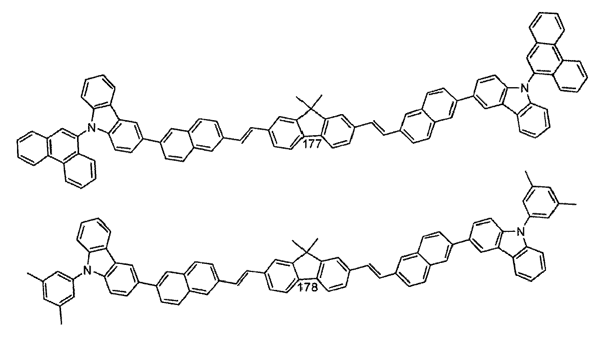

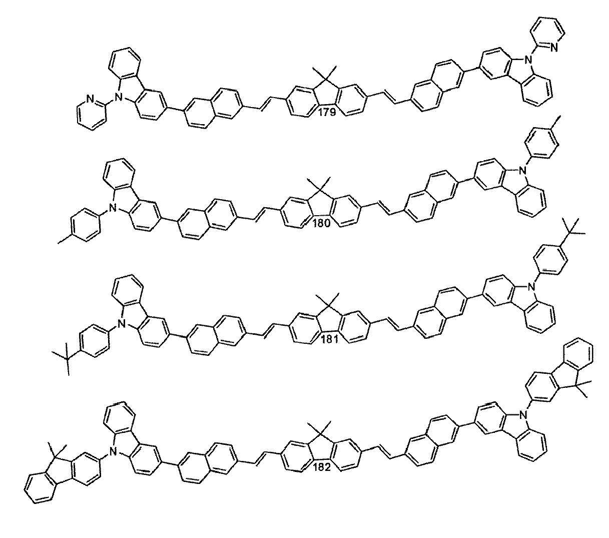

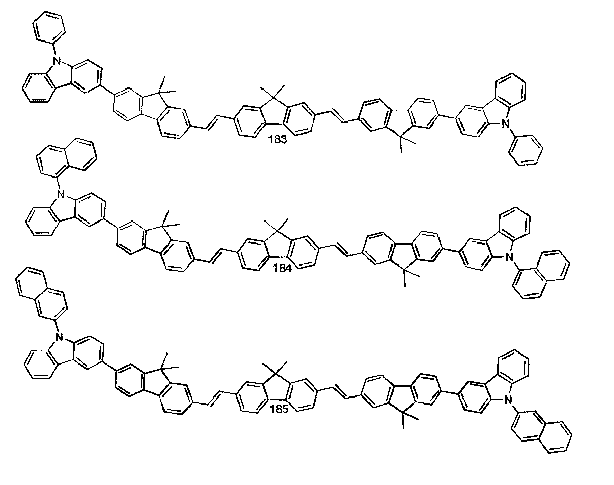

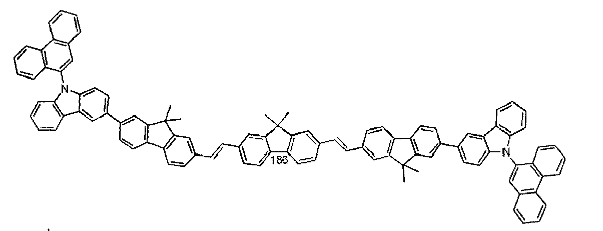

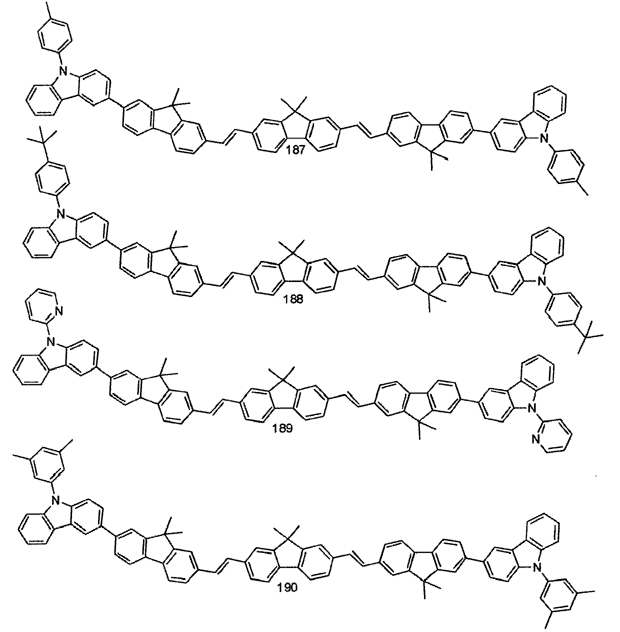

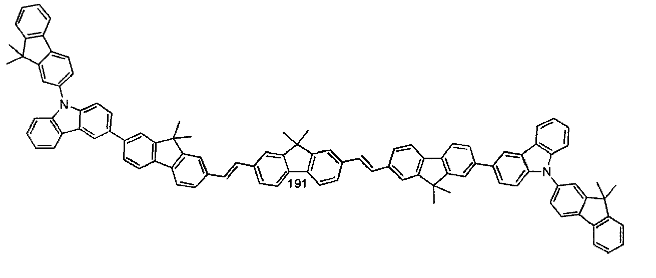

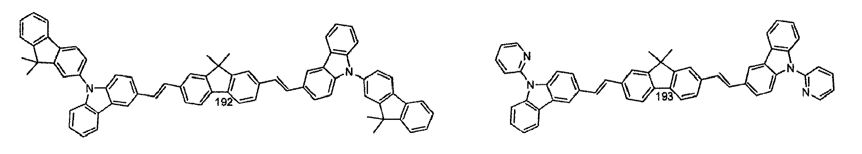

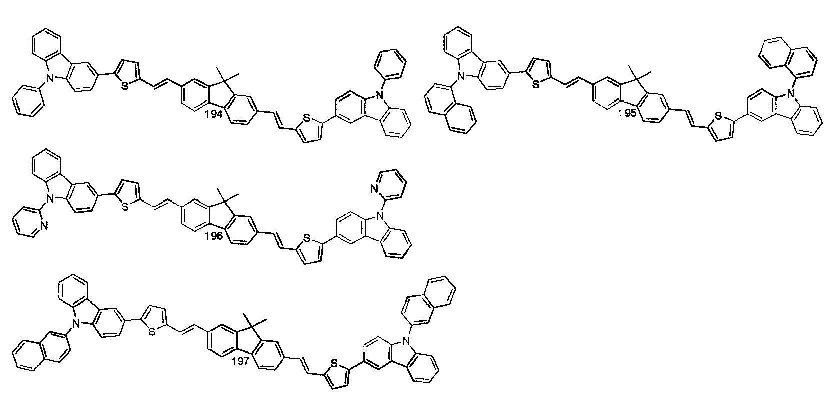

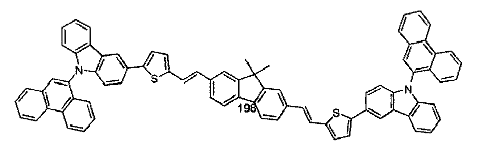

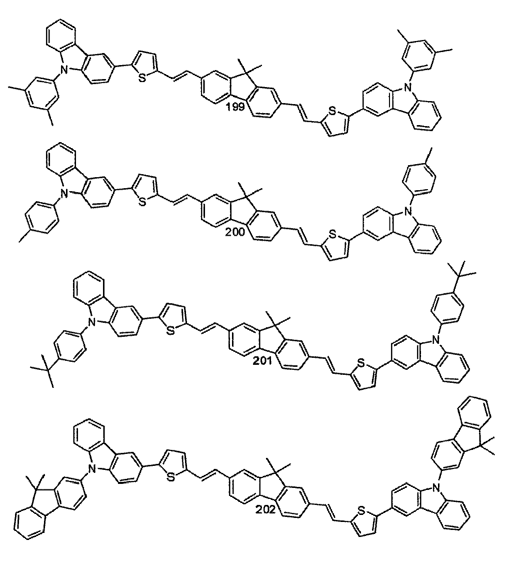

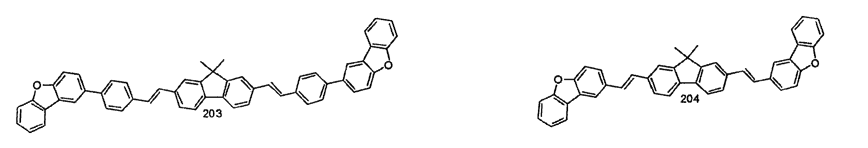

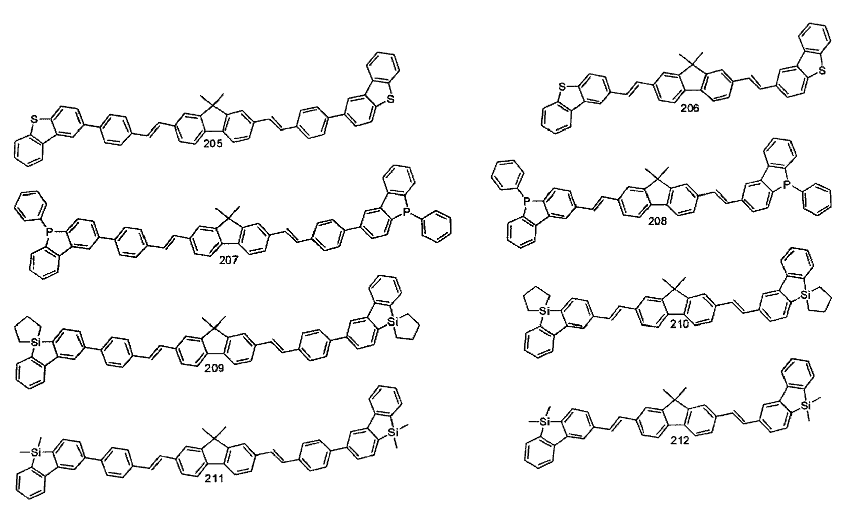

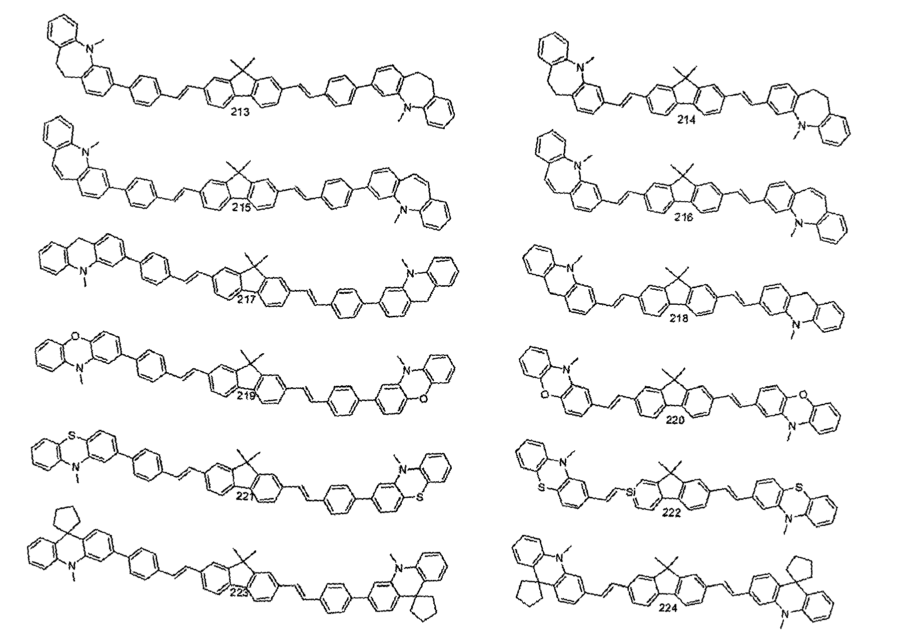

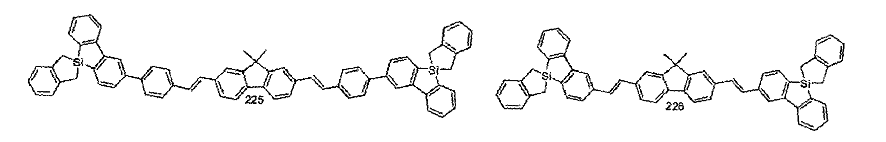

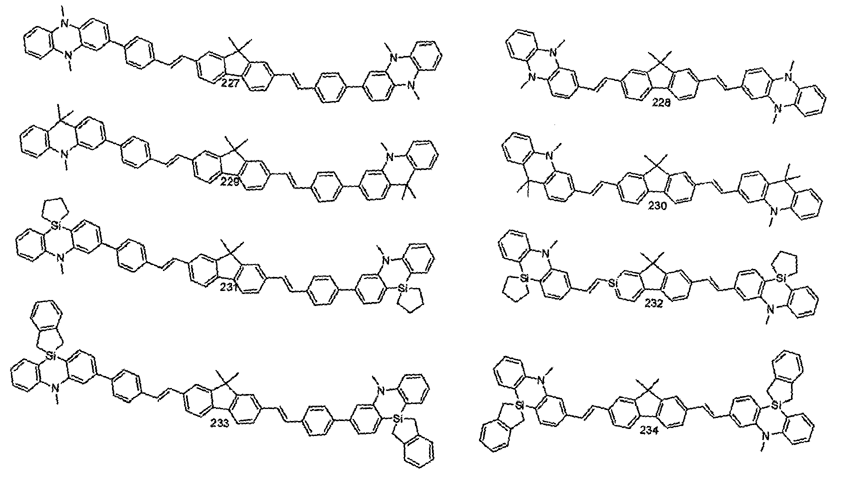

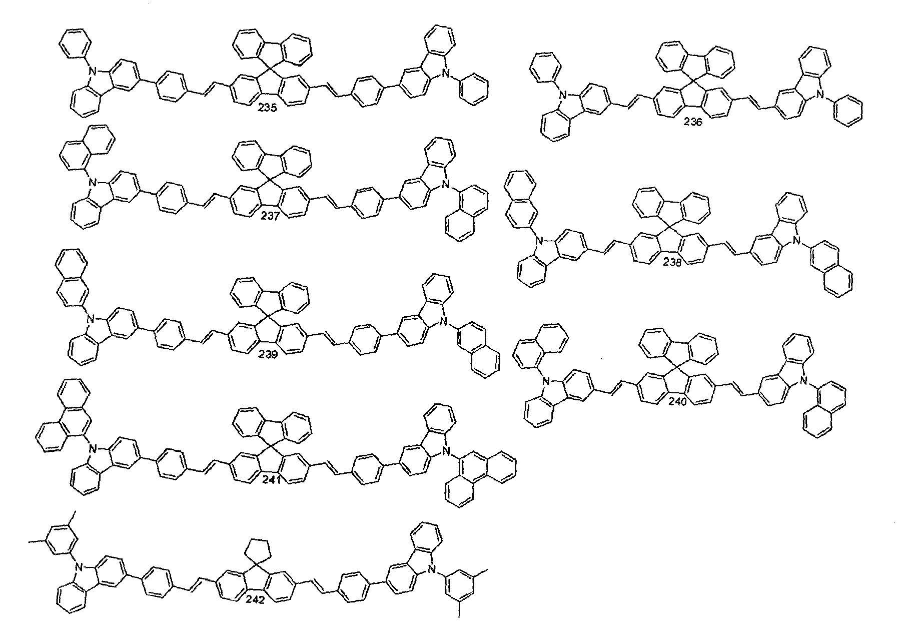

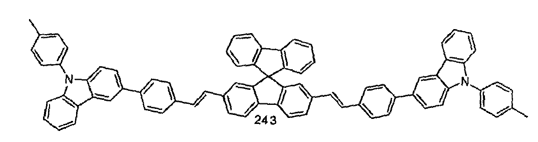

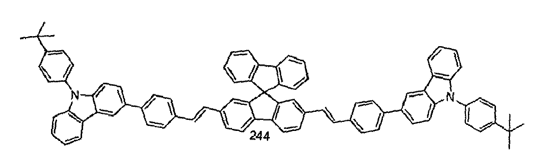

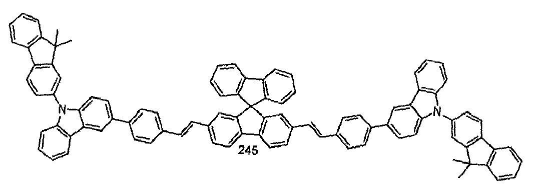

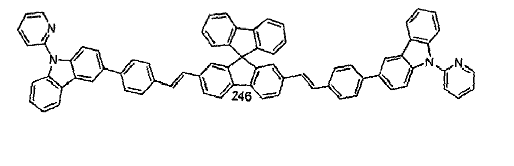

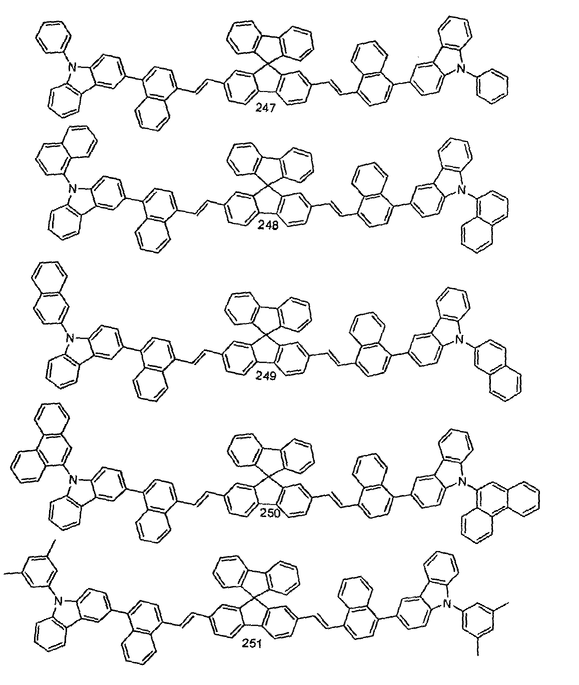

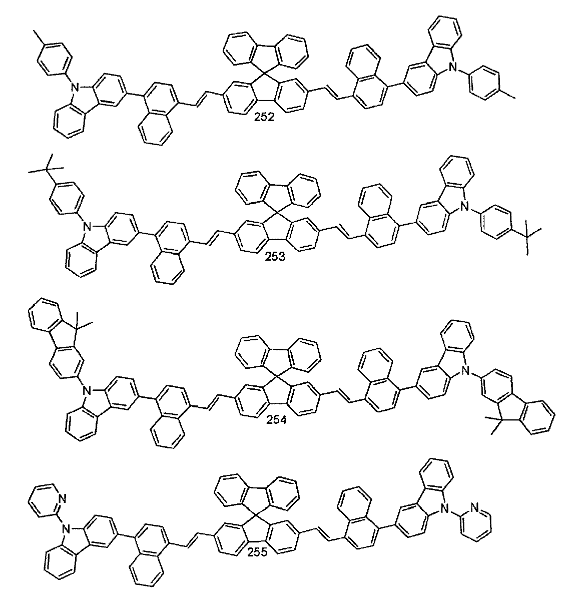

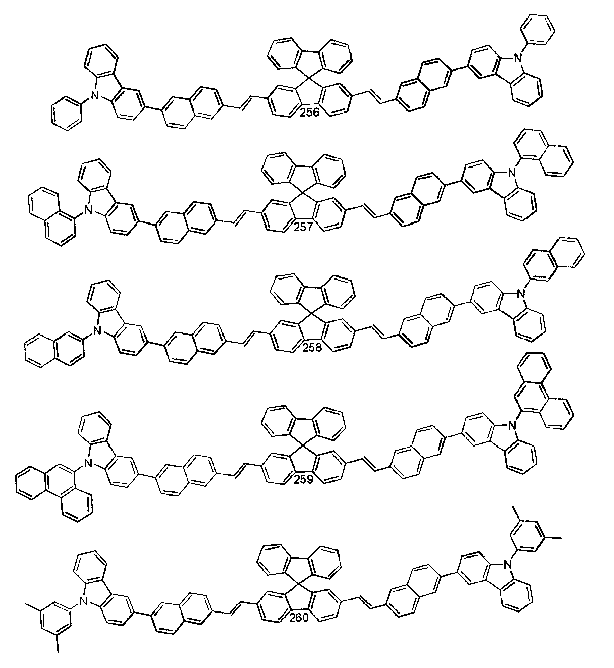

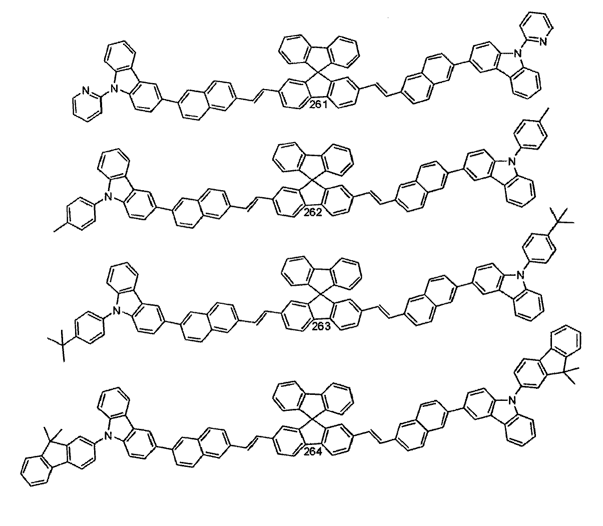

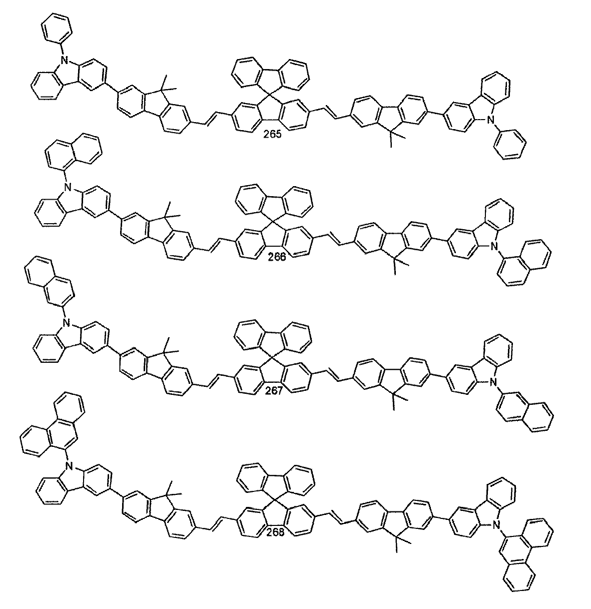

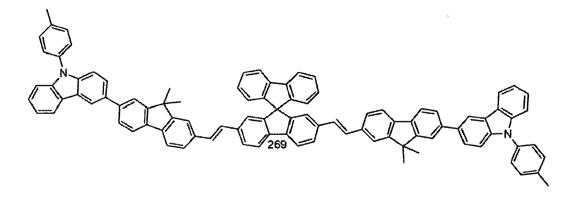

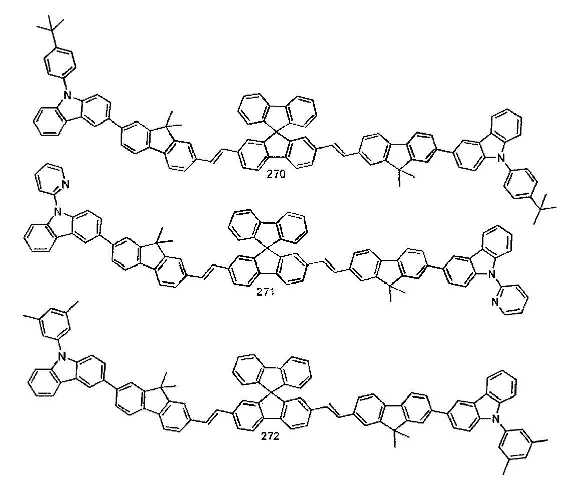

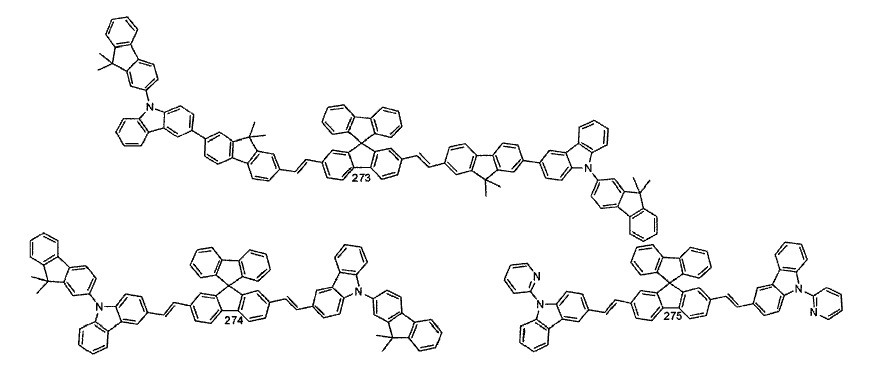

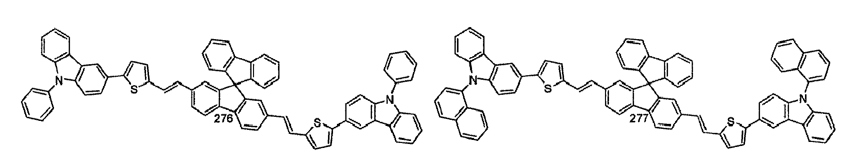

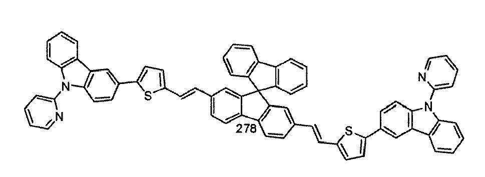

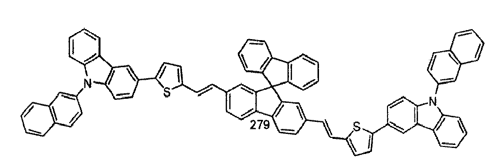

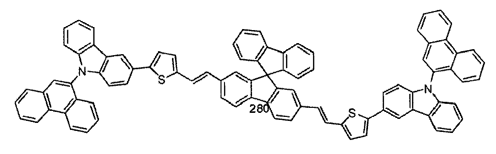

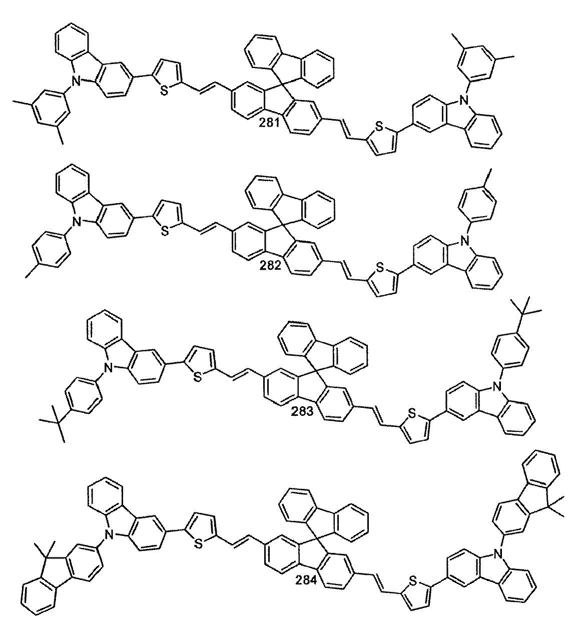

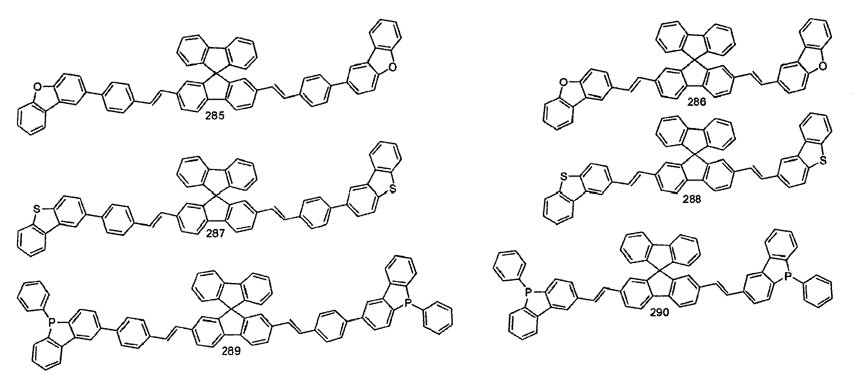

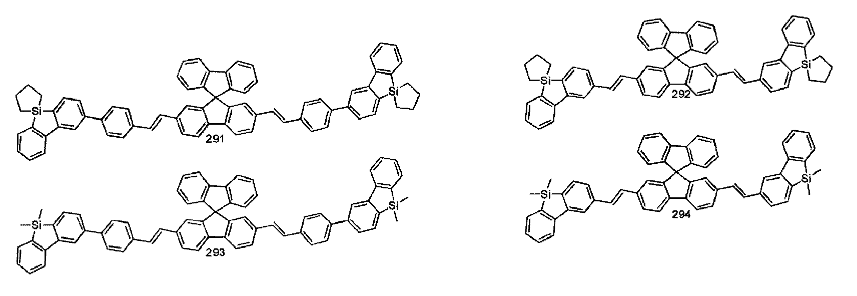

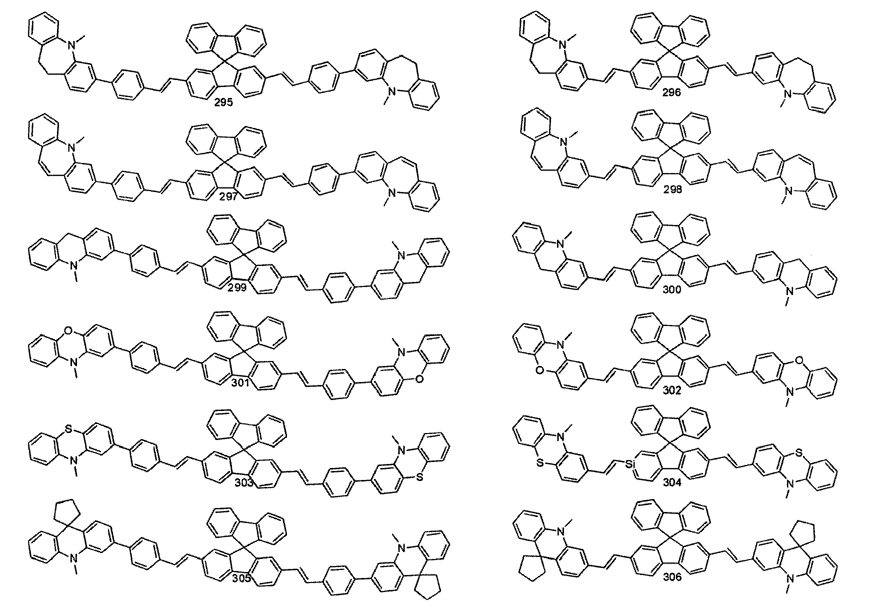

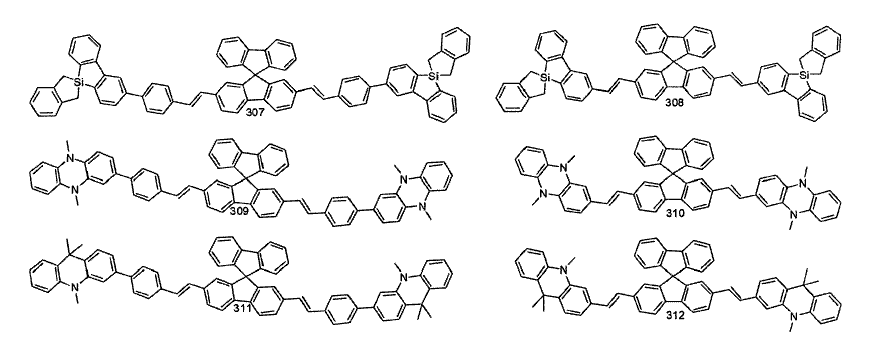

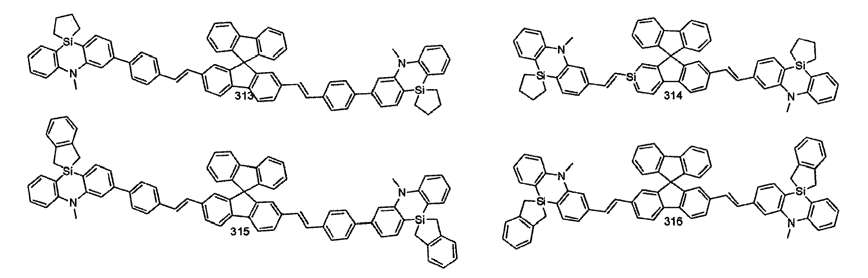

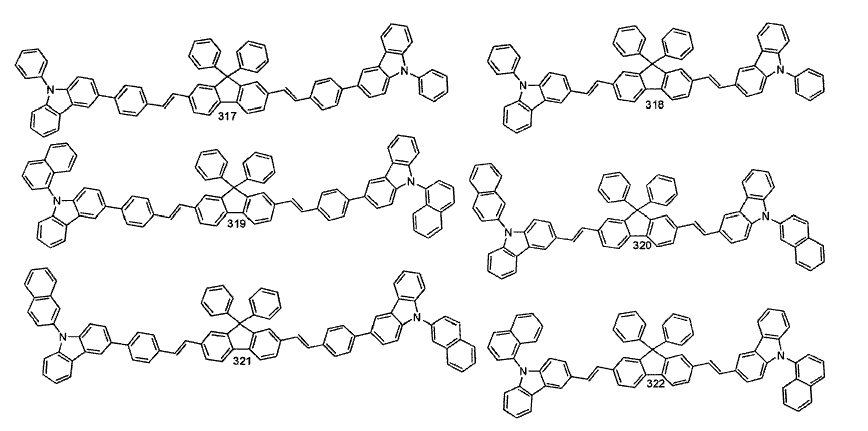

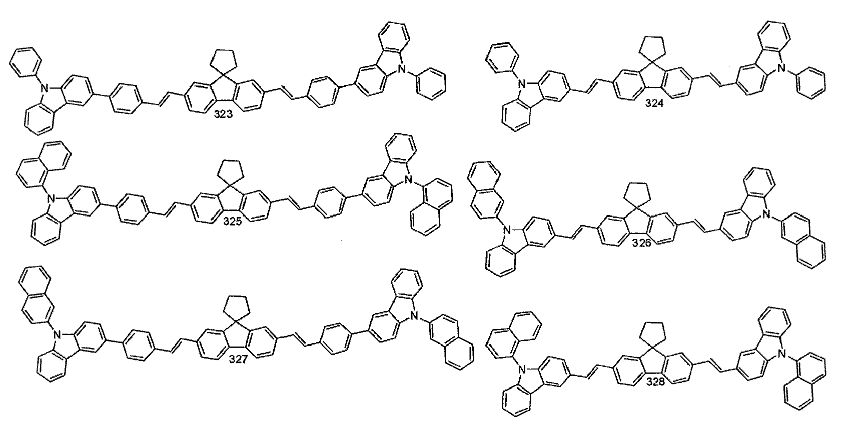

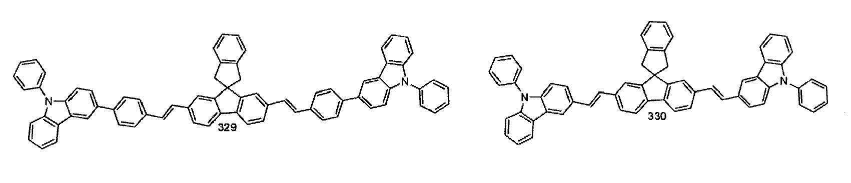

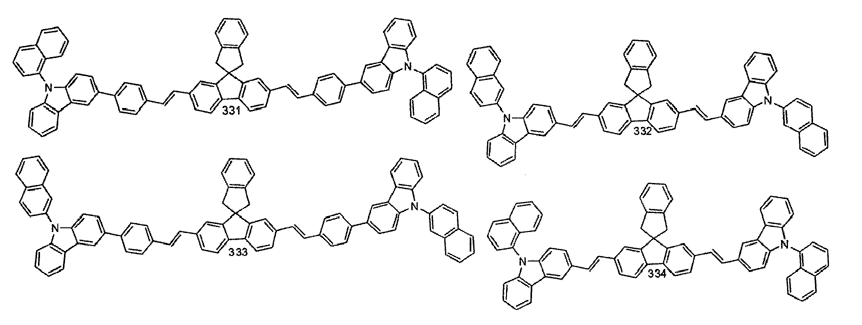

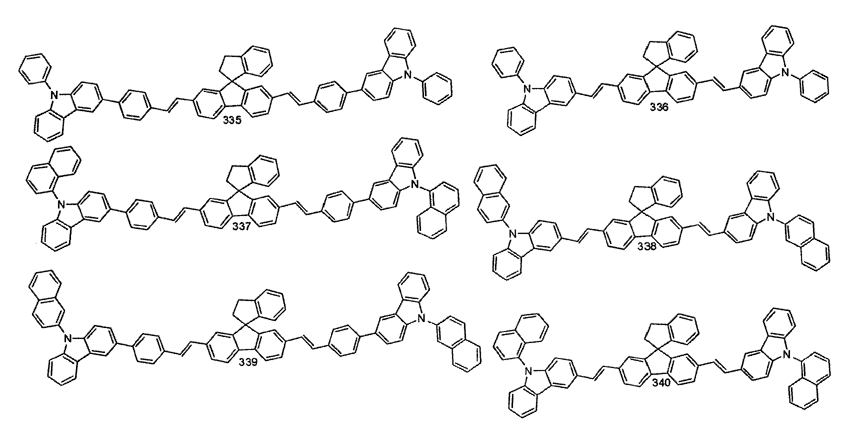

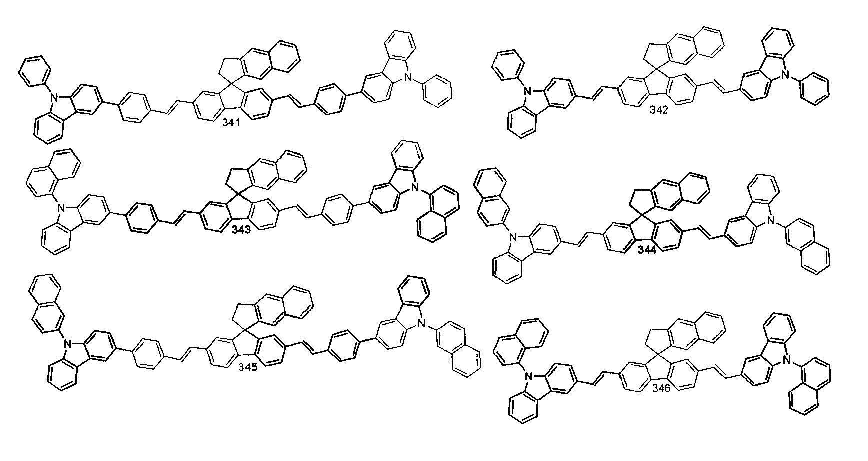

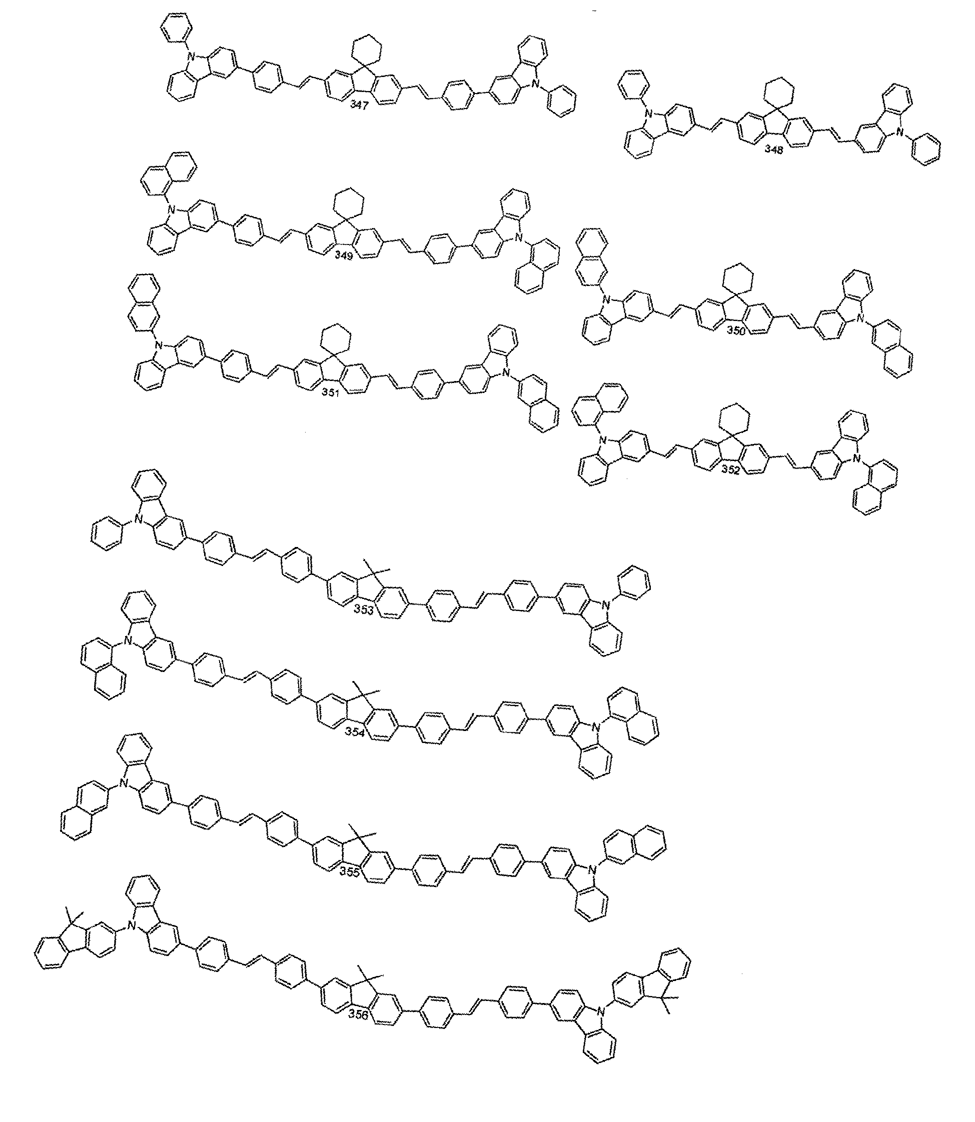

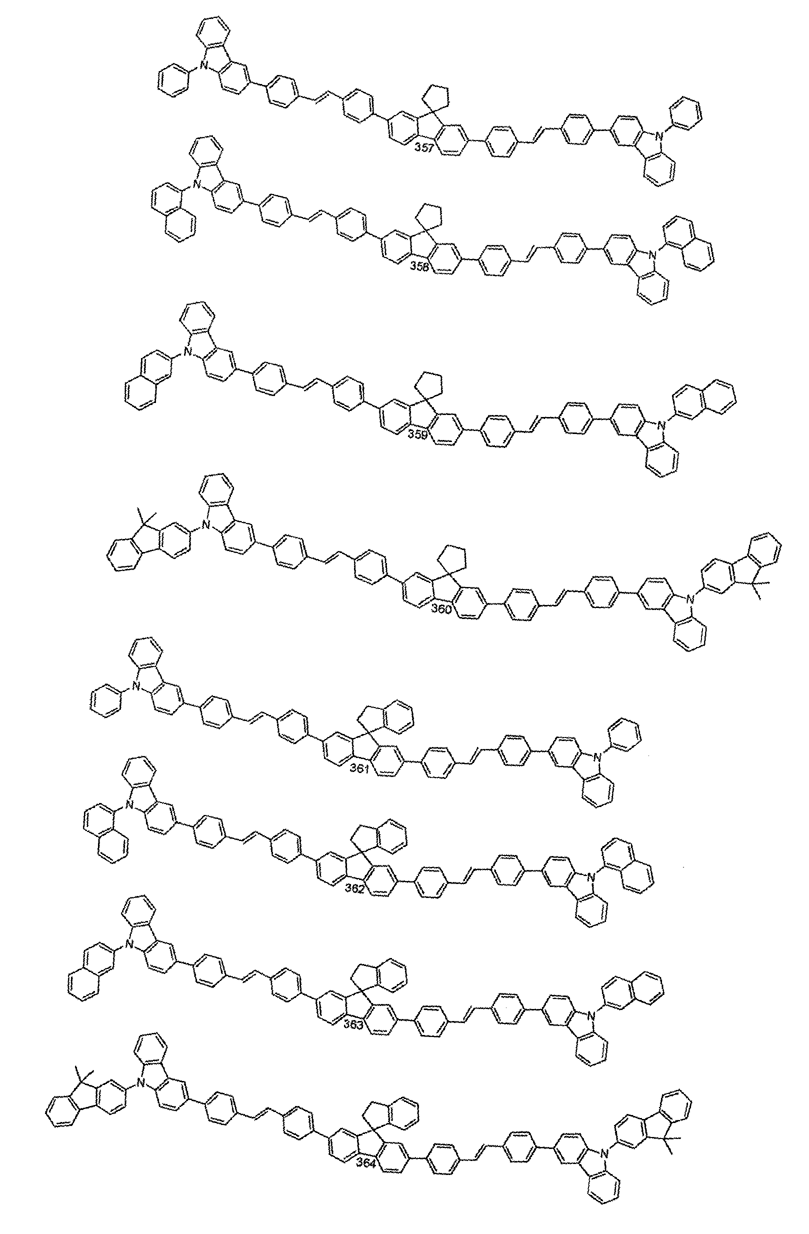

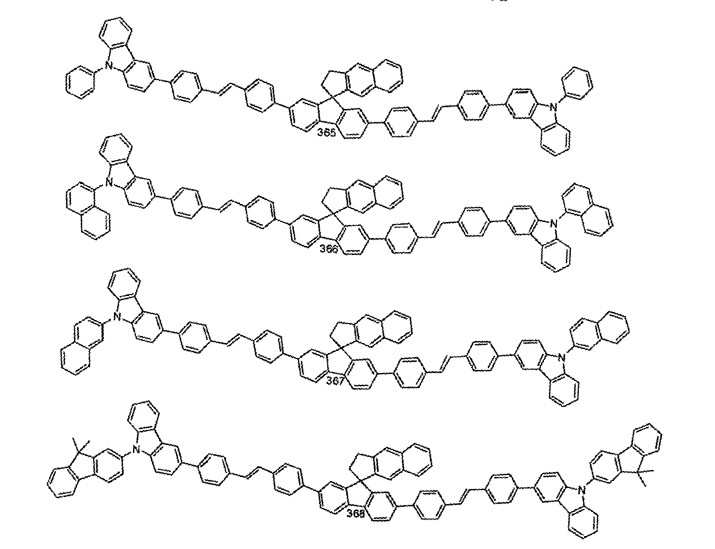

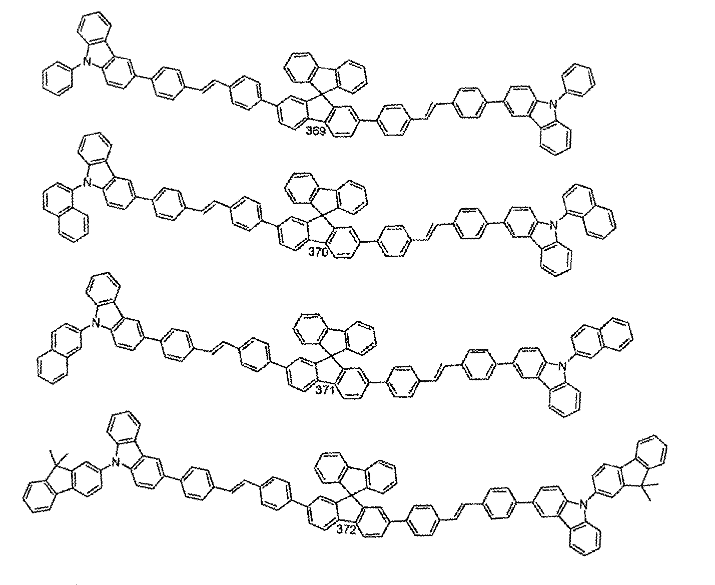

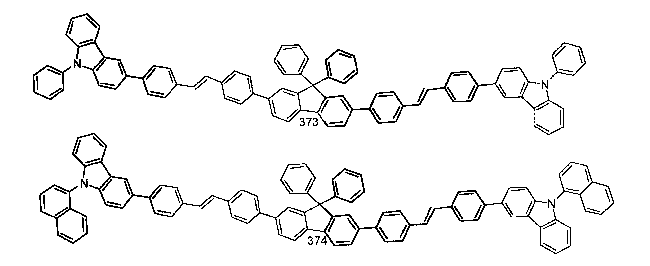

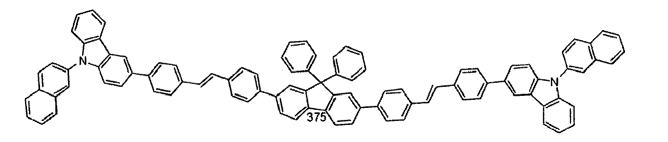

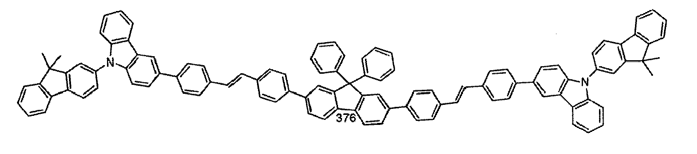

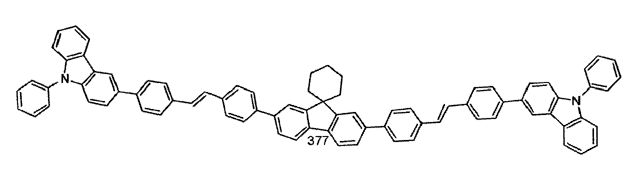

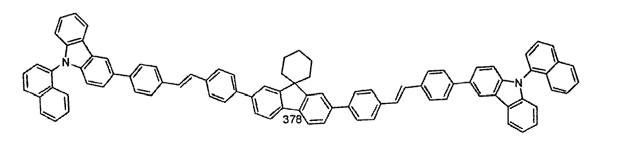

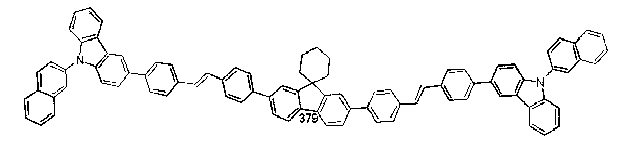

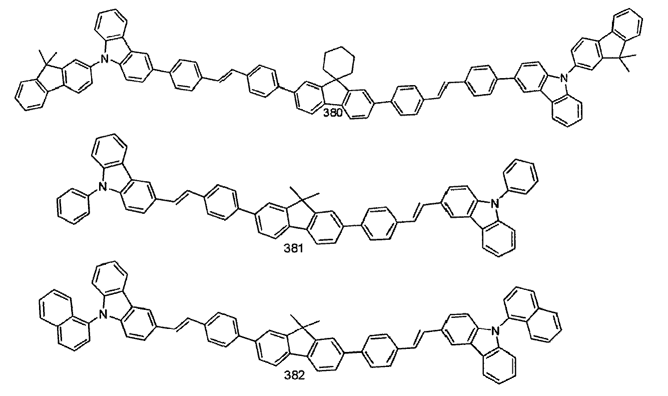

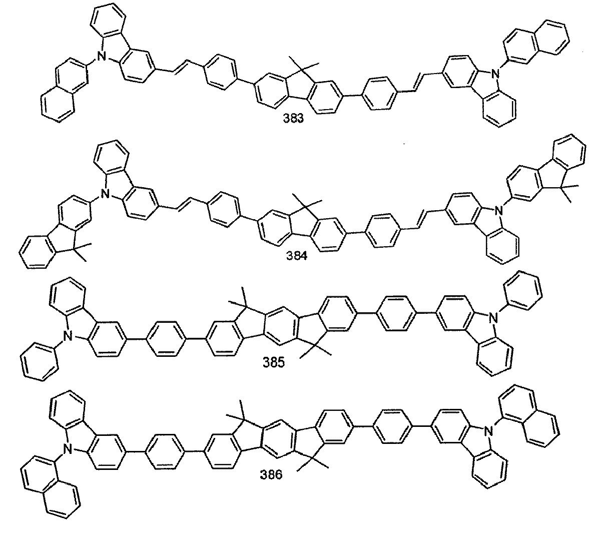

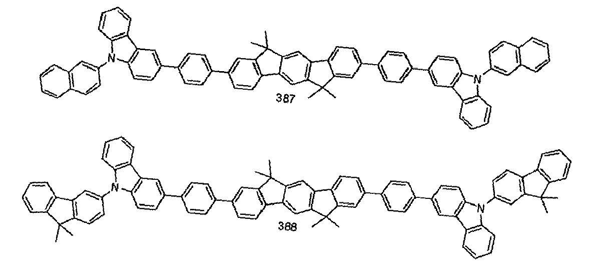

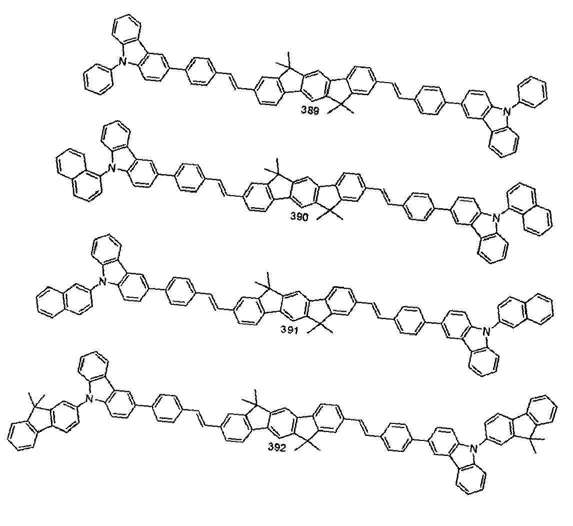

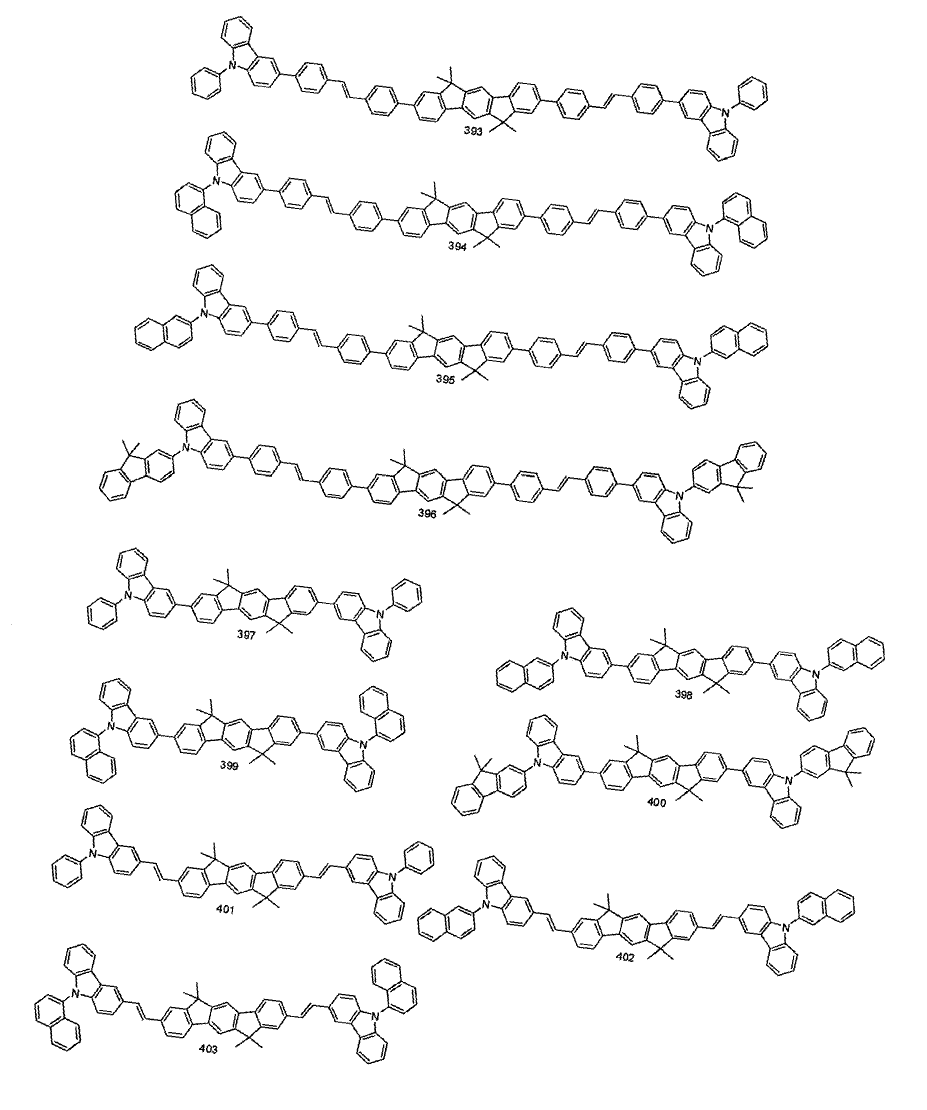

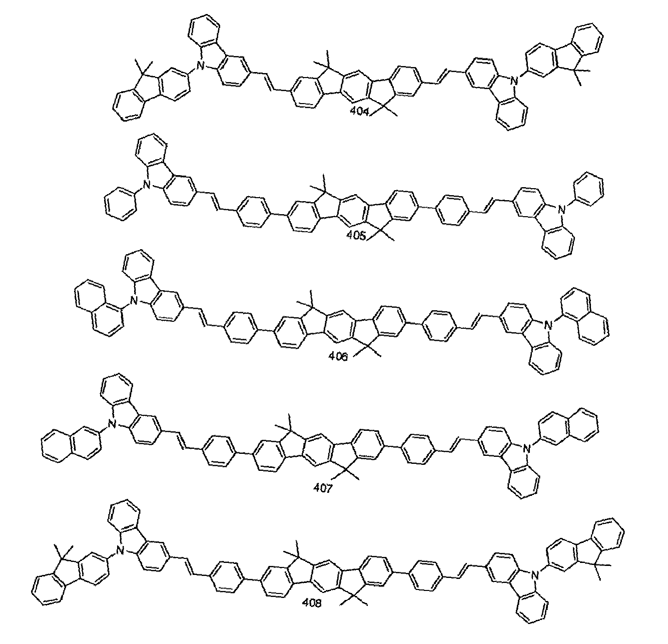

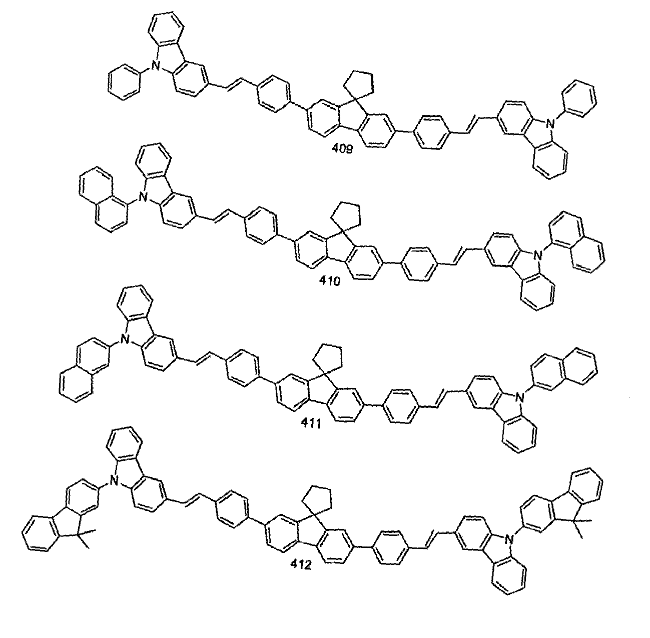

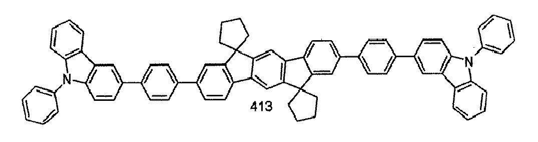

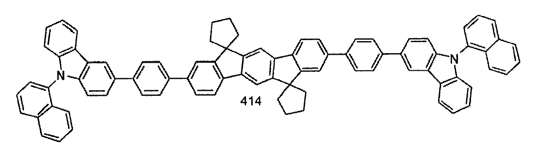

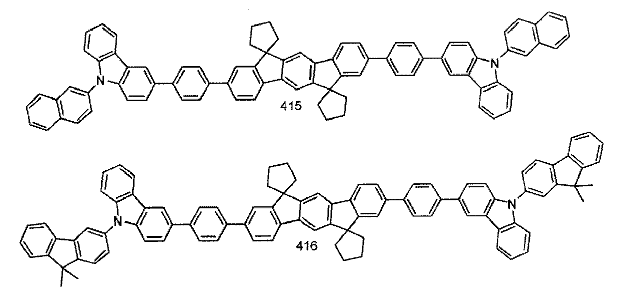

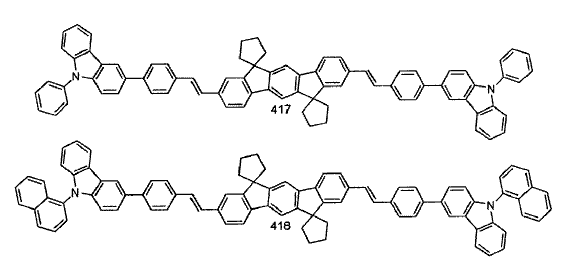

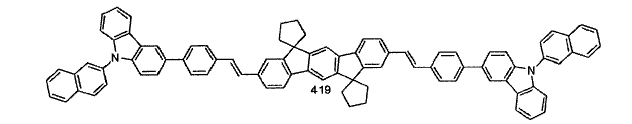

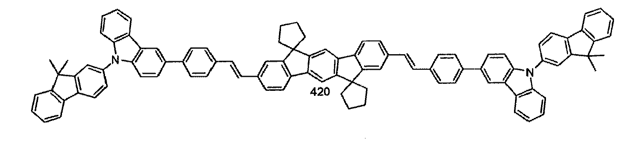

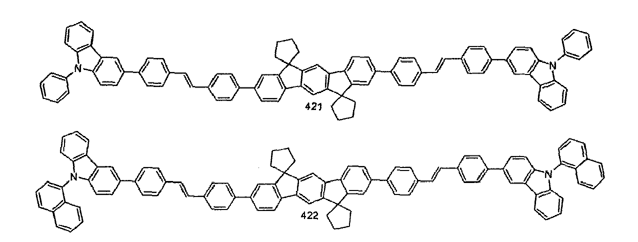

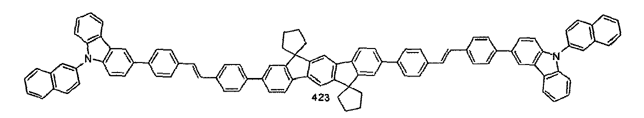

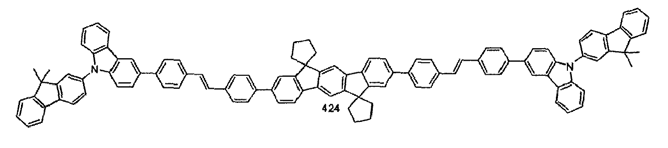

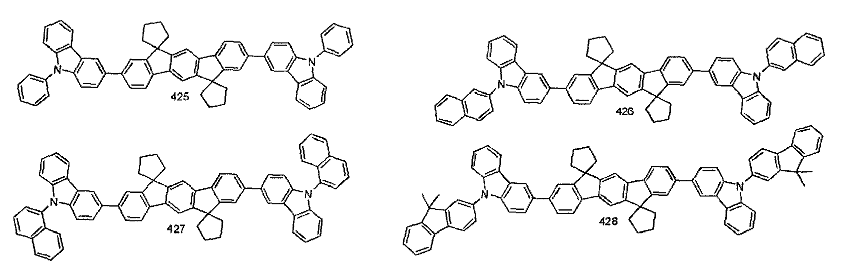

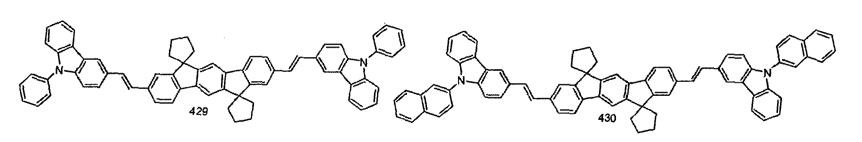

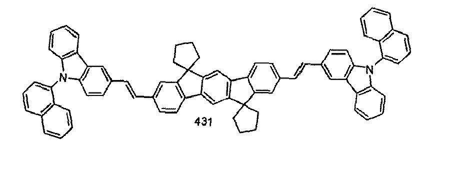

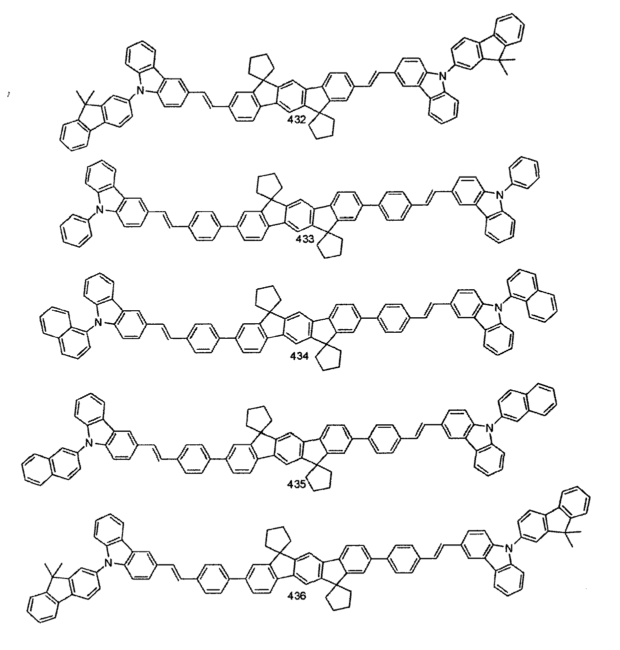

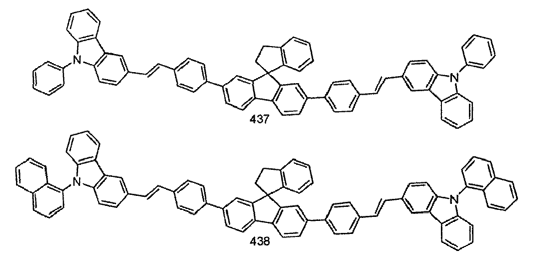

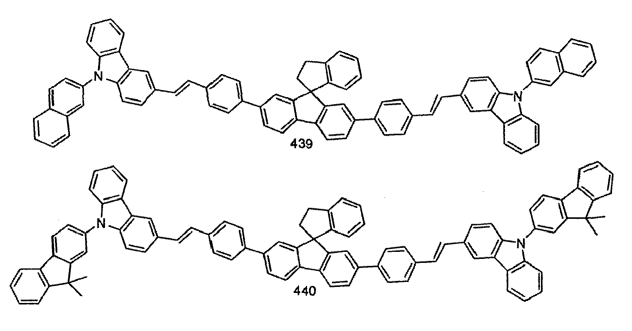

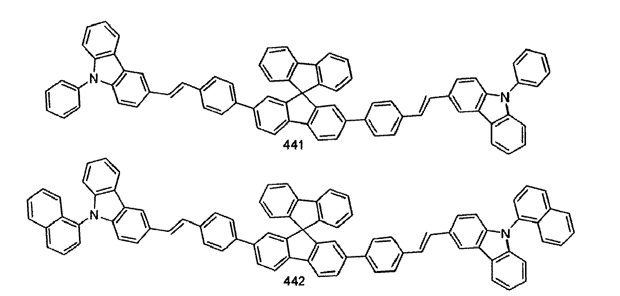

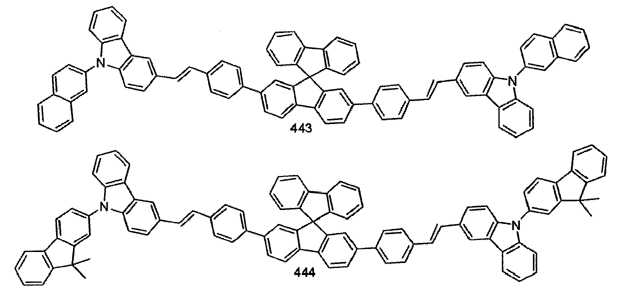

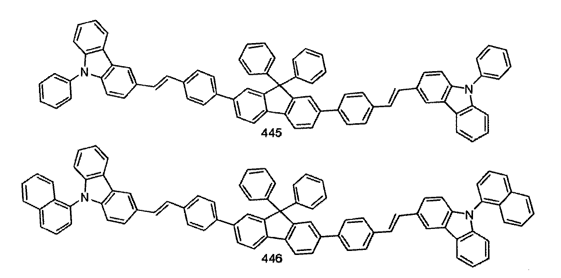

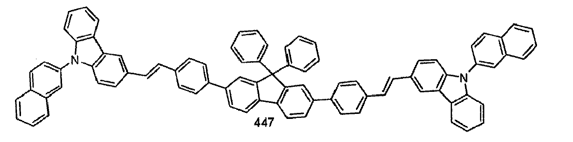

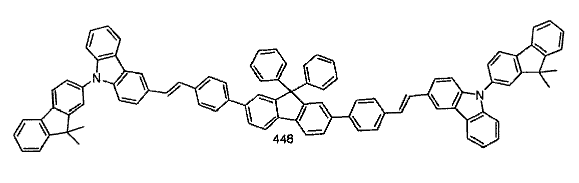

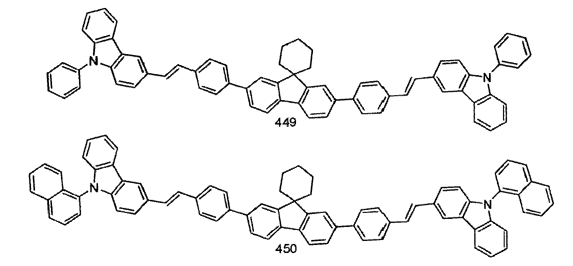

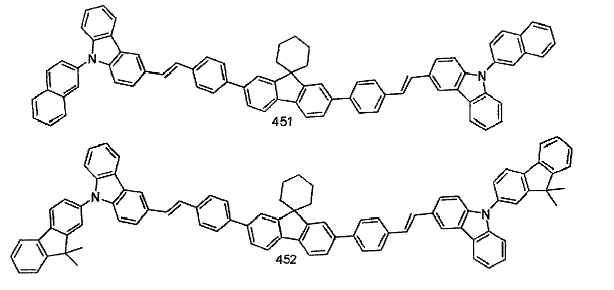

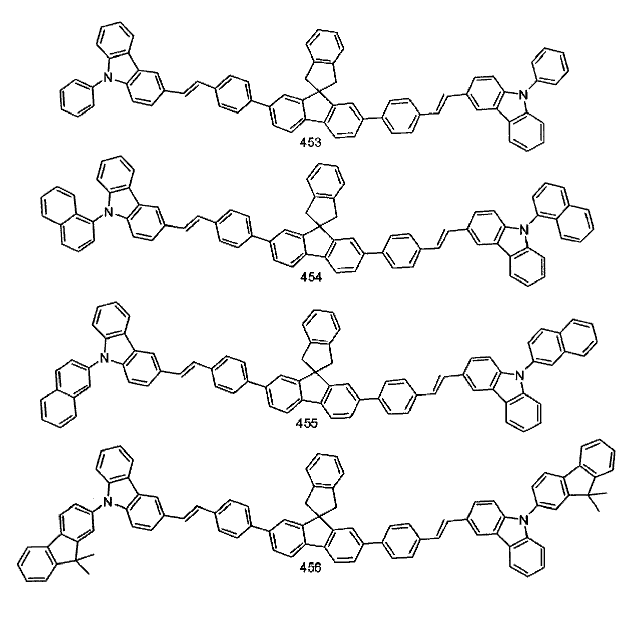

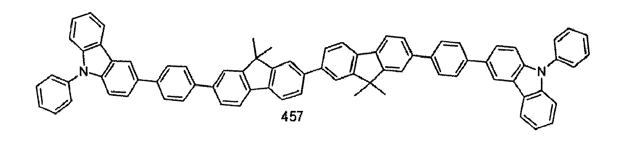

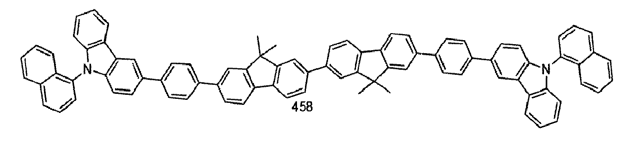

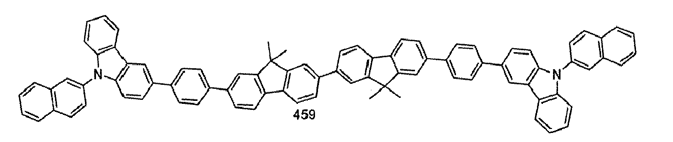

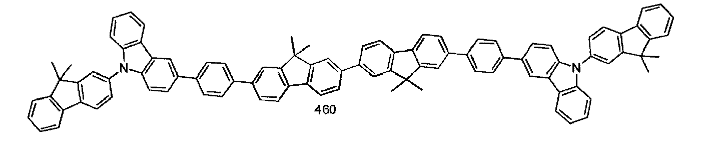

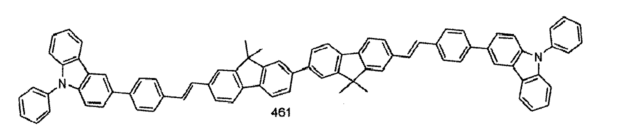

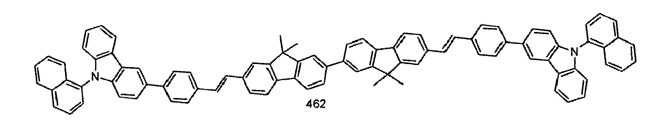

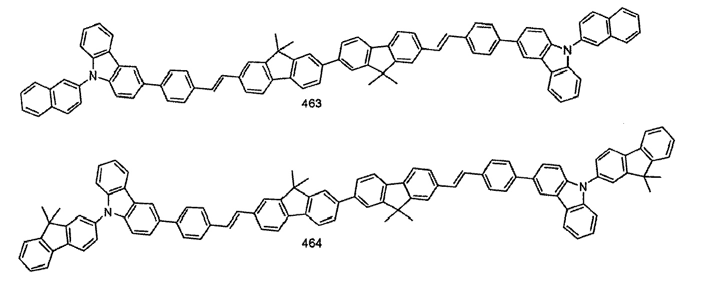

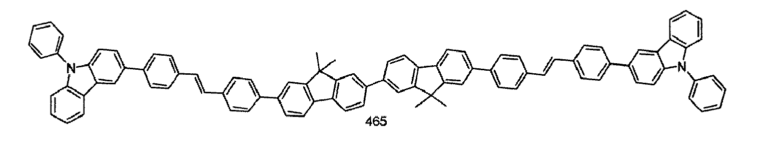

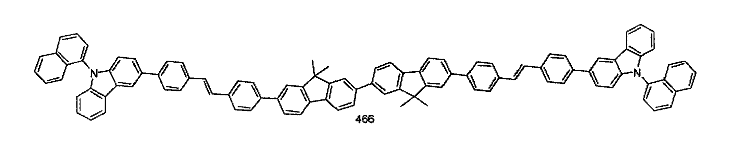

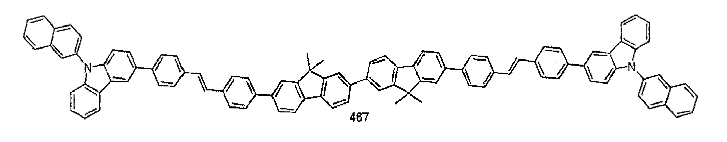

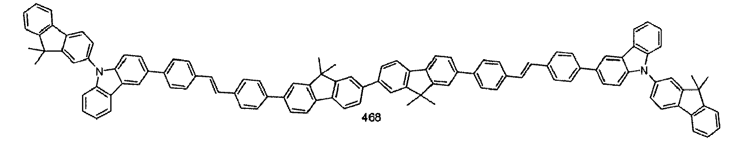

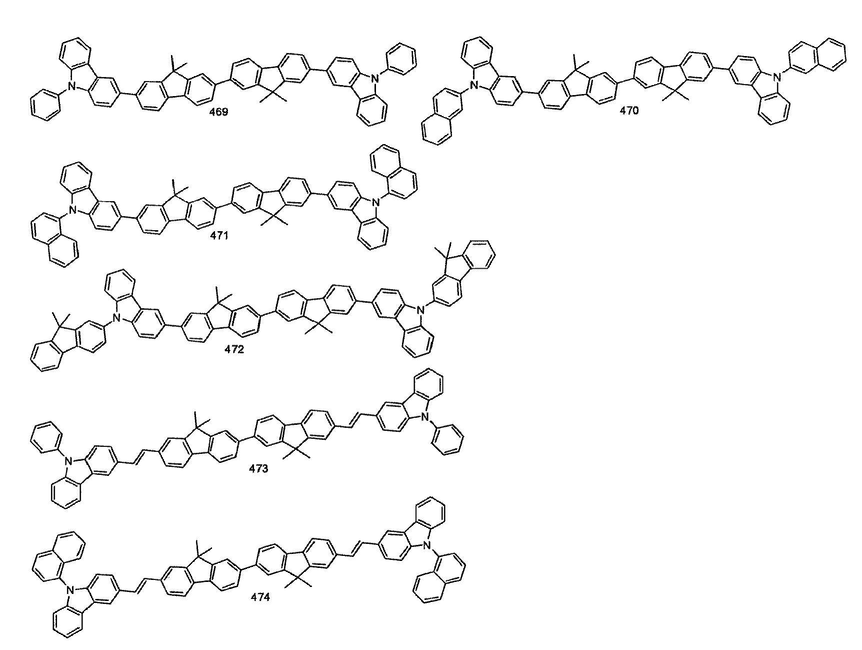

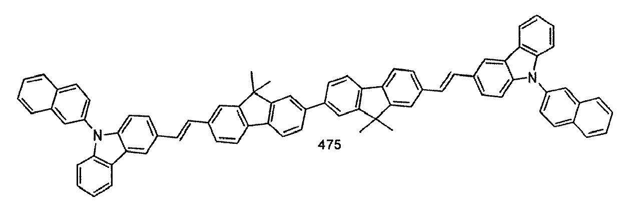

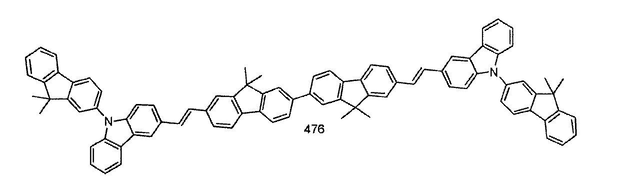

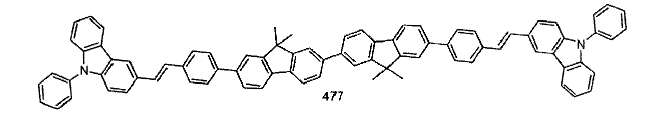

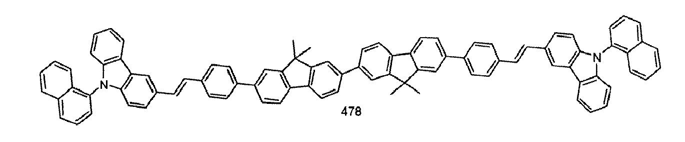

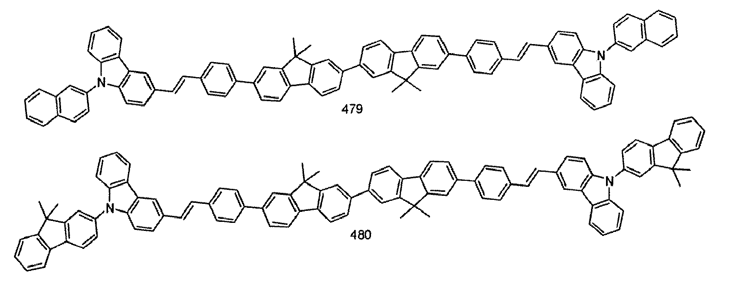

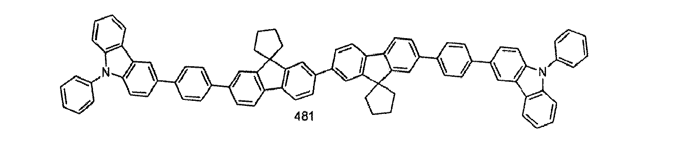

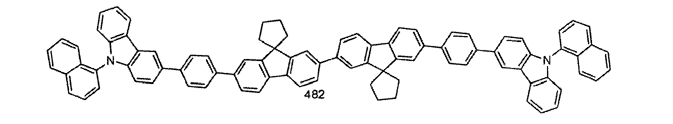

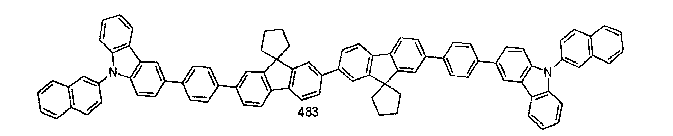

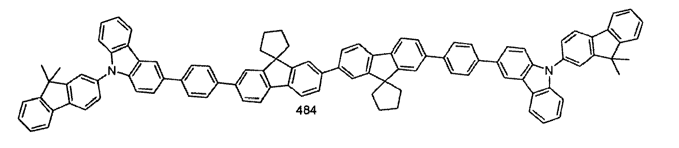

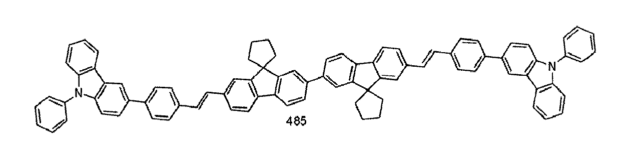

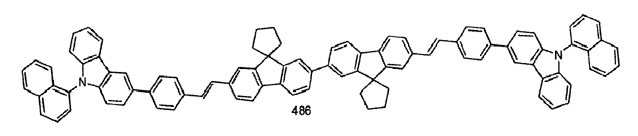

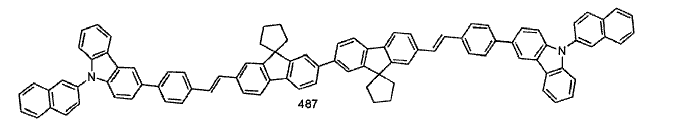

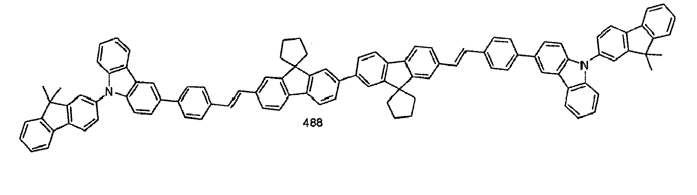

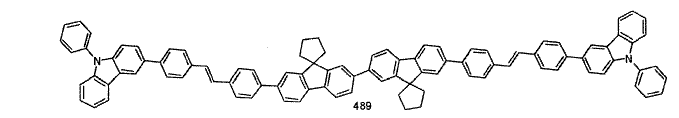

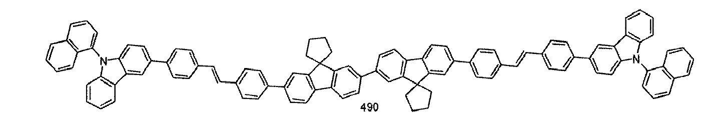

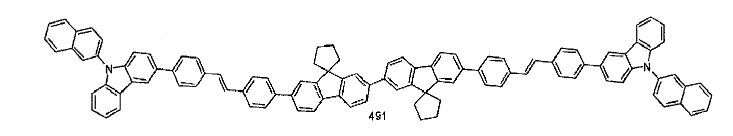

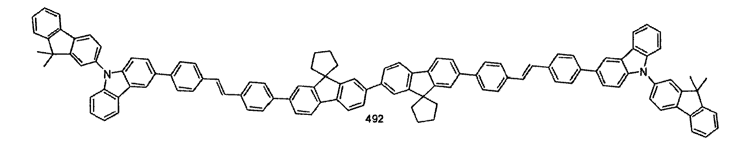

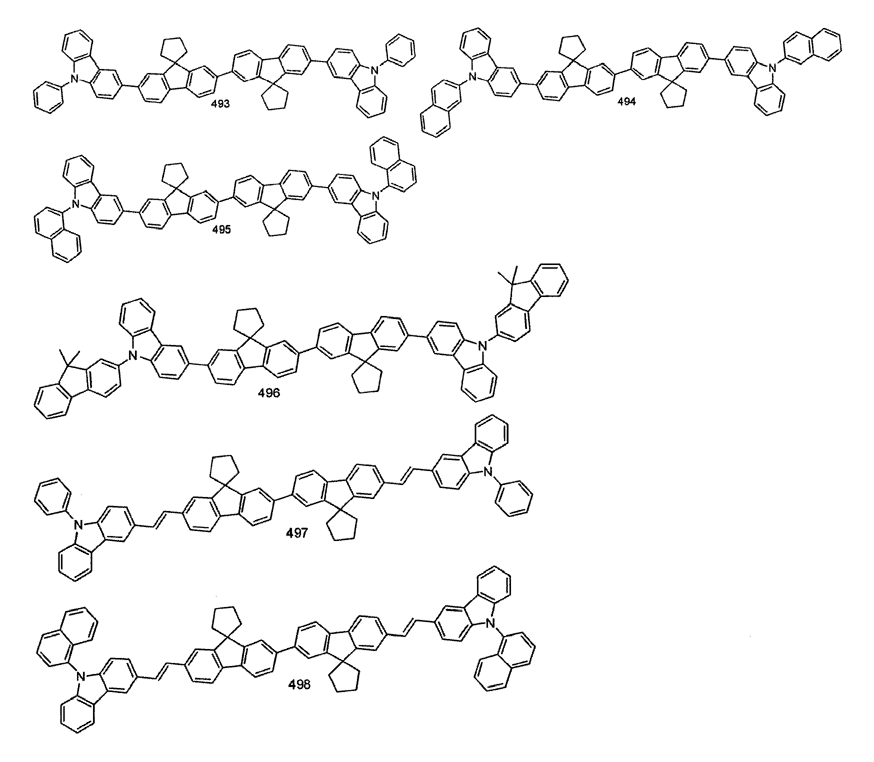

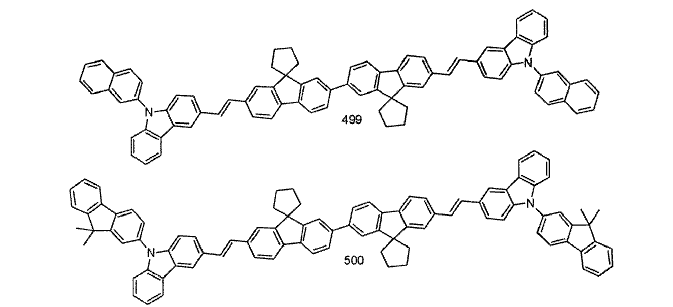

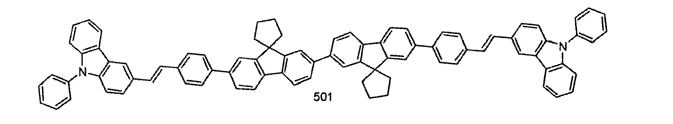

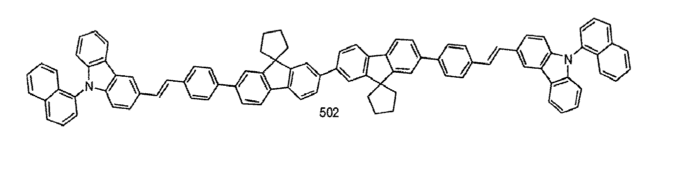

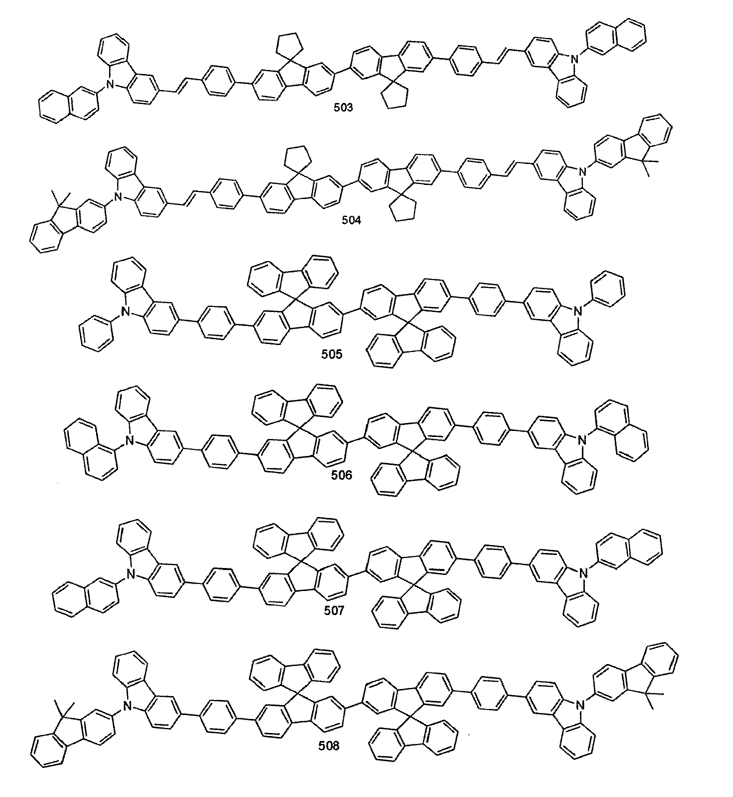

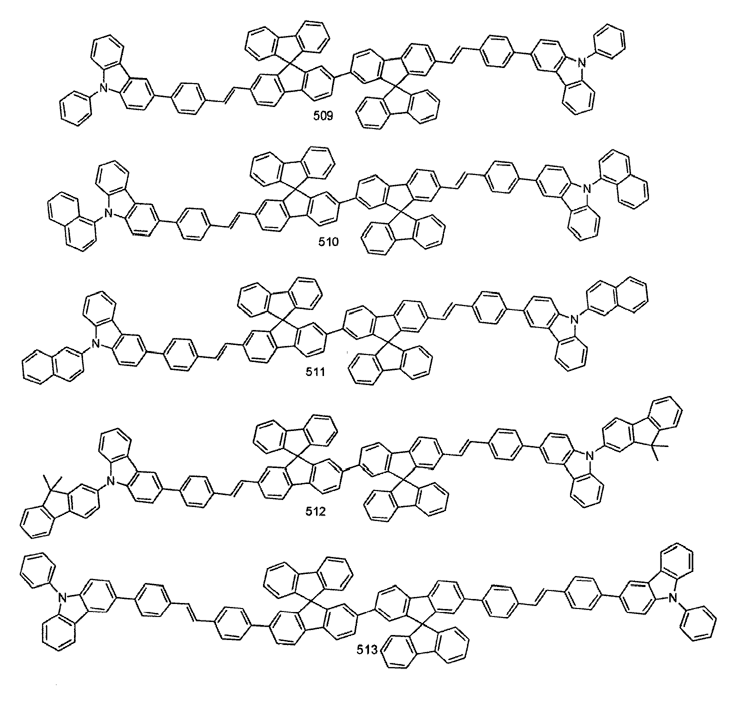

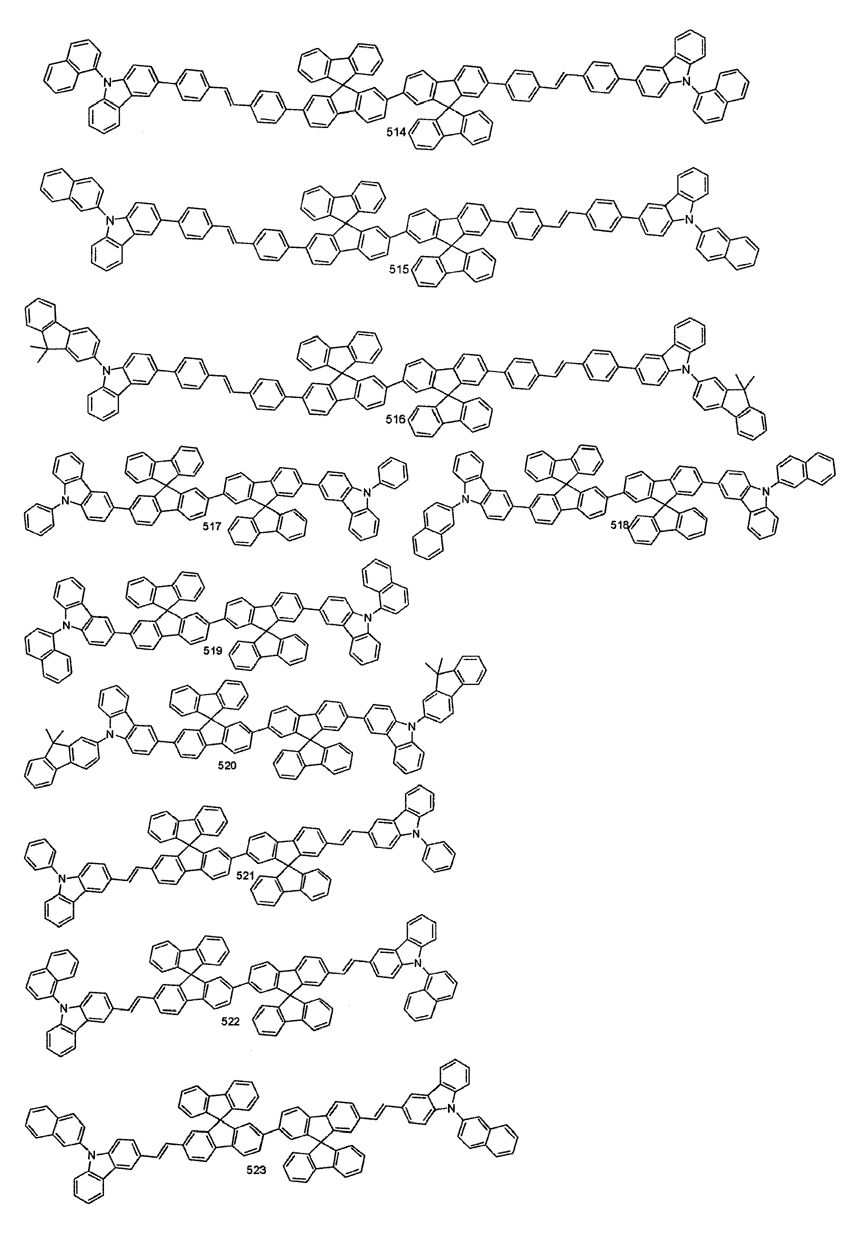

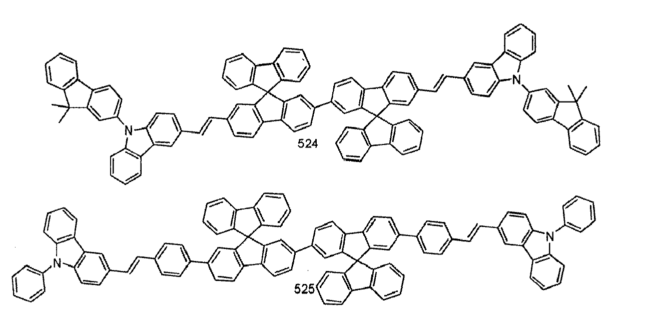

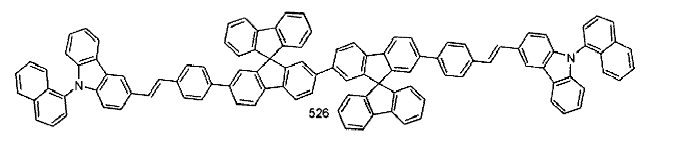

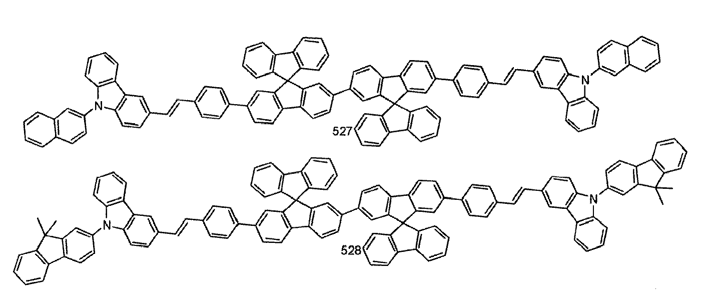

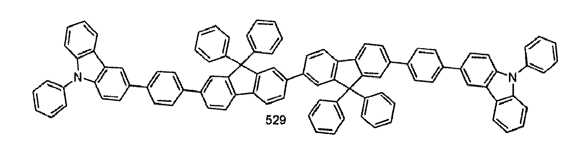

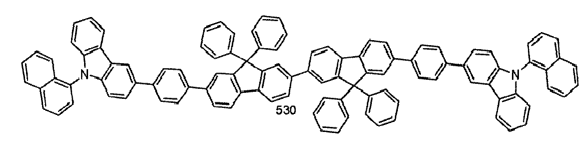

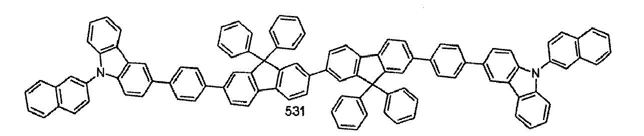

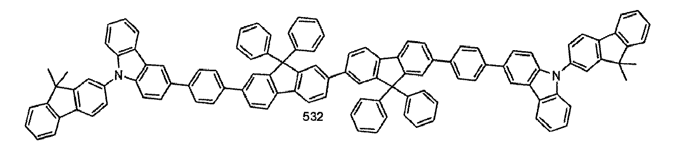

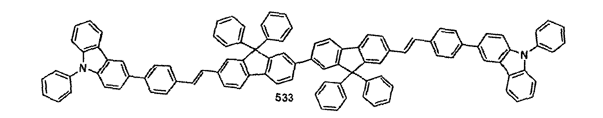

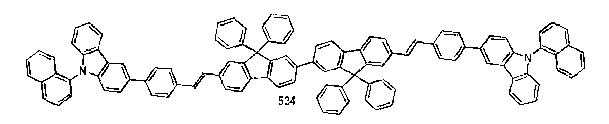

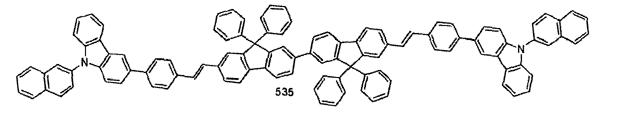

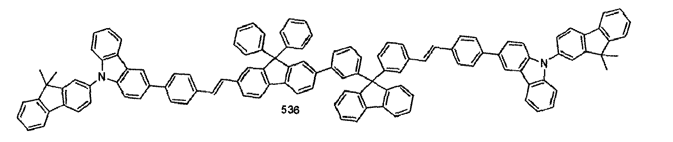

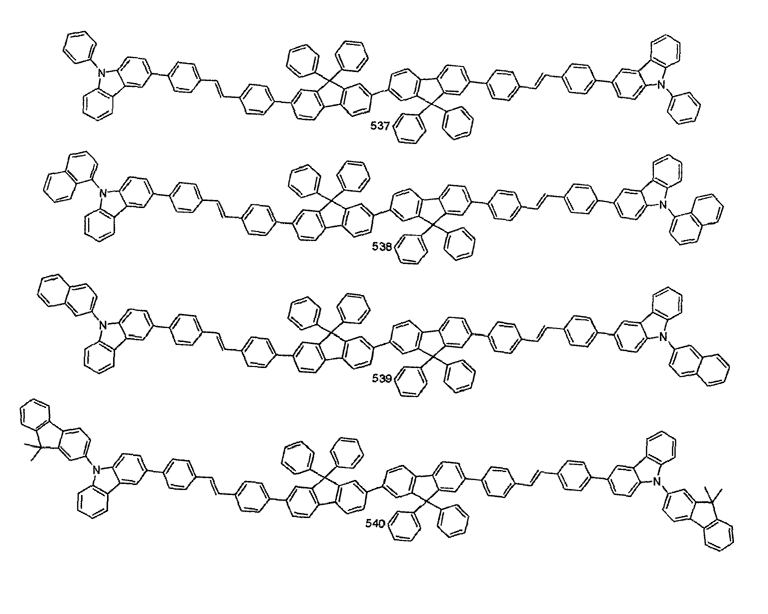

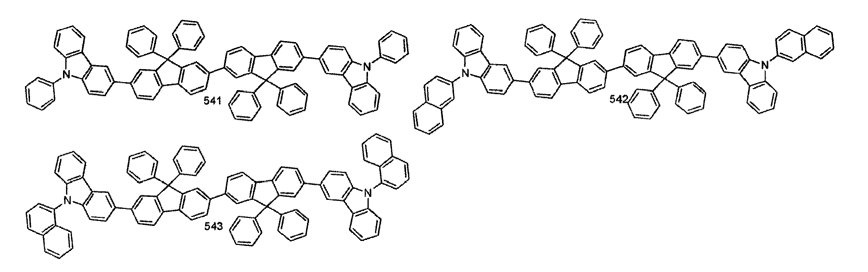

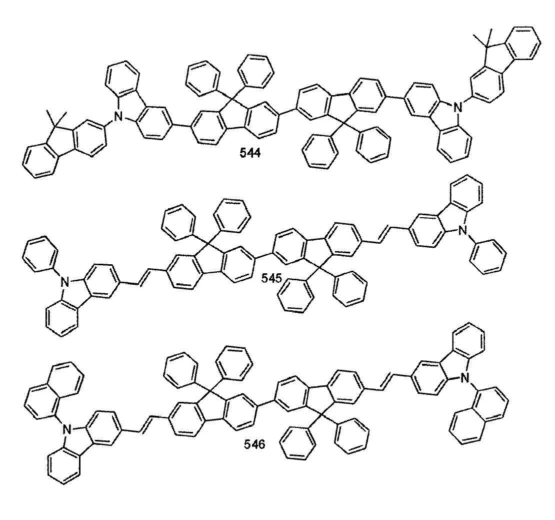

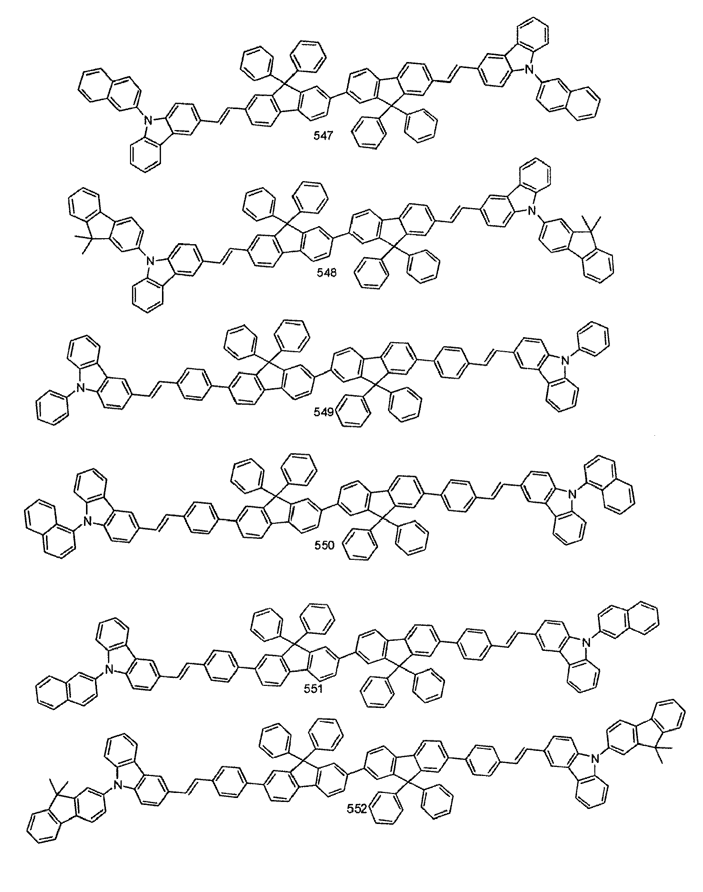

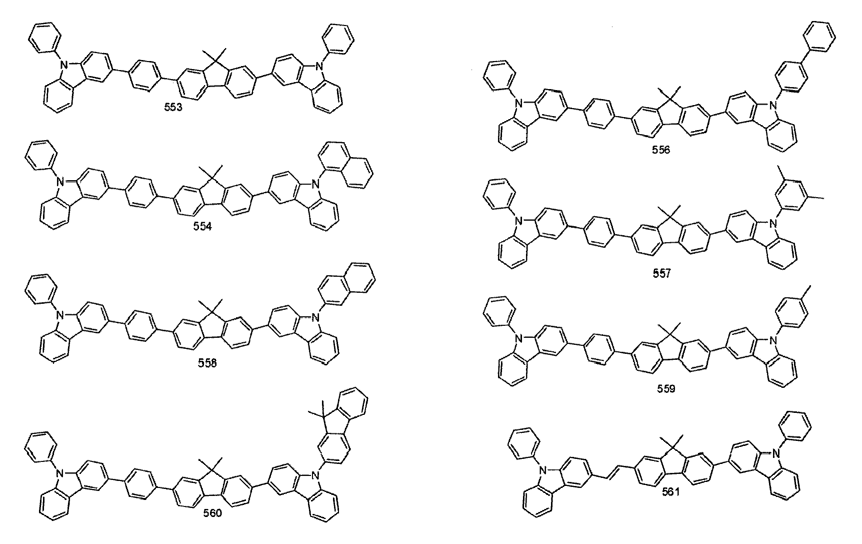

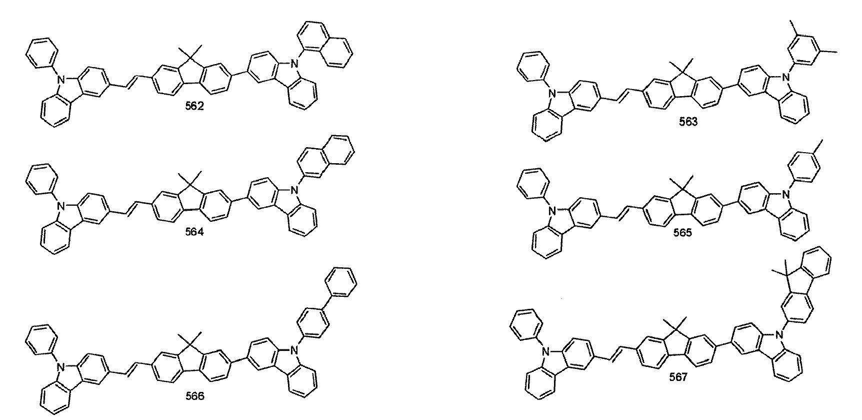

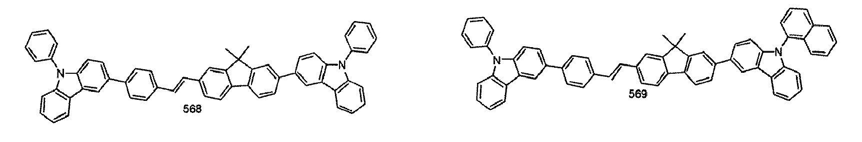

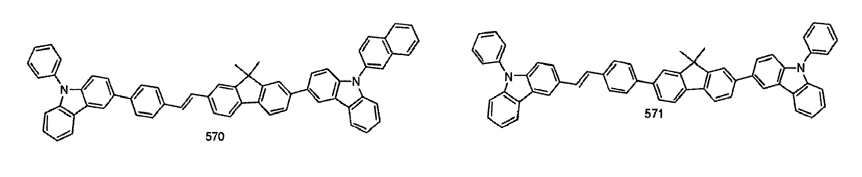

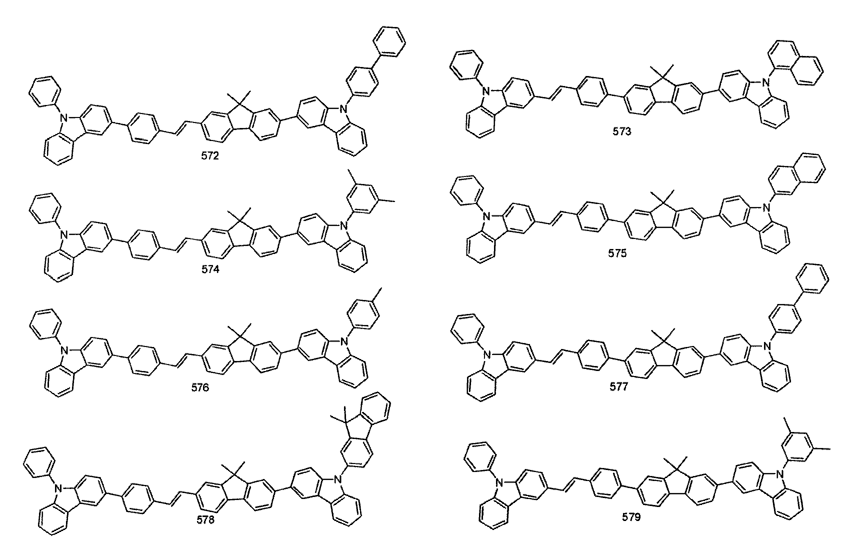

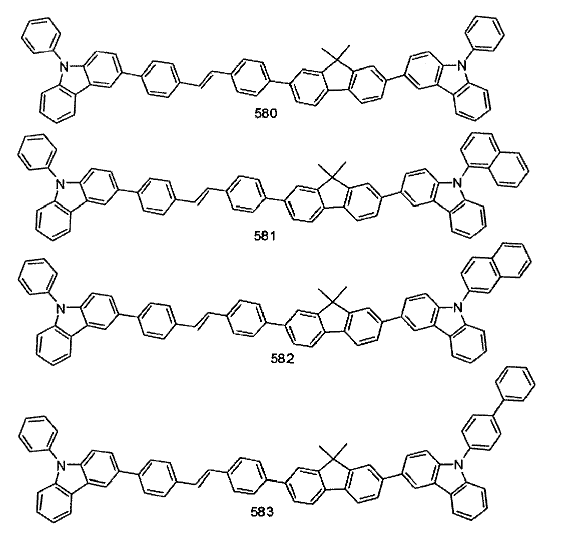

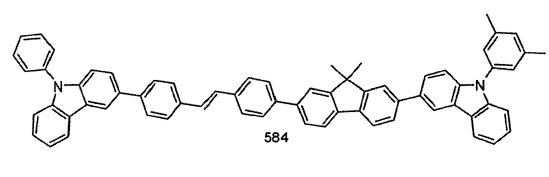

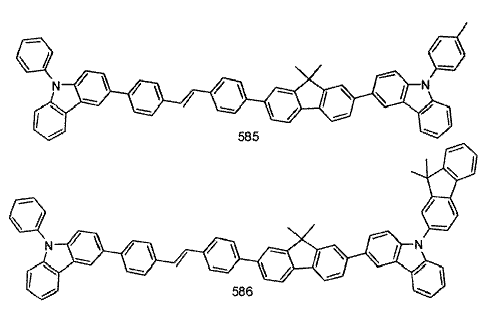

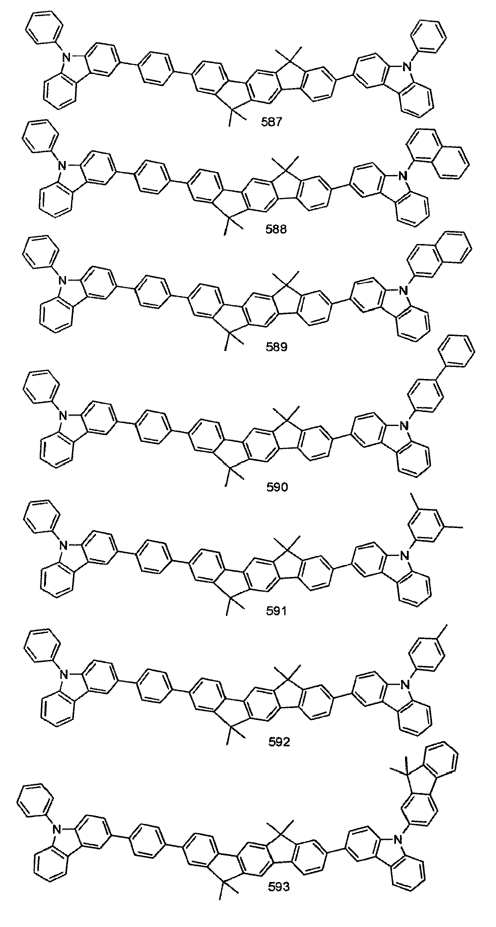

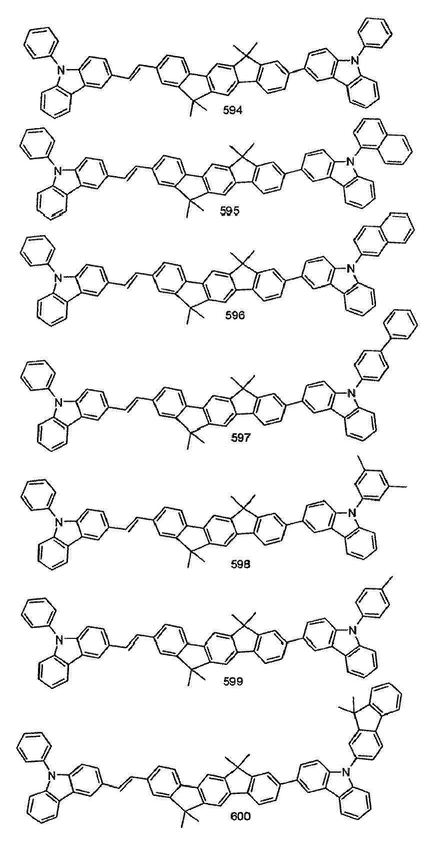

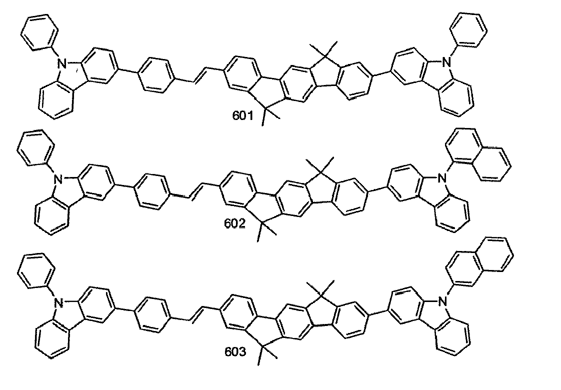

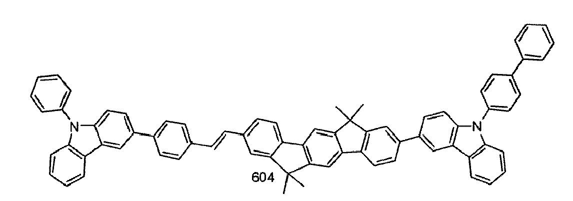

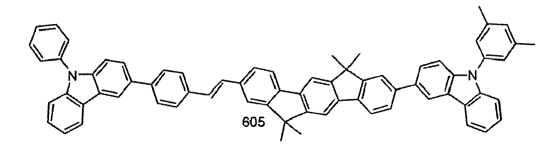

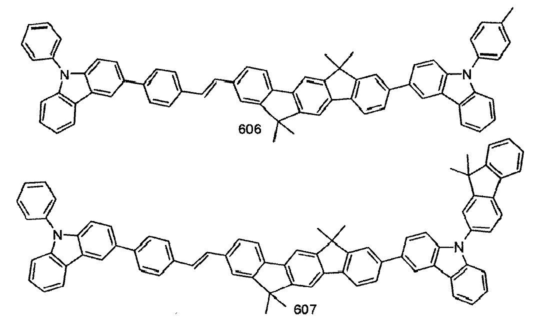

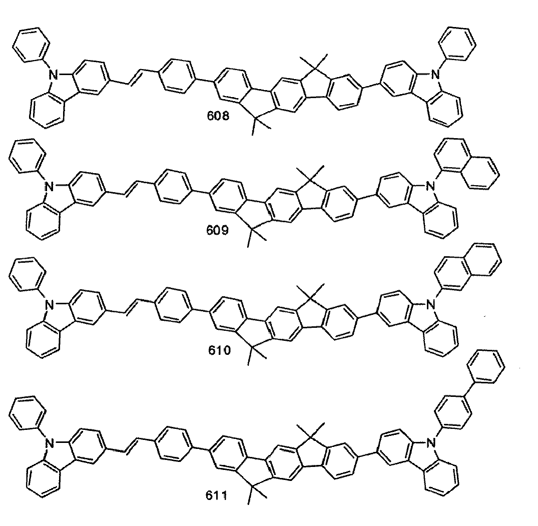

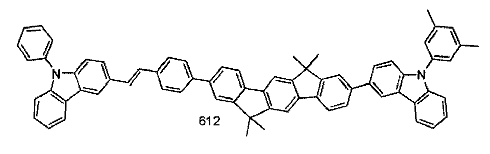

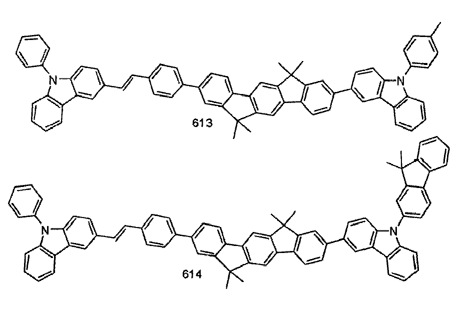

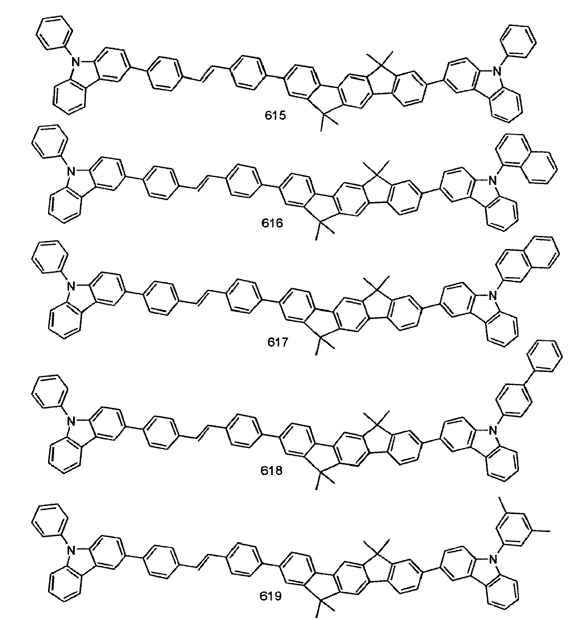

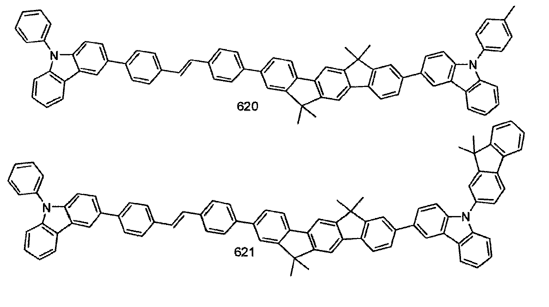

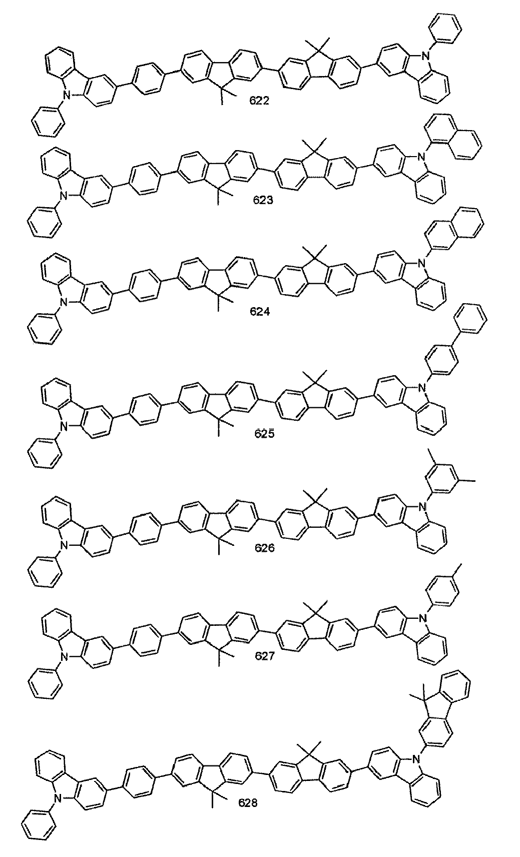

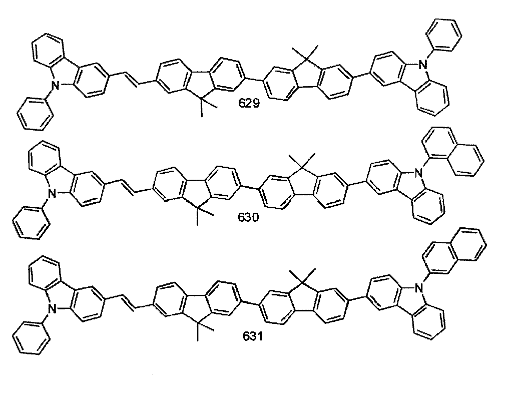

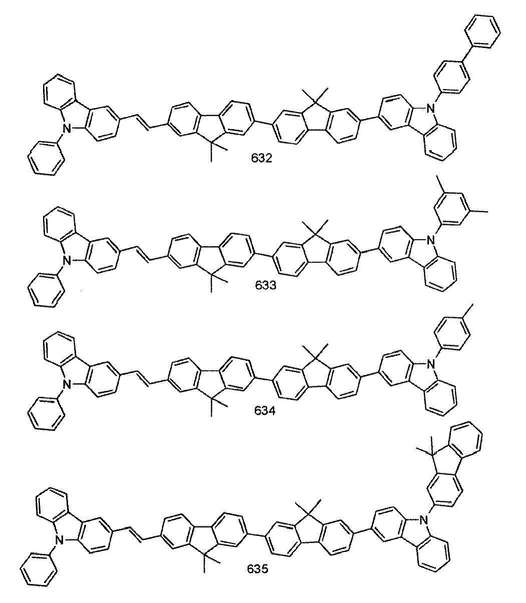

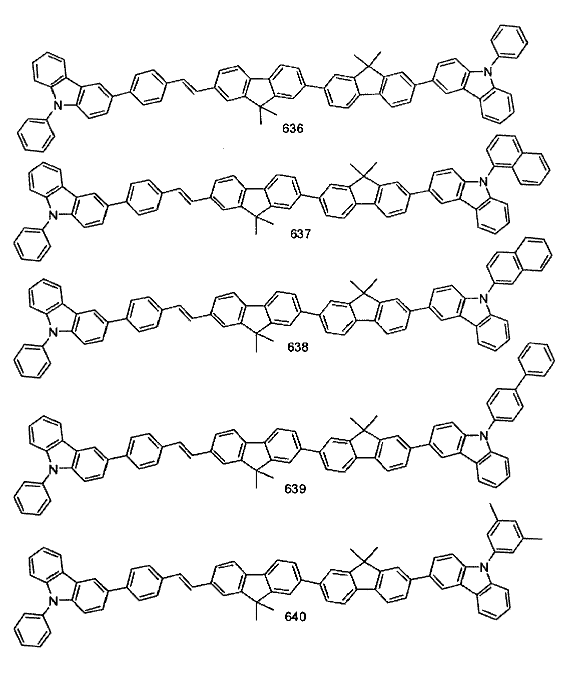

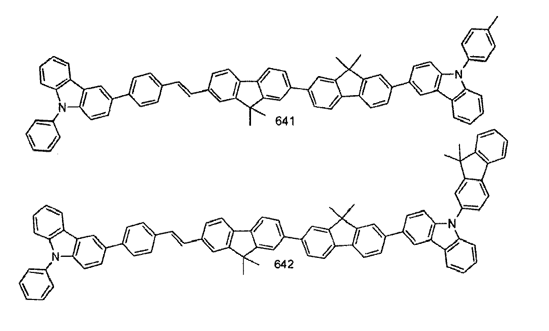

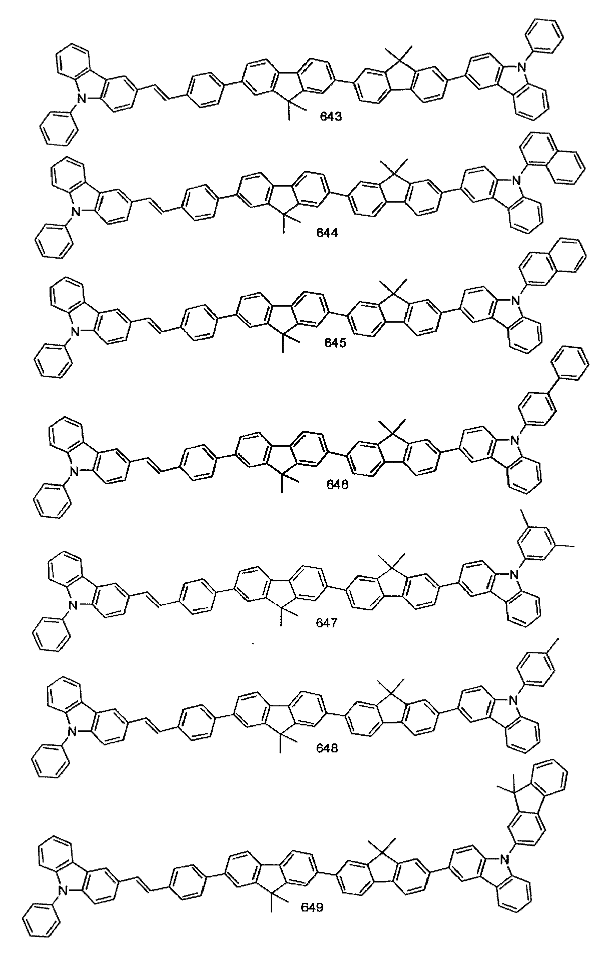

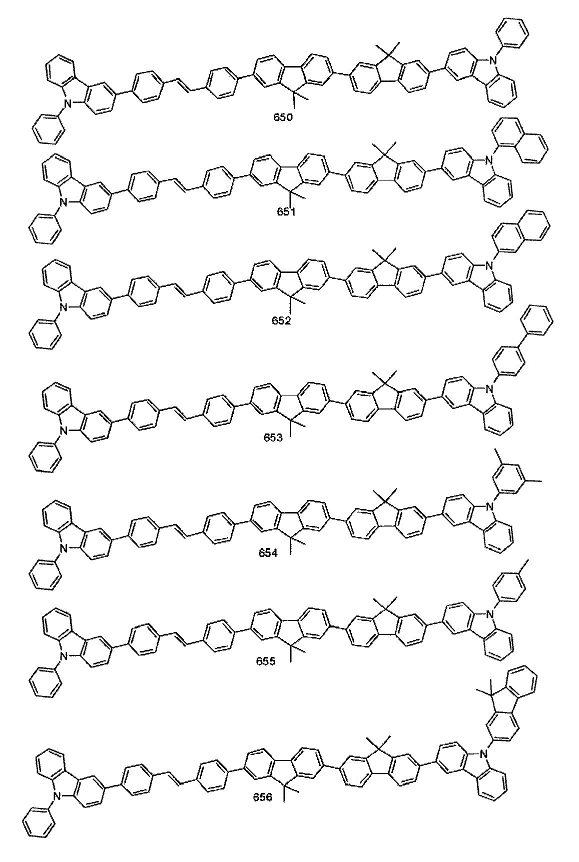

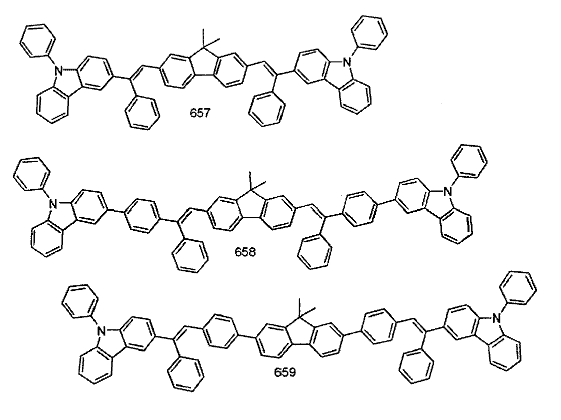

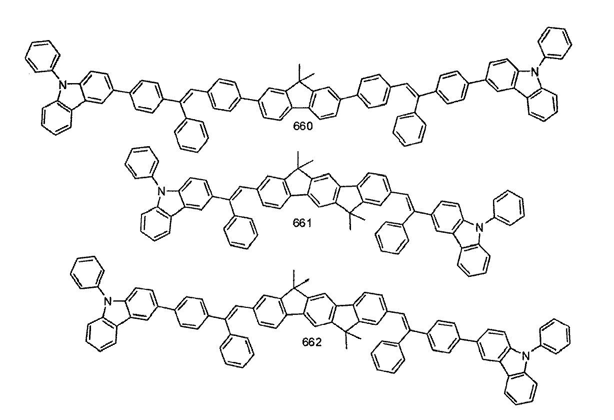

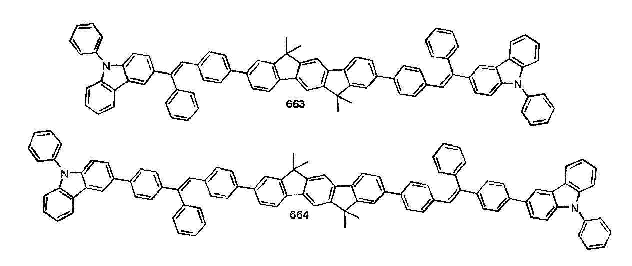

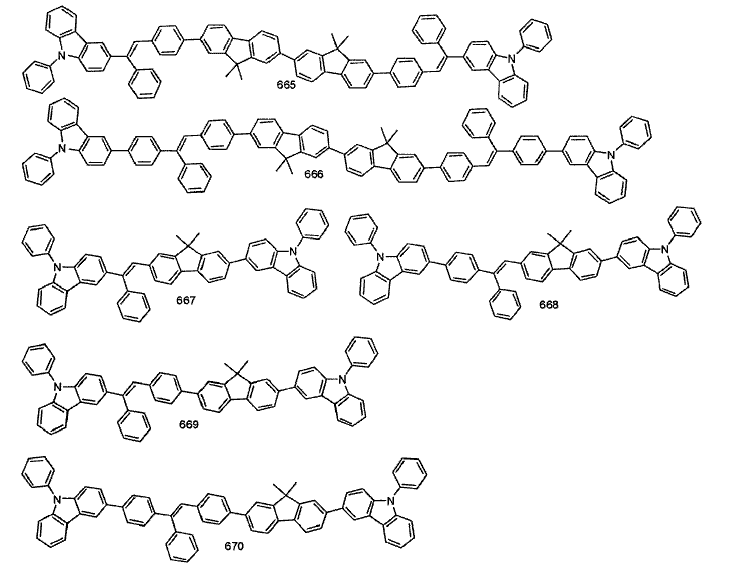

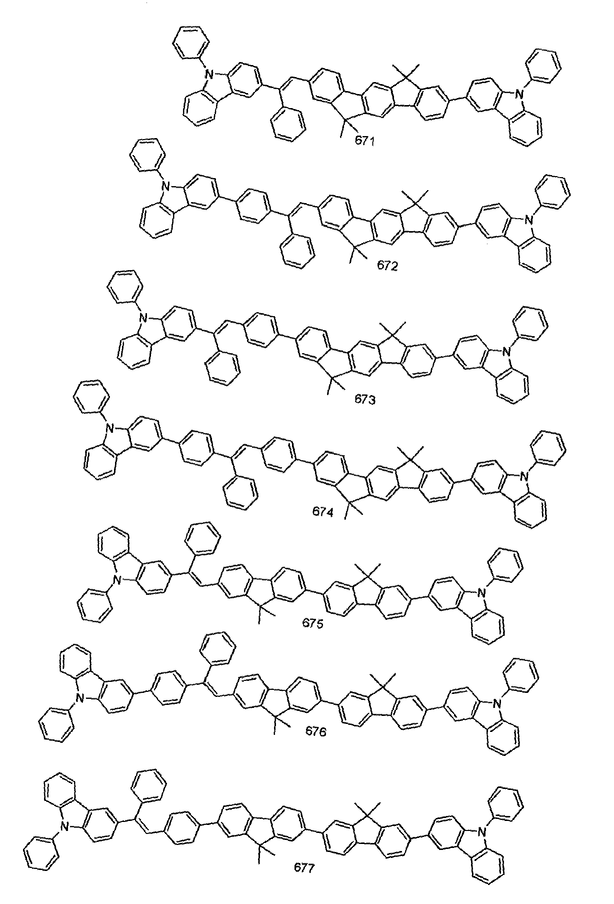

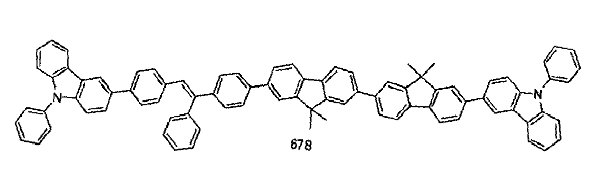

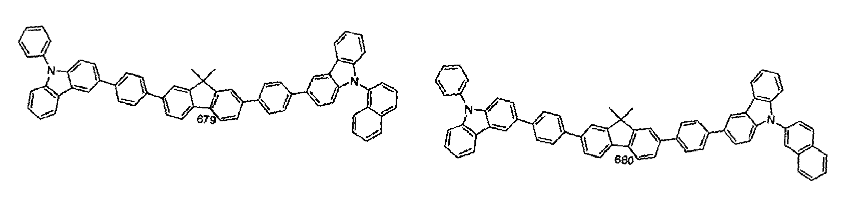

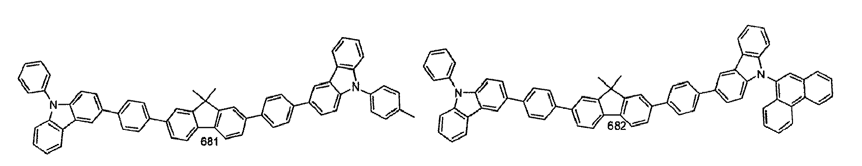

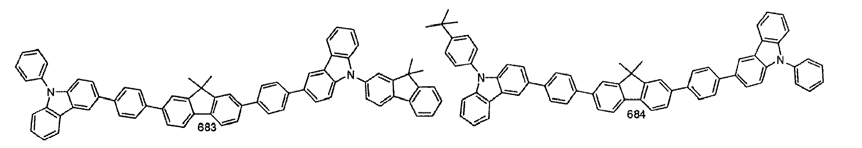

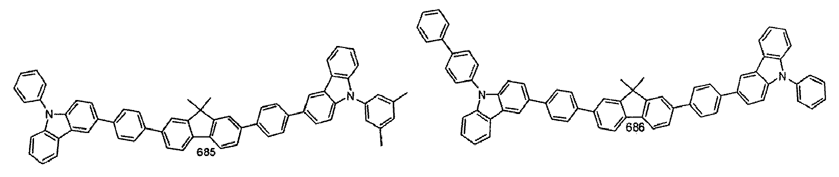

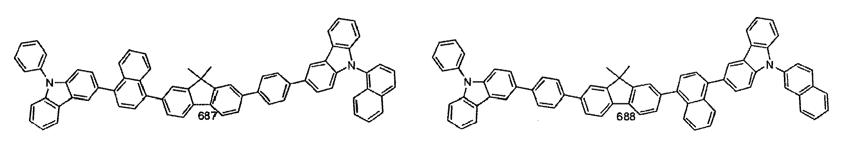

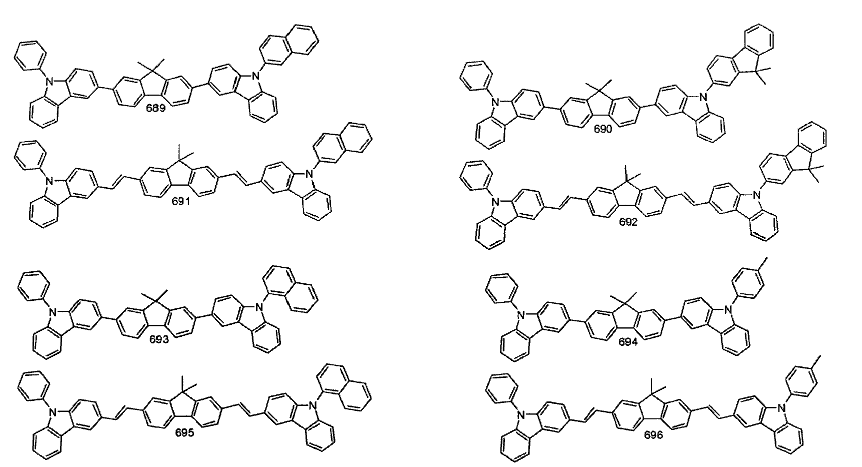

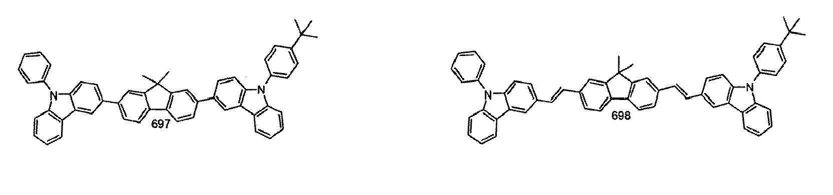

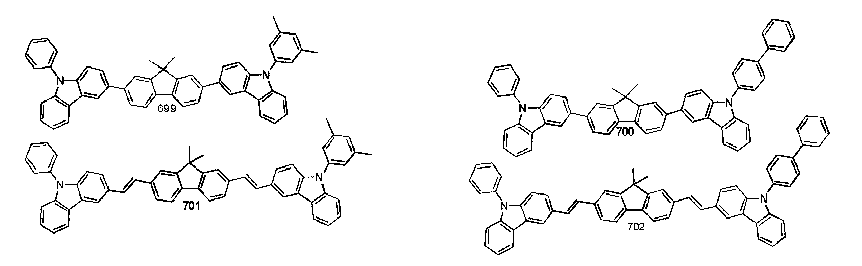

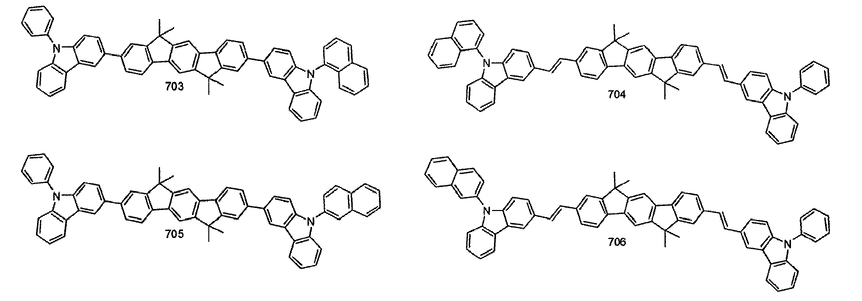

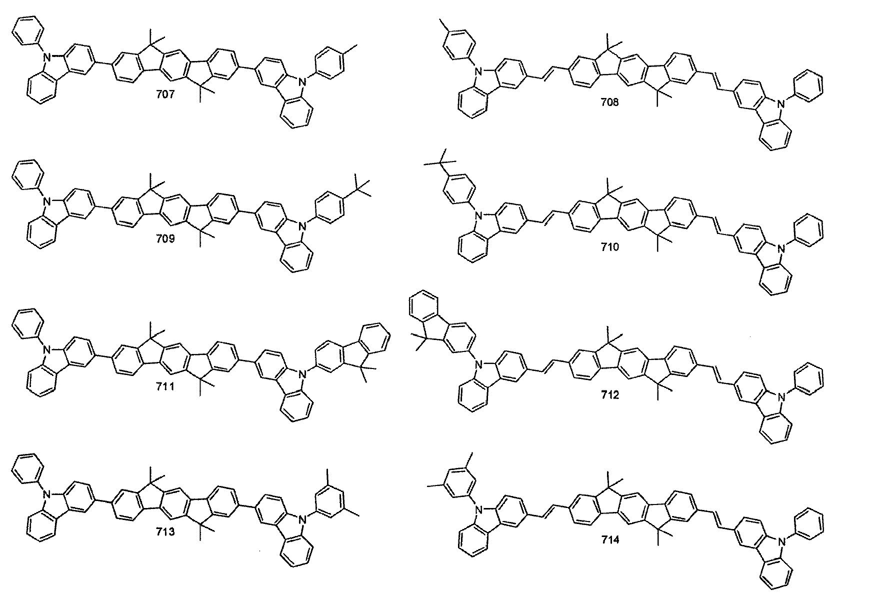

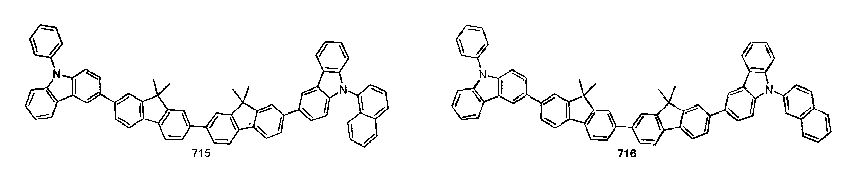

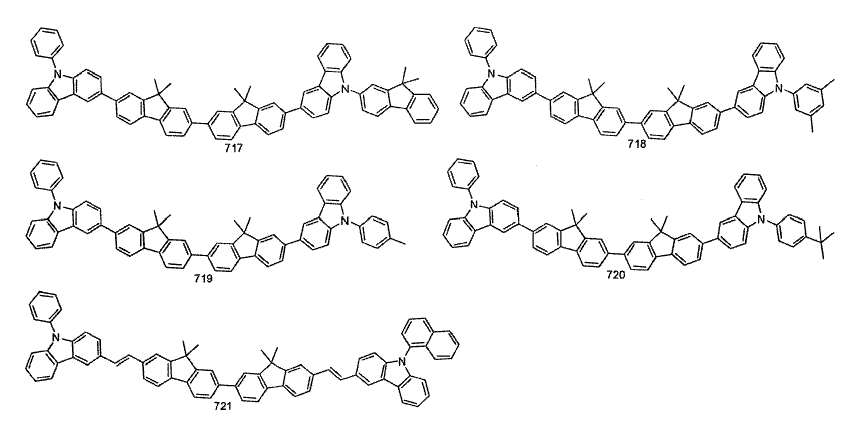

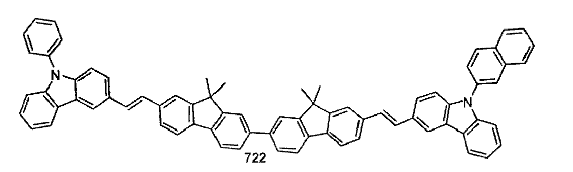

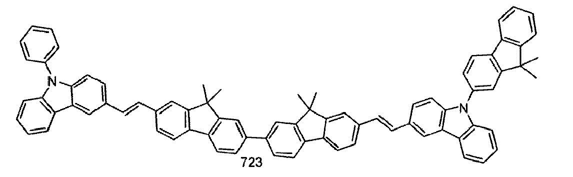

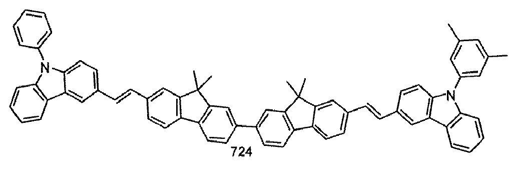

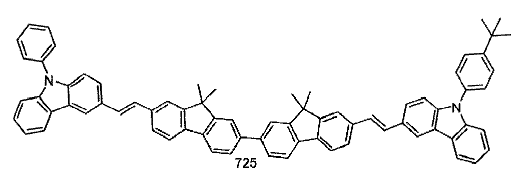

The organic electroluminescent compounds according to the present invention can be prepared, for example, as illustrated by Reaction Scheme (1), without restriction.

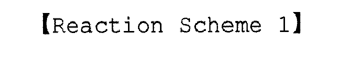

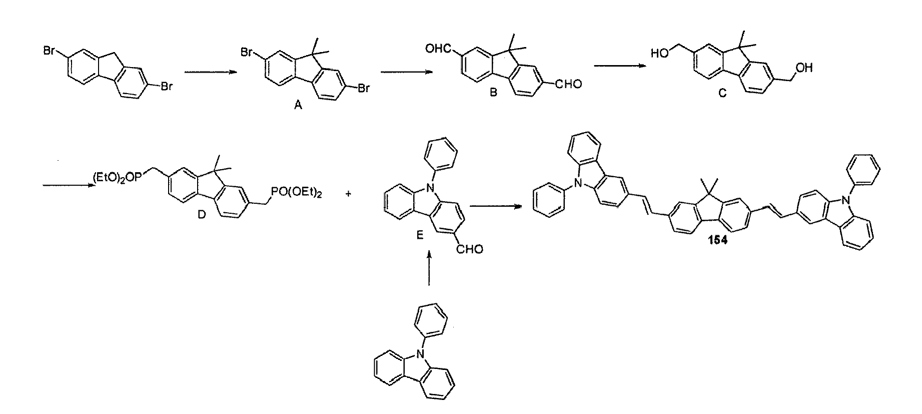

Further, the present invention provides organic solar cells, which comprise one or more organic electroluminescent compound(s) represented by Chemical Formula (1).

The present invention also provides an organic electroluminescent device which is comprised of a first electrode; a second electrode; and at least one organic layer(s) interposed between the first electrode and the second electrode; wherein the organic layer comprises one or more organic electroluminescent compound(s) represented by Chemical Formula (1).

The organic electroluminescent device according to the present invention is characterized in that the organic layer comprises an electroluminescent layer, which contains one or more organic electroluminescent compound(s) represented by Chemical Formula (1) as electroluminescent dopant, and one or more host(s). The host to be applied to an organic electroluminescent device according to the present invention is not particularly restrictive, but preferably selected from the compounds represented by Chemical Formula (5) or (6):

(Ar₁₀)ₐ-X- (Ar₂₀)_{b} Chemical Formula 5

(Ar₃₀)_{c}-Y-(Ar₄₀)_{d} Chemical Formula 6

wherein, X represents (C6-C60)arylene or (C4-C60)heteroarylene;
Y represents anthracenylene;
Ar₁₀ through Ar₄₀ are independently selected from hydrogen, (C1-C60)alkyl, (C1-C60)alkoxy, halogen, (C4-C60)heteroaryl, (C5-C60)cycloalkyl and (C6-C60)aryl; the cycloalkyl, aryl or heteroaryl of Ar₁₀ through Ar₄₀ may be further substituted by one or more substituent(s) selected from a group consisting of (C6-C60)aryl or (C4-C60)heteroaryl with or without one or more substituent(s) selected from a group consisting of (C1-C60)alkyl with or without halogen substituent(s), (C1-C60)alkoxy, (C3-C60)cycloalkyl, halogen, cyano, tri(C1-C60)alkylsilyl, di(C1-C60)alkyl(C6-C60)arylsilyl and tri(C6-C60)arylsilyl; (C1-C60)alkyl with or without halogen substituent(s), (C1-C60)alkoxy, (C3-C60)cycloalkyl, halogen, cyano, tri(C1-C60)alkylsilyl, di(C1-C60)alkyl(C6-C60)arylsilyl and tri(C6-C60)arylsilyl; and
a, b, c and d independently represent an integer from 0 to 4.

The host of Chemical Formula (5) or (6) can be exemplified by anthracene derivatives and benz[a]anthracene derivatives represented by one of Chemical Formulas (7) to (9) : 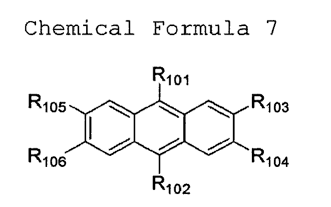 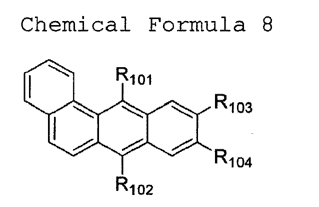 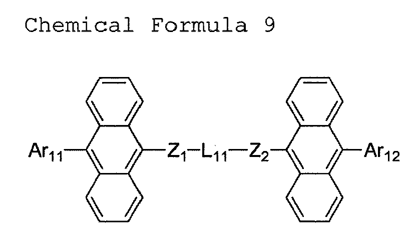 wherein, R₁₀₁ and R₁₀₂ independently represent hydrogen, (C1-C60)alkyl, halogen, (C6-C60)aryl, (C4-C60)heteroaryl, 5-or 6-membered heterocycloalkyl containing one or more heteroatom(s) selected from N, O and S, or (C3-C60)cycloalkyl; the aryl or heteroaryl of R₁₀₁ and R₁₀₂ may be further substituted by one or more substituent(s) selected from a group consisting of (C1-C60)alkyl, halo(C1-C60)alkyl, (C1-C60)alkoxy, (C3-C60)cycloalkyl, (C6-C60)aryl, (C4-C60)heteroaryl, halogen, cyano, tri(C1-C60)alkylsilyl, di(C1-C60)alkyl(C6-C60)arylsilyl and tri(C6-C60)arylsilyl;
R₁₀₃ through R₁₀₆ independently represent hydrogen, (C1-C60)alkyl, (C1-C60)alkoxy, halogen, (C4-C60)heteroaryl, (C5-C60)cycloalkyl or (C6-C60)aryl; the heteroaryl, cycloalkyl or aryl of R₆₃ through R₆₆ may be further substituted by one or more substituent(s) selected from a group consisting of (C1-C60)alkyl with or without halogen substituent(s), (C1-C60)alkoxy, (C3-C60)cycloalkyl, halogen, cyano, tri(C1-C60)alkylsilyl, di(C1-C60)alkyl(C6-C60)arylsilyl and tri(C6-C60)arylsilyl;
Z₁ and Z₂ independently represent a chemical bond, or (C6-C60)arylene with or without one or more substituent(s) selected from (C1-C60)alkyl, (C1-C60)alkoxy, (C6-C60)aryl, (C4-C60)heteroaryl and halogen;
Ar₁₁ and Ar₁₂ independently represent aryl or (C4-C60)heteroaryl selected from the following structures; 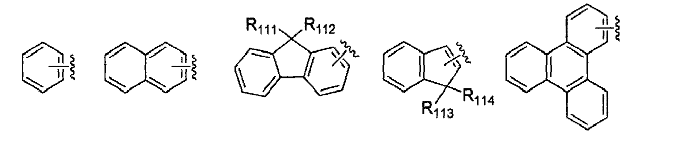 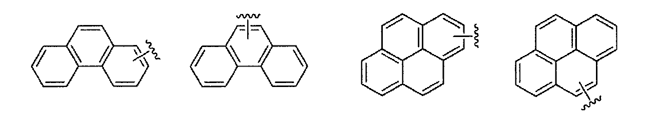 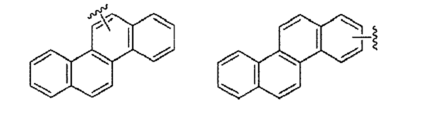 the aryl or heteroaryl of Ar₁₁ and Ar₁₂ may be substituted by one or more substituent(s) selected from (C1-C60)alkyl, (C1-C60)alkoxy, (C6-C60)aryl and (C4-C60)heteroaryl;
L₁₁ represents (C6-C60)arylene, (C4-C60)heteroarylene or a compound having the following structure; 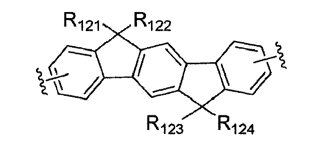 the arylene or heteroarylene of L₁₁ may be substituted by one or more substituent(s) selected from (C1-C60)alkyl, (C1-C60)alkoxy, (C6-C60)aryl, (C4-C60)heteroaryl and halogen;
R₁₁₁, R₁₁₂, R₁₁₃ and R₁₁₄ independently represent hydrogen, (C1-C60)alkyl or (C6-C60)aryl, or they may be linked to an adjacent substituent via (C3-C60)alkylene or (C3-C60)alkenylene with or without a fused ring to form an alicyclic ring, or a monocyclic or polycyclic aromatic ring; and
R₁₂₁, R₁₂₂, R₁₂₃ and R₁₂₄ independently represent hydrogen, (C1-C60)alkyl, (C1-C60)alkoxy, (C6-C60)aryl, (C4-C60)heteroaryl or halogen, or they may be linked to an adjacent substituent via (C3-C60)alkylene or (C3-C60)alkenylene with or without a fused ring to form an alicyclic ring, or a monocyclic or polycyclic aromatic ring.

The electroluminescent layer means the layer where electroluminescence occurs, and it may be a single layer or a multi-layer consisting of two or more layers laminated. When a mixture of host-dopant is used according to the constitution of the present invention, noticeable improvement in luminous efficiency by the electroluminescent host according to the invention could be confirmed. Those results can be achieved by doping concentration of 0.5 to 10% by weight. The host according to the present invention exhibits higher hole and electron conductivity, and excellent stability of the material as compared to other conventional host materials, and provides improved device life as well as luminous efficiency.

Thus, it can be described that use of the compound represented by one of Chemical Formulas (7) to (9) as an electroluminescent host significantly supplements electronic drawback of the organic electroluminescent compounds of Chemical Formula (1) according to the present invention. The host compounds represented by one of Chemical Formulas (7) to (9) can be exemplified by the following compounds, but are not restricted thereto.

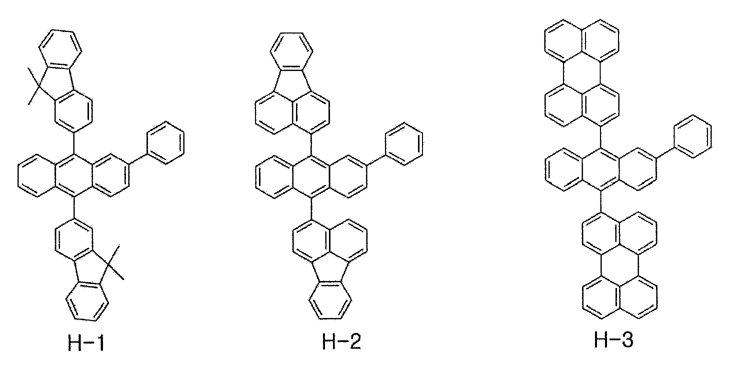

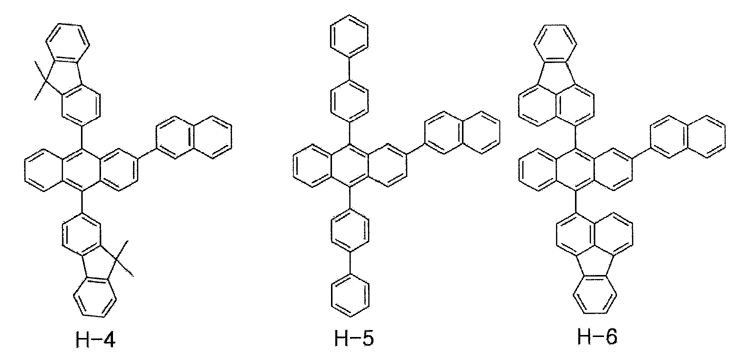

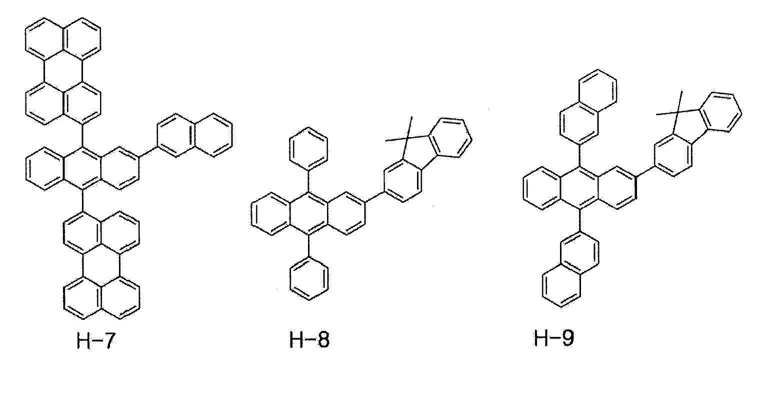

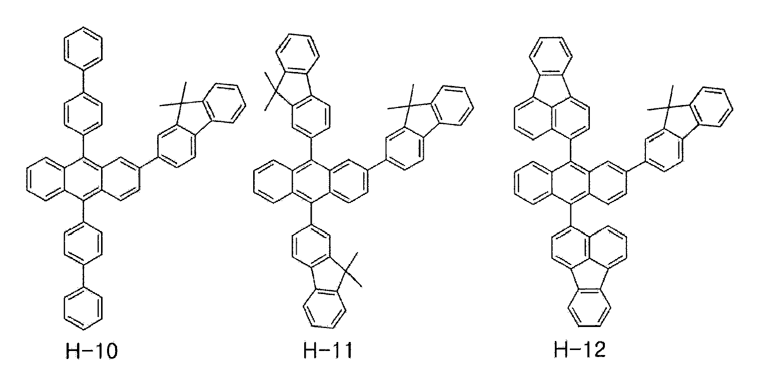

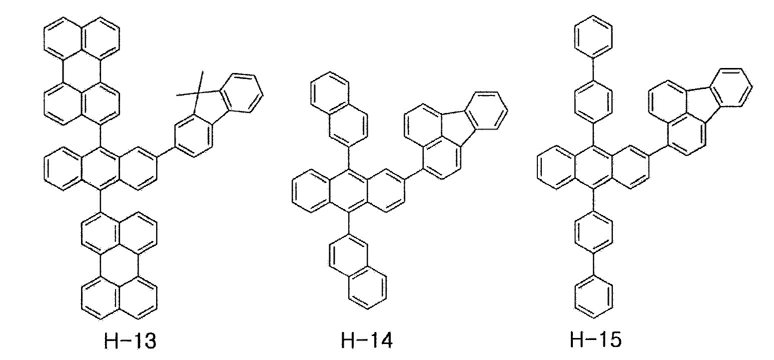

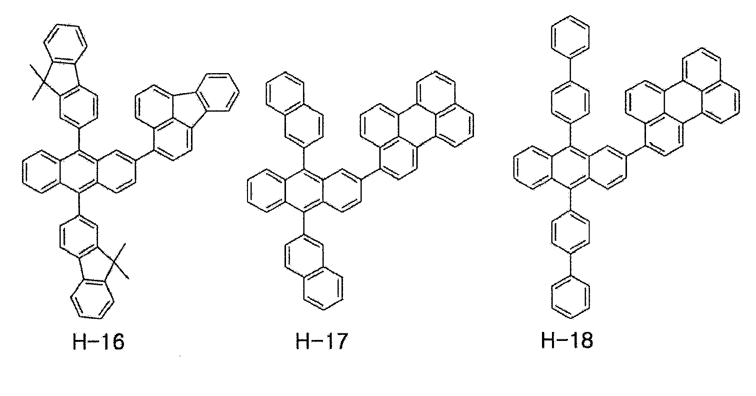

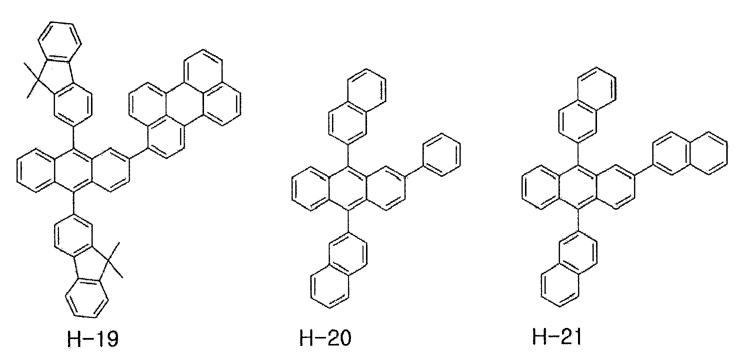

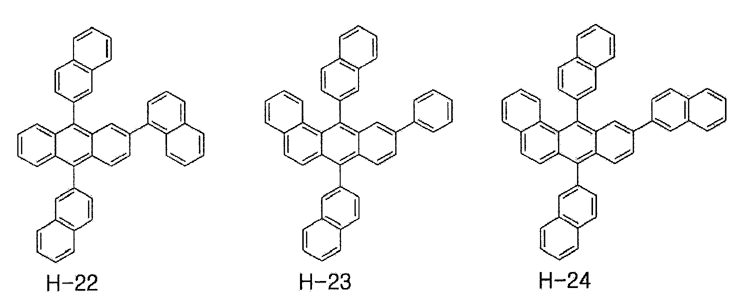

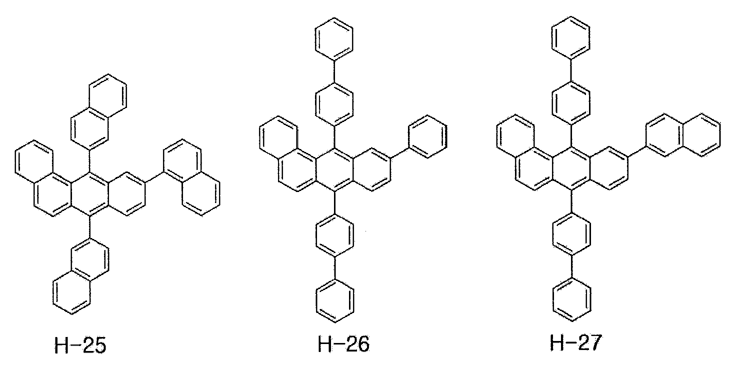

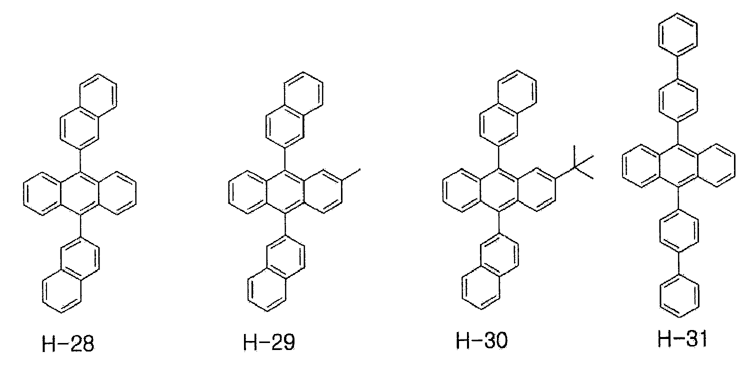

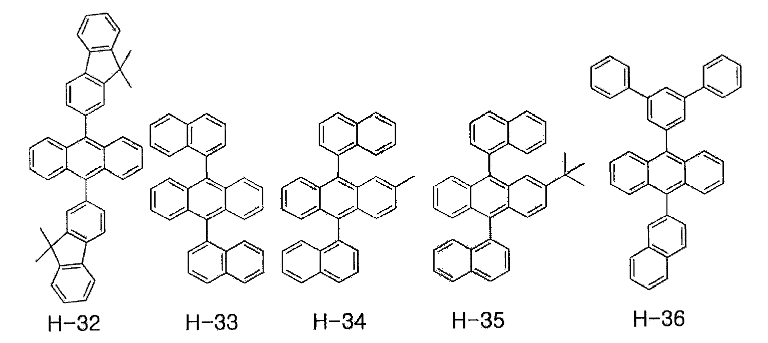

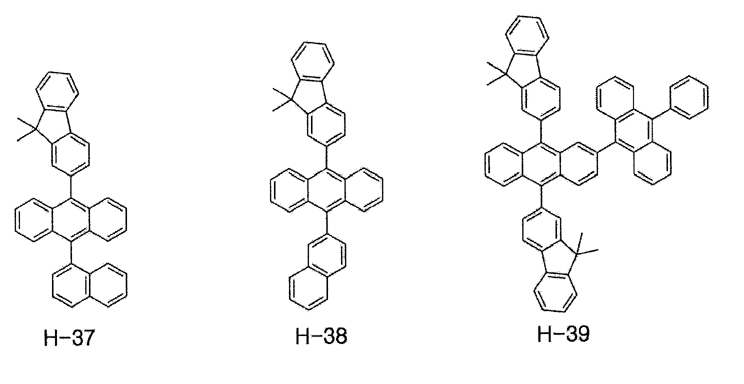

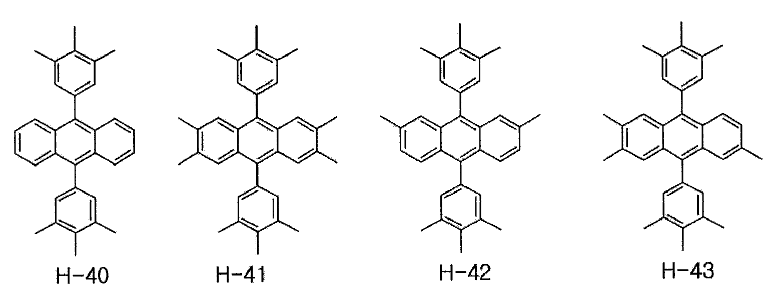

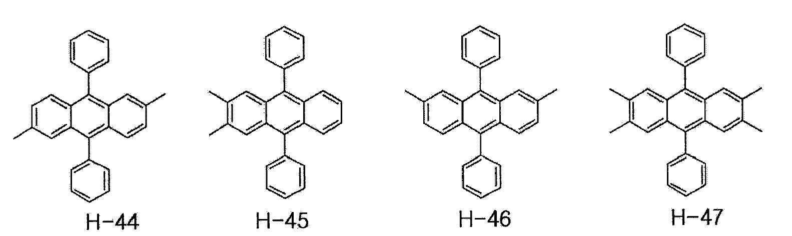

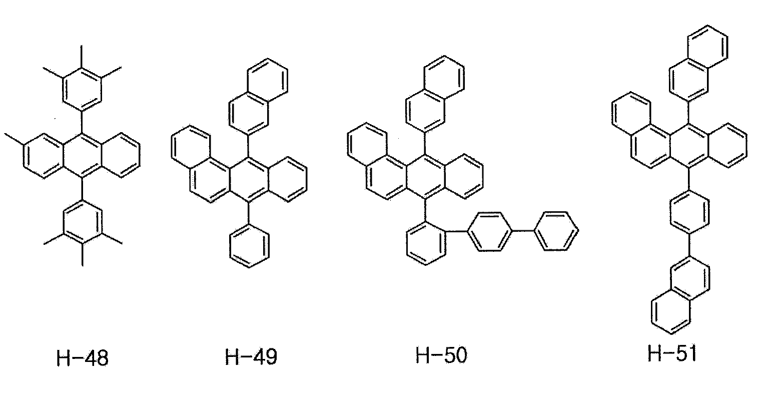

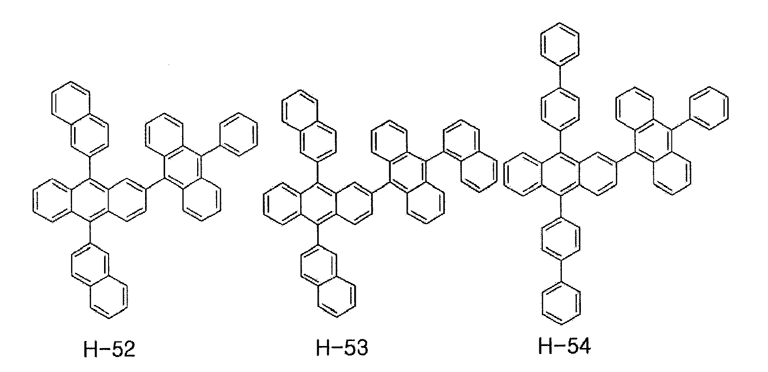

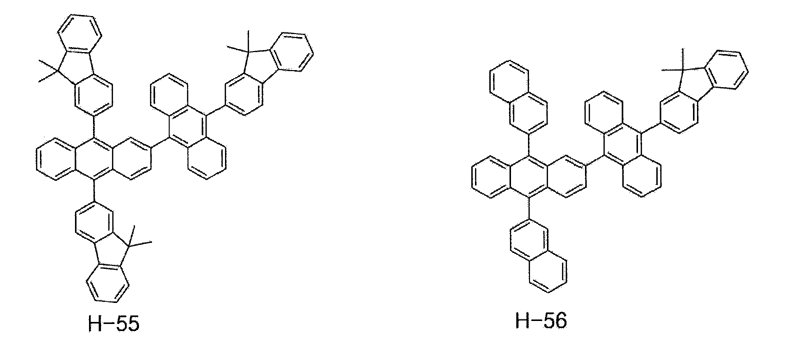

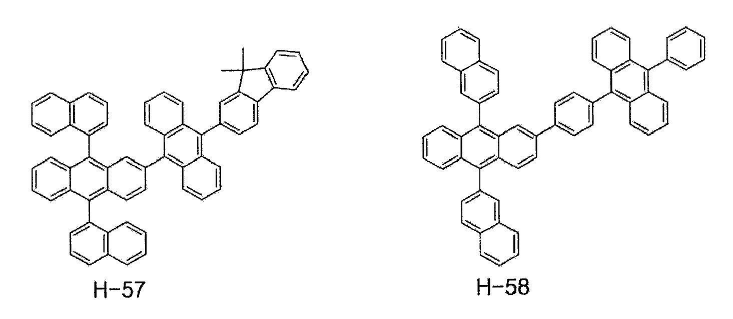

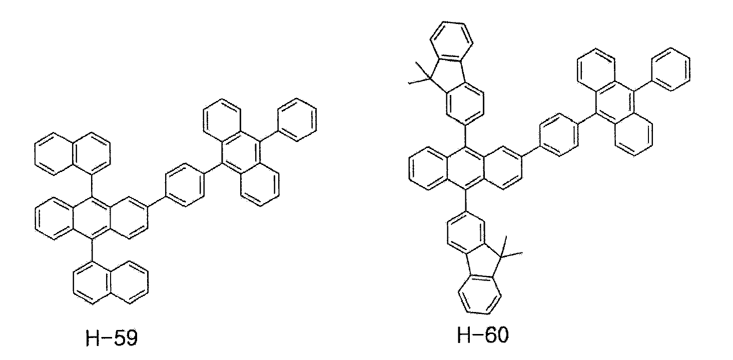

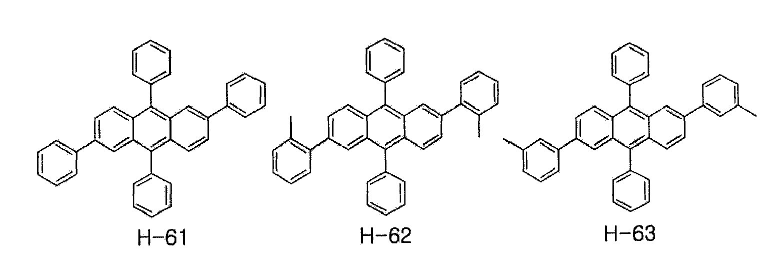

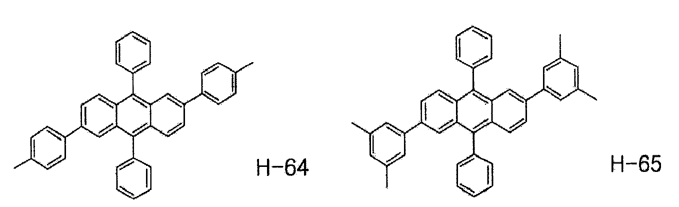

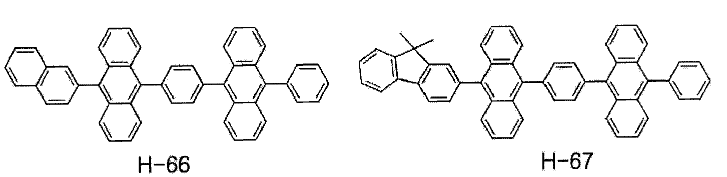

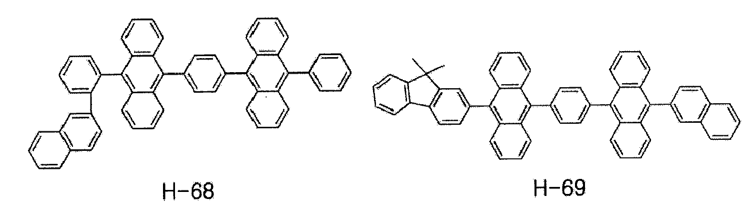

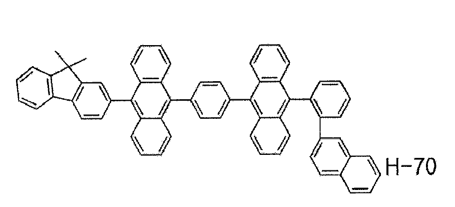

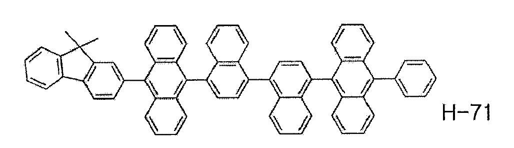

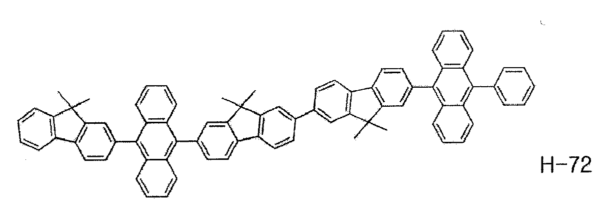

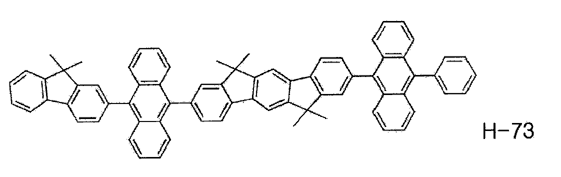

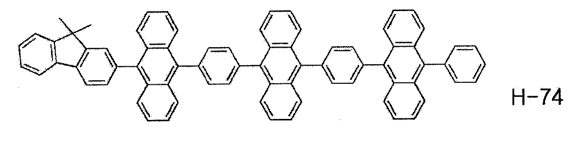

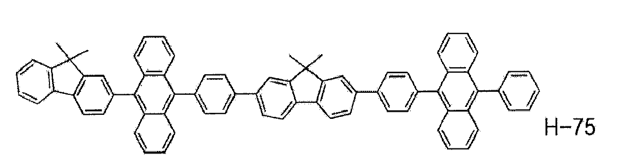

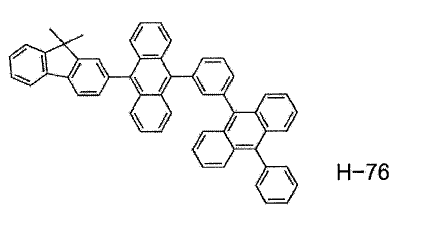

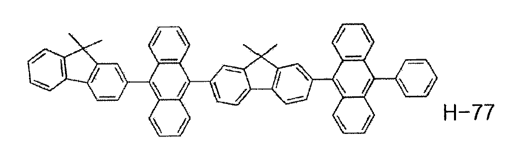

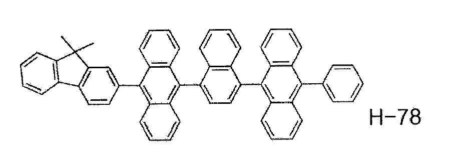

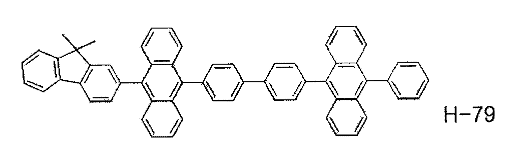

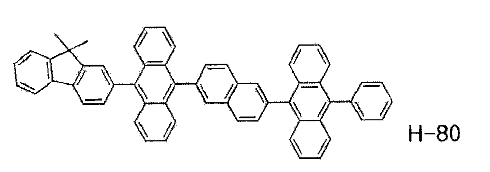

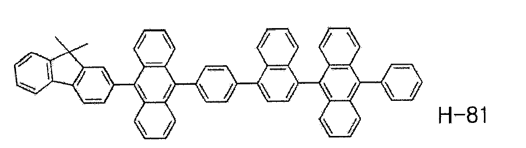

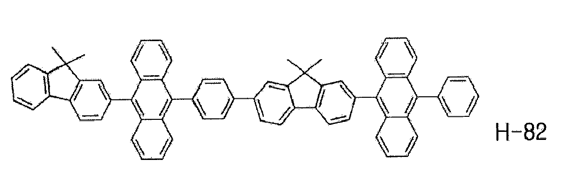

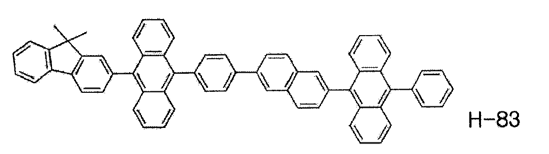

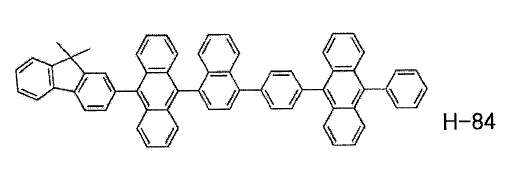

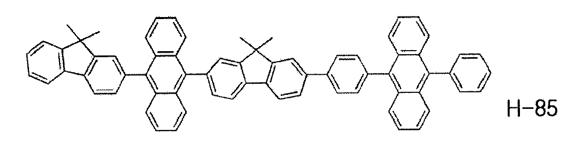

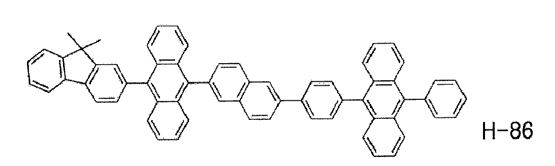

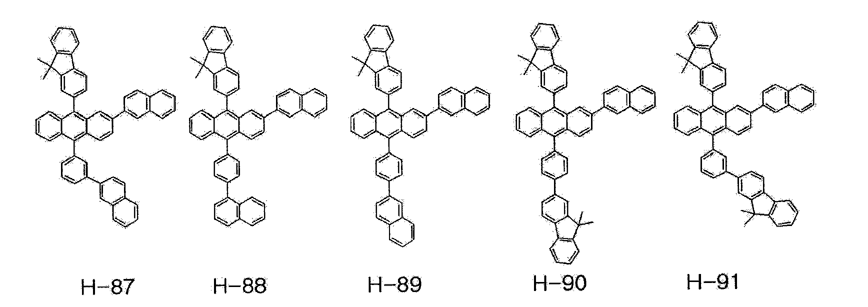

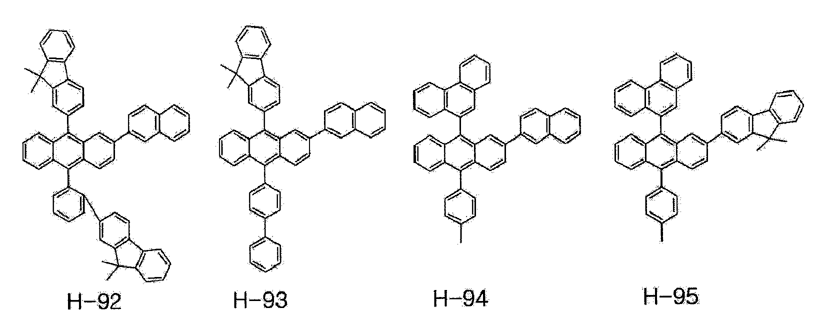

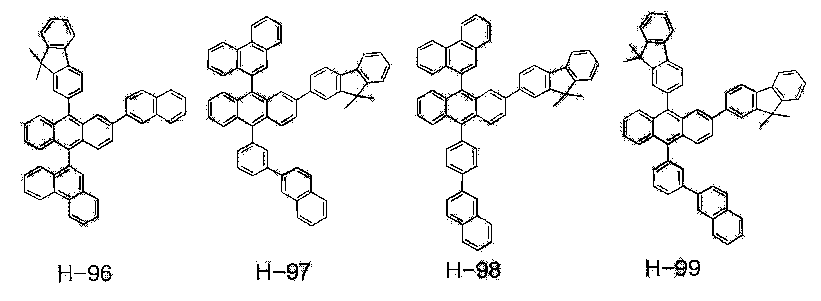

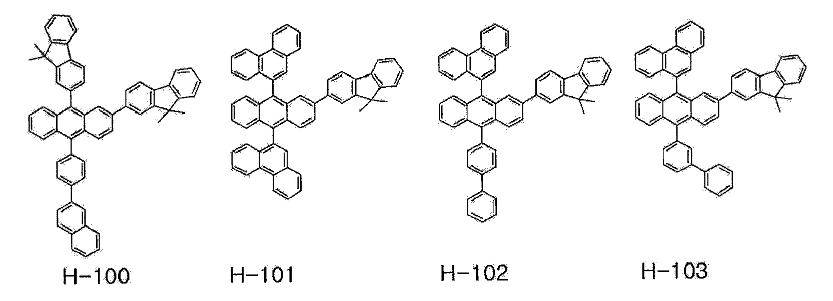

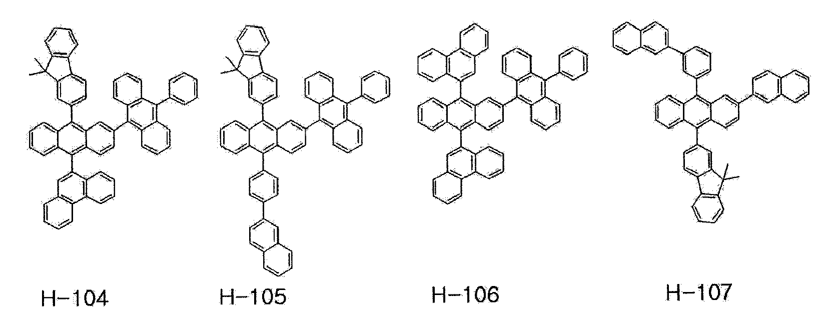

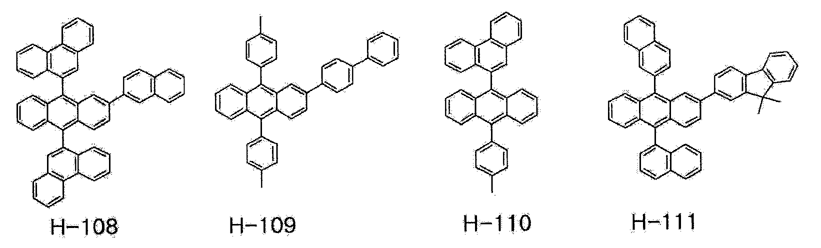

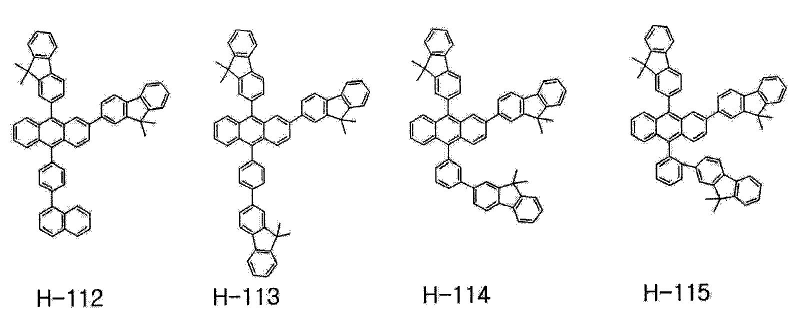

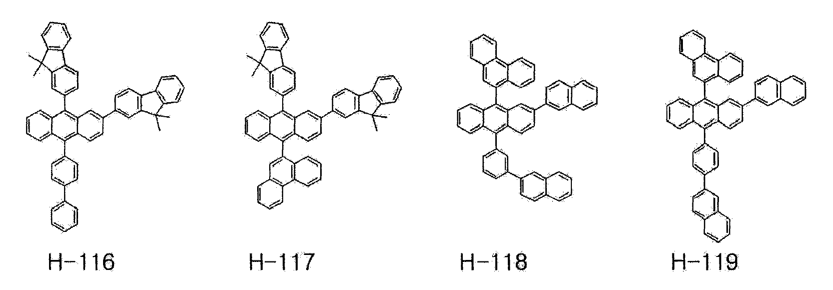

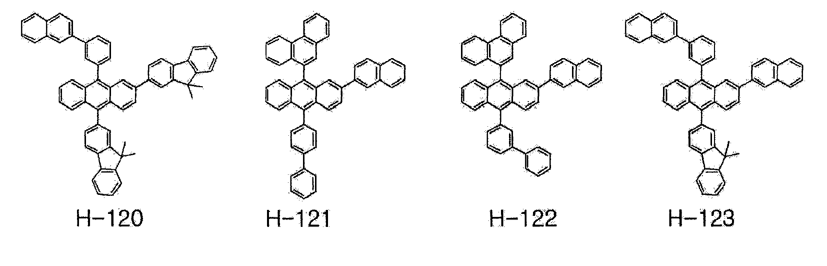

The organic electroluminescent device according to the present invention may further comprise one or more compound(s) selected from a group consisting of arylamine compounds and styrylarylamine compounds, as well as the organic electroluminescent compound represented by Chemical Formula (1). Examples of the arylamine or styrylarylamine compounds include the compounds represented by Chemical Formula (10), but they are not restricted thereto: 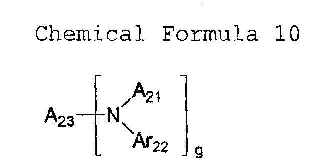 wherein, Ar₂₁ and Ar₂₂ independently represent (C1-C60)alkyl, (C6-C60)aryl, (C4-C60)heteroaryl, (C6-C60)arylamino, (C1-C60)alkylamino, morpholino or thiomorpholino, 5- or 6-membered heterocycloalkyl containing one or more heteroatom(s) selected from N, O and S, or (C3-C60)cycloalkyl, or Ar₂₁ and Ar₂₂ may be linked via (C3-C60)alkylene or (C3-C60)alkenylene with or without a fused ring to form an alicyclic ring, or a monocyclic or polycyclic aromatic ring; the aryl, heteroaryl, arylamino or heterocycloalkyl of Ar₂₁ and Ar₂₂ may be further substituted by one or more substituent(s) selected from halogen, (C1-C60)alkyl, (C2-C60)alkenyl, (C2-C60)alkynyl, (C6-C60)aryl, (C4-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C1-C60)alkyloxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl;
Ar₂₃ represents (C6-C60)aryl, (C5-C60)heteroaryl or (C6-C60)arylamino; the aryl, heteroaryl or arylamino of Ar₂₃ may be further substituted by one or more substituent(s) selected from halogen, (C1-C60)alkyl, (C6-C60)aryl, (C4-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; and
g is an integer from 1 to 4.

The arylamine compounds or styrylarylamine compounds can be more specifically exemplified by the following compounds, but they are not restricted thereto.

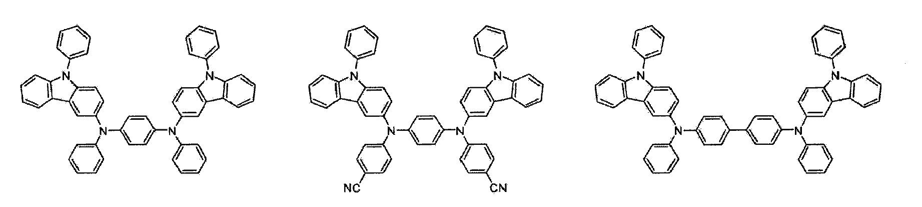

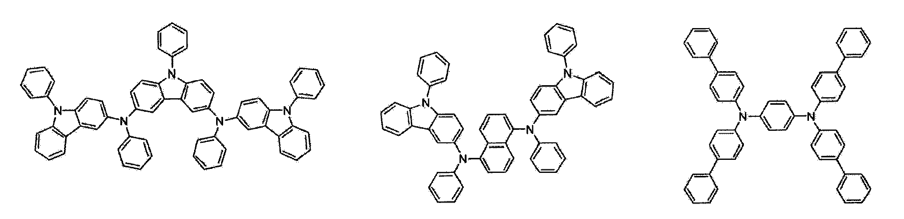

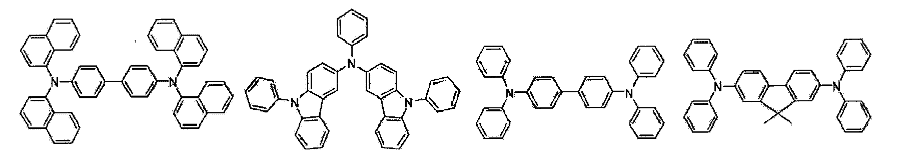

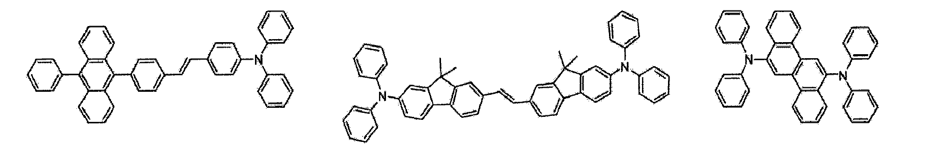

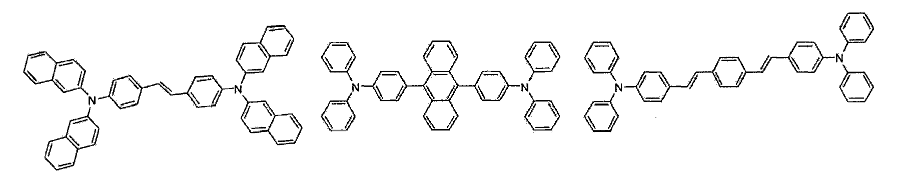

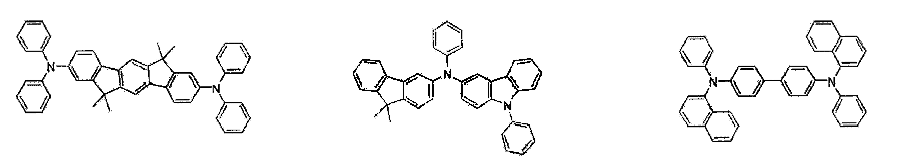

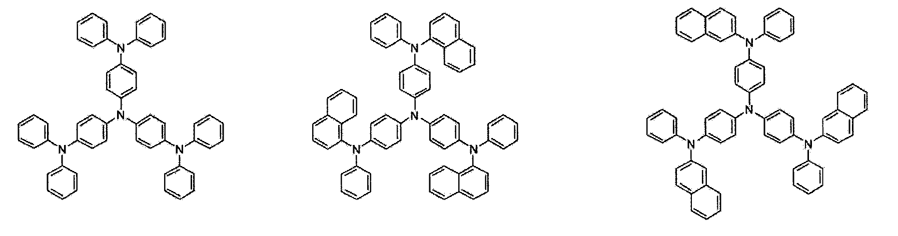

In an organic electroluminescent device according to the present invention, the organic layer may further comprise one or more metal(s) selected from a group consisting of organic metals of Group 1, Group 2, 4^{th} period and 5^{th} period transition metals, lanthanide metals and d-transition elements, as well as the organic electroluminescent compound represented by Chemical Formula (1). The organic layer may comprise a charge generating layer in addition to the electroluminescent layer.

The present invention can realize an organic electroluminescent device having a pixel structure of independent light-emitting mode, which comprises an organic electroluminescent device containing the compound of Chemical Formula (1) as a sub-pixel and one or more sub-pixel(s) comprising one or more metallic compound(s) selected from a group consisting of Ir, Pt, Pd, Rh, Re, Os, Tl, Pb, Bi, In, Sn, Sb, Te, Au and Ag, patterned in parallel at the same time.

Further, the organic electroluminescent device is an organic electroluminescent display wherein the organic layer comprises, in addition to the organic electroluminescent compound represented by Chemical Formula (1), one or more compound(s) selected from compounds having an electroluminescent peak at the wavelength of 480 to 560 nm, or those having an electroluminescent peak at the wavelength of 560 nm or more, at the same time. The compounds having an electroluminescent peak at the wavelength of 480 to 560 nm, or those having an electroluminescent peak at the wavelength of 560 nm or more may be exemplified by the compounds represented by one of Chemical Formulas (11) to (17), but they are not restricted thereto.

M¹L²¹L²²L²³ Chemical Formula 11

In Chemical Formula (11), M¹ is selected from metals from Group 7, 8, 9, 10, 11, 13, 14, 15 and 16 in the Periodic Table of Elements, and ligands L²¹, L²² and L²³ are independently selected from the following structures: 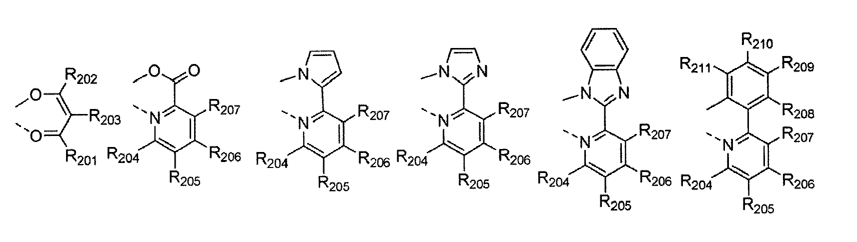 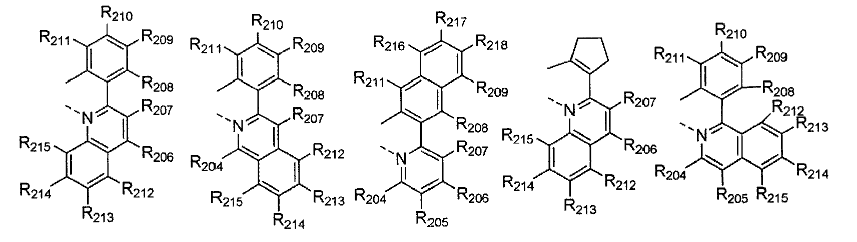 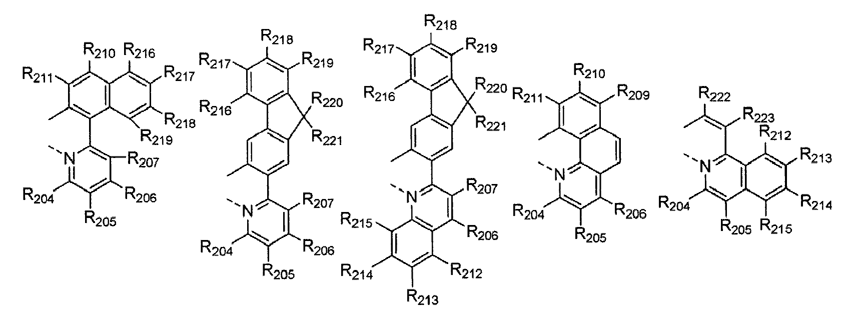 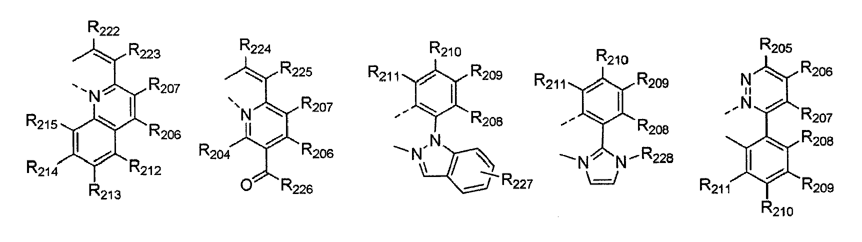 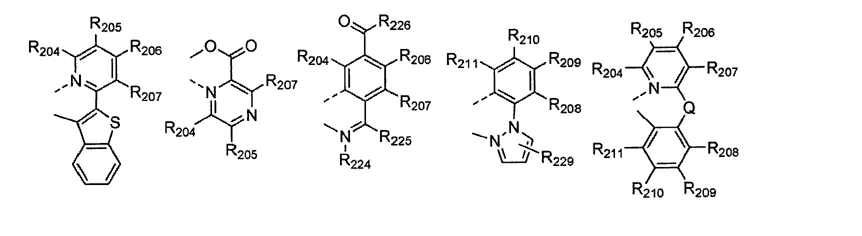 wherein, R₂₀₁ through R₂₀₃ independently represent hydrogen, (C1-C60)alkyl with or without halogen substituent(s), (C6-C60)aryl with or without (C1-C60)alkyl substituent(s), or halogen;
R₂₀₄ through R₂₁₉ independently represent hydrogen, (C1-C60)alkyl, (C1-C30)alkoxy, (C3-C60)cycloalkyl, (C2-C30)alkenyl, (C6-C60)aryl, mono or di(C1-C30)alkylamino, mono or di(C6-30)arylamino, SF₅, tri(C1-C30)alkylsilyl, di(C1-C30)alkyl(C6-C30)arylsilyl, tri(C6-C30)arylsilyl, cyano or halogen, and the alkyl, cycloalkyl, alkenyl or aryl of R₂₀₄ through R₂₁₉ may be further substituted by one or more substituent(s) selected from (C1-C60)alkyl, (C6-C60)aryl and halogen;
R₂₂₀ through R₂₂₃ independently represent hydrogen, (C1-C60)alkyl with or without halogen substituent(s), (C6-C60)aryl with or without (C1-C60)alkyl substituent(s);
R₂₂₄ and R₂₂₅ independently represent hydrogen, linear or branched (C1-C60)alkyl, (C6-C60)aryl or halogen, or R₂₂₄ and R₂₂₅ may be linked via (C3-C12)alkylene or (C3-C12)alkenylene with or without a fused ring to form an alicyclic ring, or a monocyclic or polycyclic aromatic ring; the alkyl or aryl of R₂₂₄ and R₂₂₅, or the alicyclic ring, or the monocyclic or polycyclic aromatic ring formed therefrom via (C3-C12)alkylene or (C3-C12)alkenylene with or without a fused ring may be further substituted by one or more substituent(s) selected from linear or branched (C1-C60)alkyl with or without halogen substituent(s), (C1-C30)alkoxy, halogen, tri(C1-C30)alkylsilyl, tri(C6-C30)arylsilyl and (C6-C60)aryl;
R₂₂₆ represents (C1-C60)alkyl, (C6-C60)aryl, (C5-C60)heteroaryl or halogen;
R₂₂₇ through R₂₂₉ independently represent hydrogen, (C1-C60)alkyl, (C6-C60)aryl or halogen; the alkyl or aryl of R₂₂₆ through R₂₂₉ may be further substituted by halogen or (C1-C60)alkyl;
Q represents 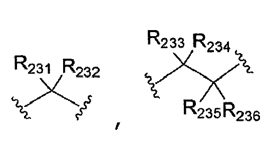 or 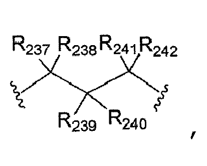 and R₂₃₁ through R₂₄₂ independently represent hydrogen, (C1-C60)alkyl with or without halogen substituent(s), (C1-C30)alkoxy, halogen, (C6-C60)aryl, cyano or (C5-C60)cycloalkyl, or each of R₂₃₁ through R₂₄₂ may be linked to an adjacent substituent via alkylene or alkenylene to form a (C5-C7) spiro-ring or a (C5-C9) fused ring, or each of them may be linked to R₂₀₇ or R₂₀₈ via alkylene or alkenylene to form a (C5-C7) fused ring.

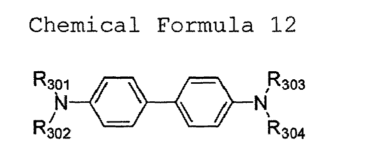

In Chemical Formula (12), R₃₀₁ through R₃₀₄ independently represent (C1-C60)alkyl or (C6-C60)aryl, or each of them may be linked to an adjacent substituent via (C3-C60)alkylene or (C3-C60)alkenylene with or without a fused ring to form an alicyclic ring, or a monocyclic or polycyclic aromatic ring; and the alkyl or aryl of R₃₀₁ through R₃₀₄, or the alicyclic ring, or the monocyclic or polycyclic aromatic ring formed therefrom by linkage via (C3-C60)alkylene or (C3-C60)alkenylene with or without a fused ring may be further substituted by one or more substituent(s) selected from (C1-C60)alkyl with or without halogen substituent(s), (C1-C60)alkoxy, halogen, tri(C1-C60)alkylsilyl, tri(C6-C60)arylsilyl and (C6-C60)aryl.

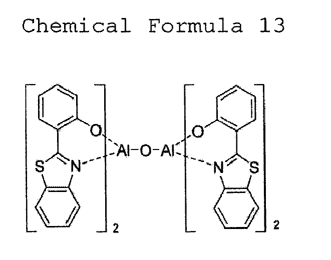

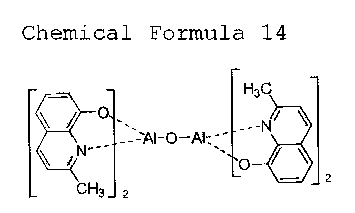

L²⁴L²⁵M²(T)ₕ Chemical Formula 15

In Chemical Formula (15), the ligands, L²⁴ and L²⁵ are independently selected from the following structures: 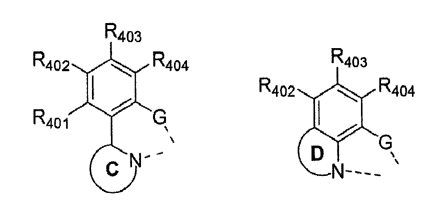 M² is a bivalent or trivalent metal;
h is 0 when M² is a bivalent metal, while h is 1 when M² is a trivalent metal;
T represents (C6-C60)aryloxy or tri(C6-C60)arylsilyl, and the aryloxy and triarylsilyl of T may be further substituted by (C1-C60)alkyl or (C6-C60)aryl;
G represents O, S or Se;
ring C represents oxazole, thiazole, imidazole, oxadiazole, thiadiazole, benzoxazole, benzothiazole, benzimidazole, pyridine or quinoline;
ring D represents pyridine or quinoline, and ring B may be further substituted by (C1-C60)alkyl, or phenyl or naphthyl with or without (C1-C60)alkyl substituent(s);
R₄₀₁ through R₄₀₄ independently represent hydrogen, (C1-C60)alkyl, halogen, tri(C1-C60)alkylsilyl, tri(C6-C60)arylsilyl or (C6-C60)aryl, or each of them may be linked to an adjacent substituent via (C3-C60)alkylene or (C3-C60)alkenylene to form a fused ring; the pyridine or quinoline may form a chemical bond with R₄₀₁ to form a fused ring; and
ring C or the aryl group of R₄₀₁ through R₄₀₄ may be further substituted by (C1-C60)alkyl, halogen, (C1-C60)alkyl with halogen substituent(s), phenyl, naphthyl, tri(C1-C60)alkylsilyl, tri(C6-C60)arylsilyl or amino group.

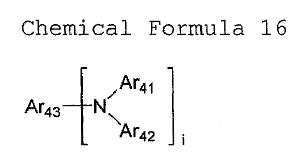

In Chemical Formula (16), Ar₄₁ and Ar₄₂ independently represent (C1-C60)alkyl, (C6-C60)aryl, (C4-C60)heteroaryl, (C6-C60)arylamino, (C1-C60)alkylamino, 5- or 6-membered heterocycloalkyl containing one or more heteroatom(s) selected from N, O and S, or (C3-C60)cycloalkyl, or Ar₄₁ and Ar₄₂ may be linked via (C3-C60)alkylene or (C3-C60)alkenylene with or without a fused ring to form an alicyclic ring, or a monocyclic or polycyclic aromatic ring; the alkyl, aryl, heteroaryl, arylamino, alkylamino, cycloalkyl or heterocycloalkyl of Ar₄₁ and Ar₄₂ may be further substituted by one or more substituent(s) selected from halogen, (C1-C60)alkyl, (C6-C60)aryl, (C4-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl;
Ar₄₃ represents (C6-C60)arylene, (C4-C60)heteroarylene or arylene represented by one of the following structural formulas: 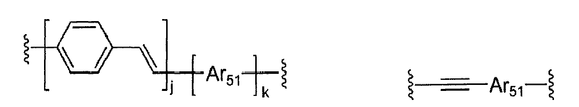 wherein, Ar₅₁ represents (C6-C60)arylene or (C4-C60)heteroarylene,
the arylene or heteroarylene of Ar₄₃ and Ar₅₁ may be further substituted by one or more substituent(s) selected from a group consisting of halogen, (C1-C60)alkyl, (C6-C60)aryl, (C4-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkyloxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl;
i is an integer from 1 to 4;
j is an integer from 1 to 4; and
k is an integer of 0 or 1.

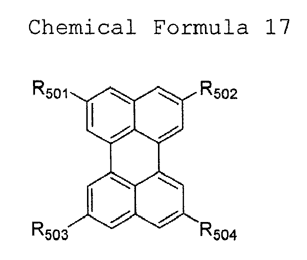

In Chemical Formula (17), R₅₀₁ through R₅₀₄ independently represent hydrogen, halogen, (C1-C60)alkyl, (C6-C60)aryl, (C4-C60)heteroaryl, a 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or each of R₅₀₁ through R₅₀₄ may be linked to an adjacent substituent via (C3-C60)alkylene or (C3-C60)alkenylene with or without a fused ring to form an alicyclic ring, or a monocyclic or polycyclic aromatic ring; and
the alkyl, alkenyl, alkynyl, cycloalkyl, heterocycloalkyl, aryl, heteroaryl, arylsilyl, alkylsilyl, alkylamino or arylamino of R₅₀₁ through R₅₀₄, or the alicyclic ring, or the monocyclic or polycyclic aromatic ring formed therefrom by linkage to an adjacent substituent via (C3-C60)alkylene or (C3-C60)alkenylene with or without a fused ring may be further substituted by one or more substituent(s) selected from halogen, (C1-C60)alkyl, (C6-C60)aryl, (C4-C60)heteroaryl, a 5-or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl.

The compounds having an electroluminescent peak at the wavelength of 480 to 560 nm and a compound having an electroluminescent peak at the wavelength longer than 560 nm, can be exemplified by the following compounds, but they are not restricted thereto.

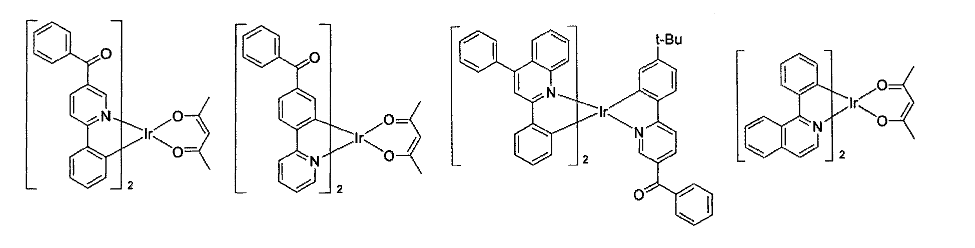

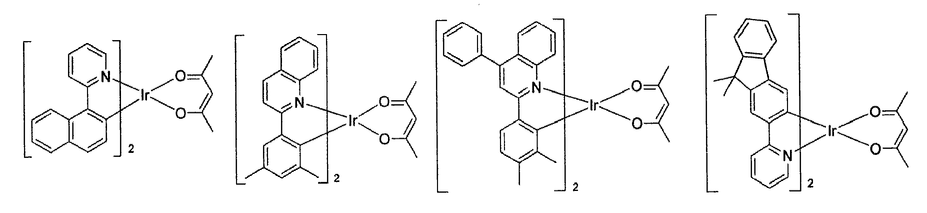

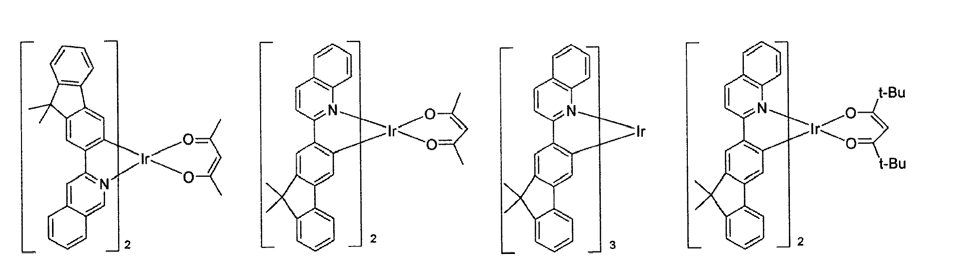

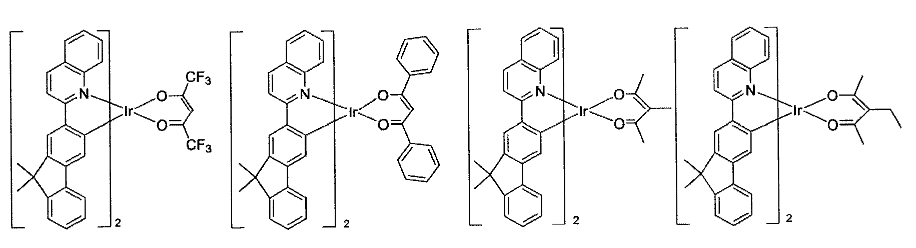

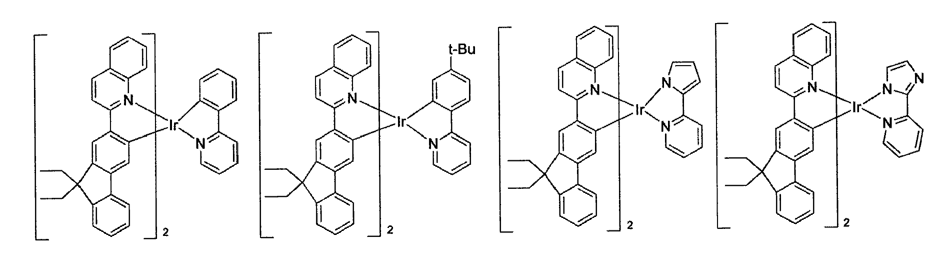

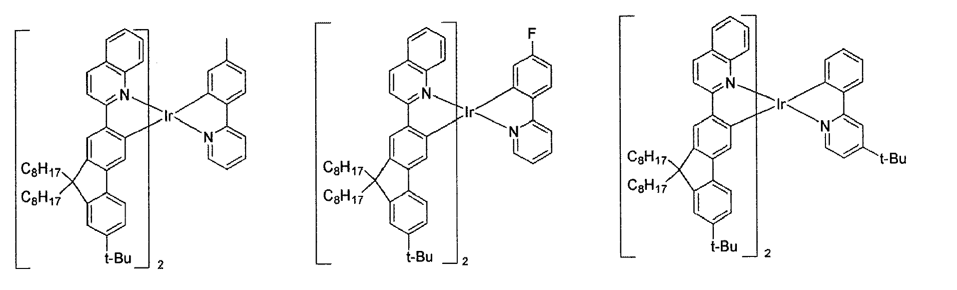

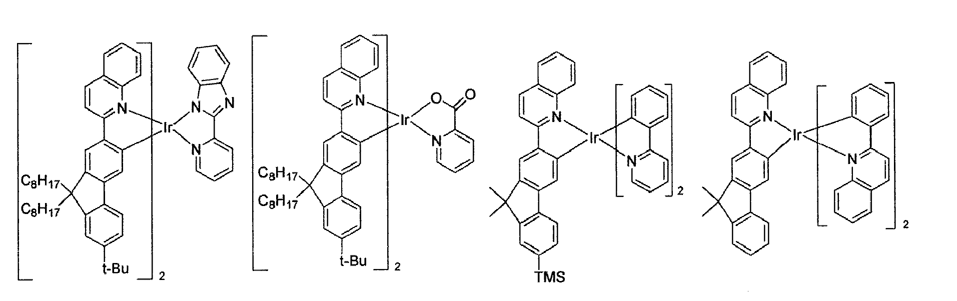

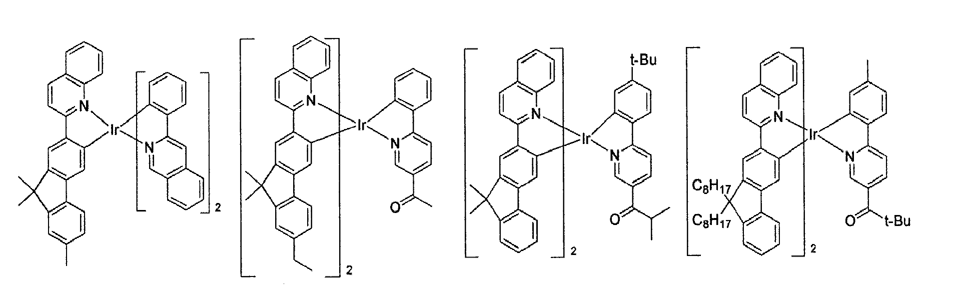

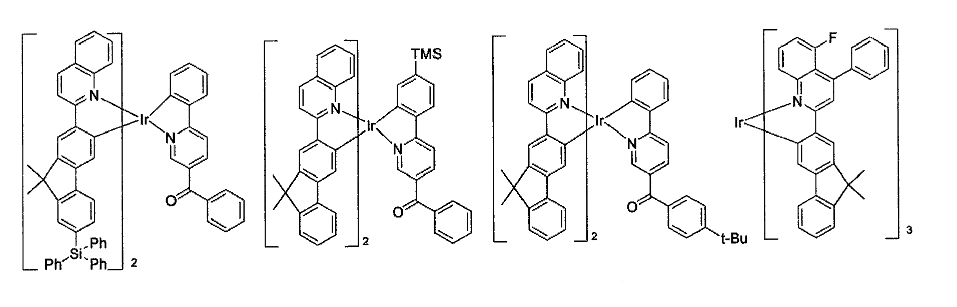

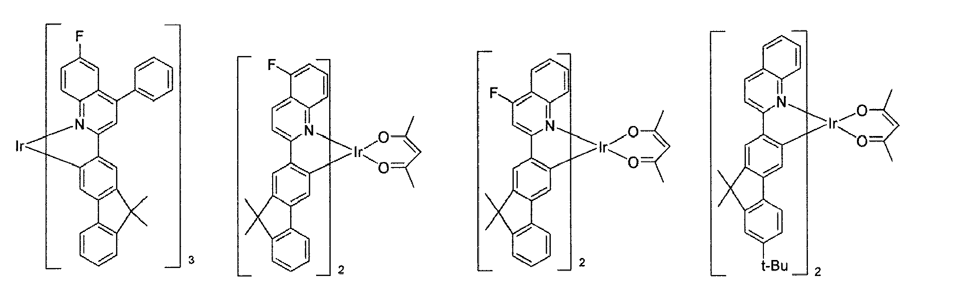

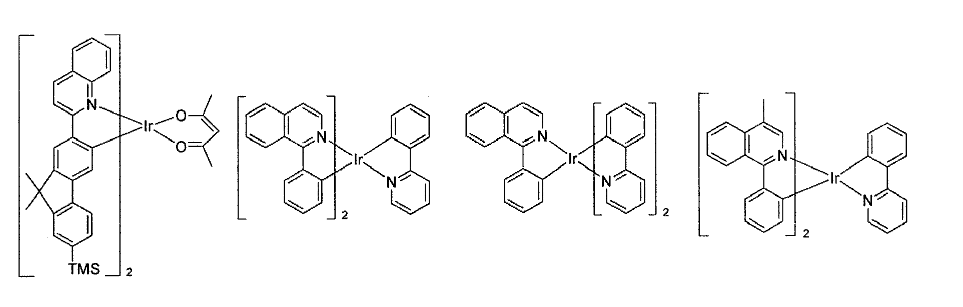

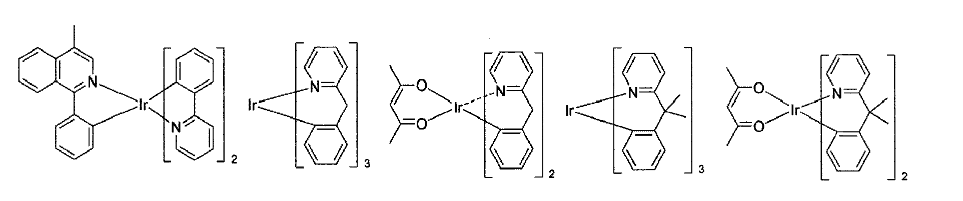

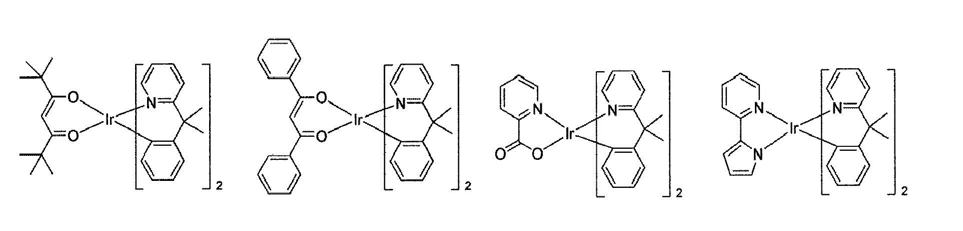

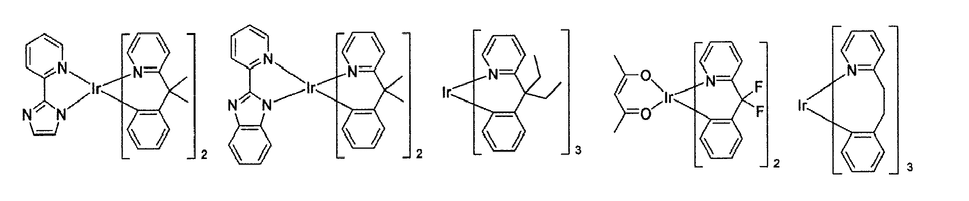

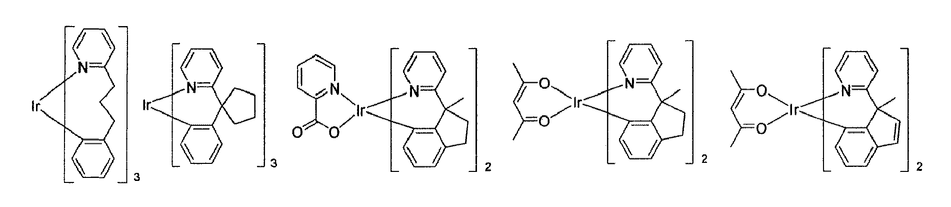

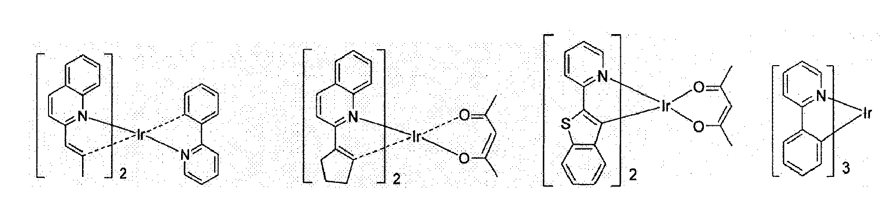

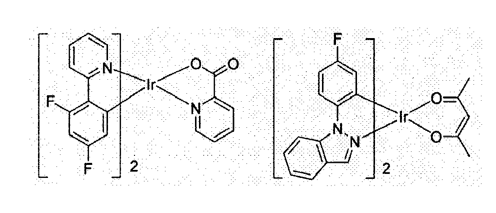

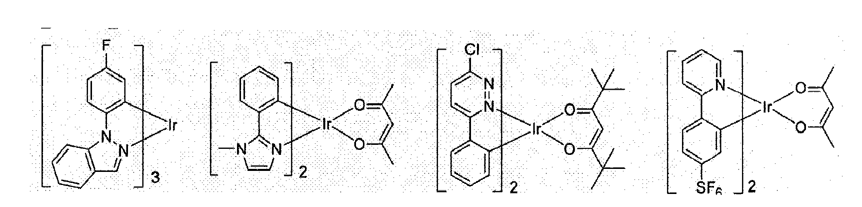

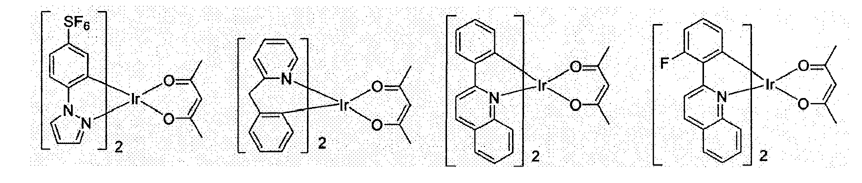

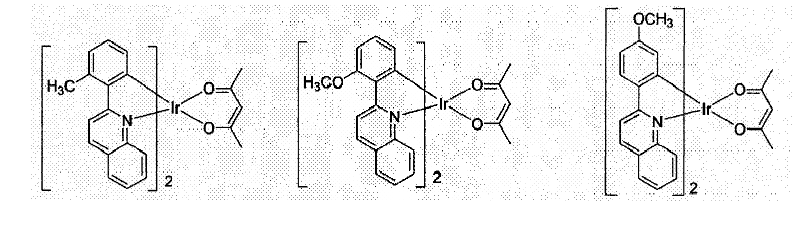

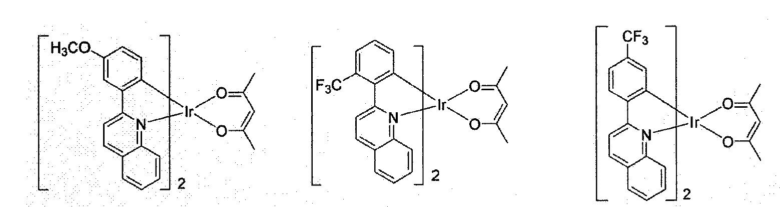

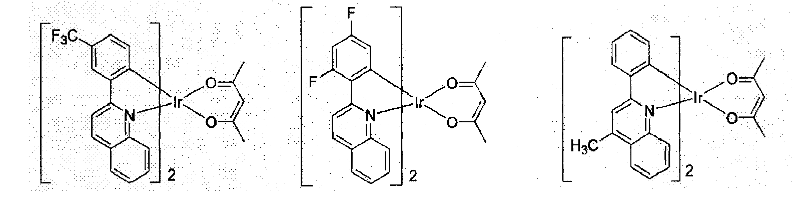

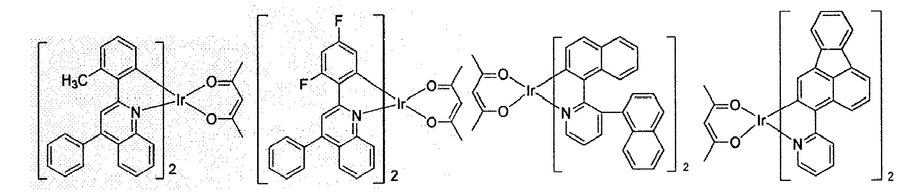

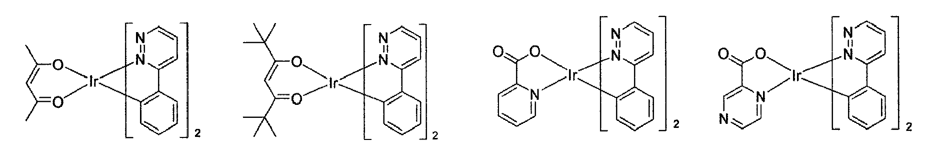

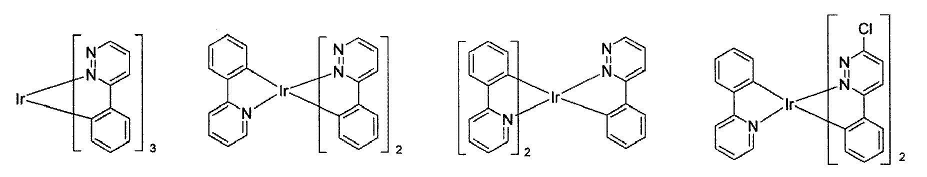

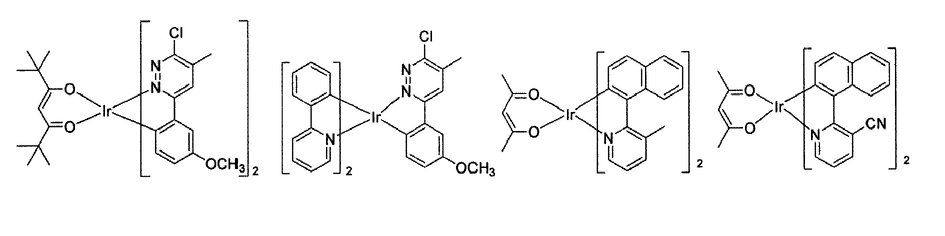

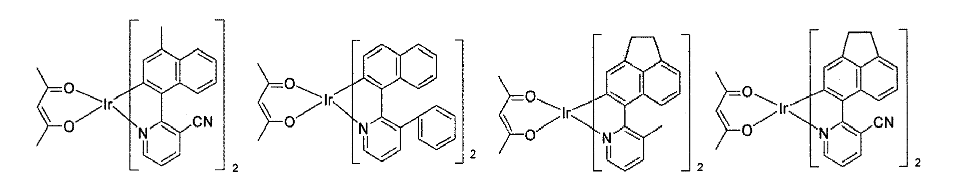

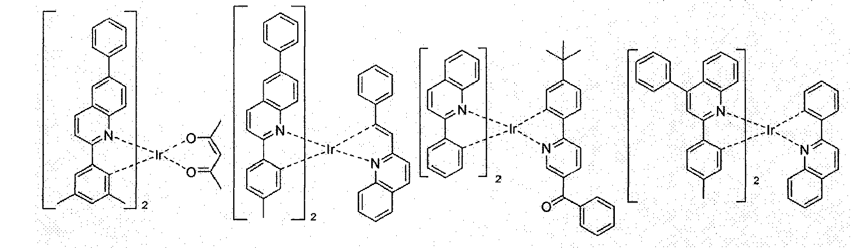

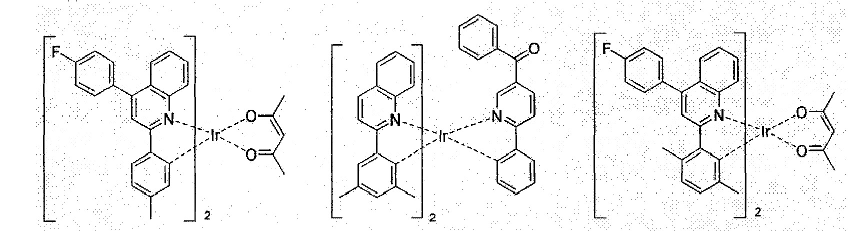

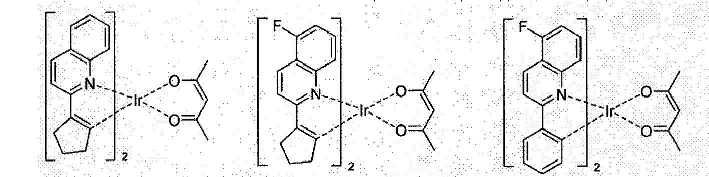

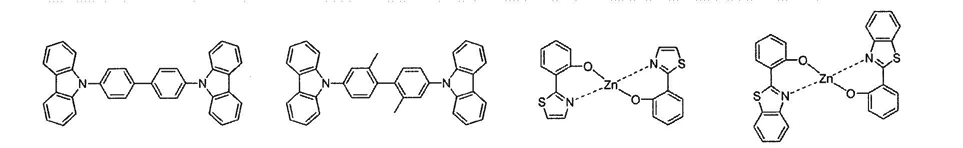

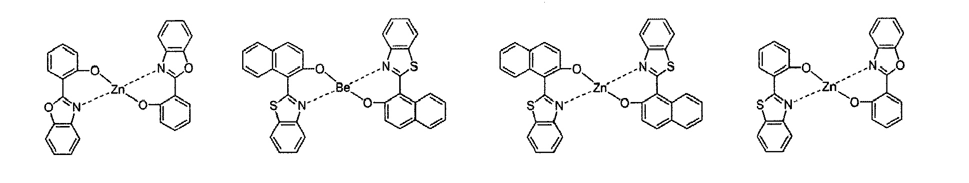

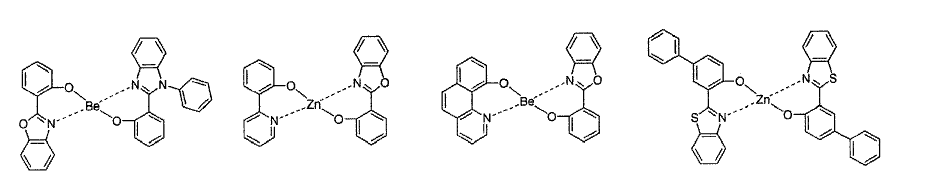

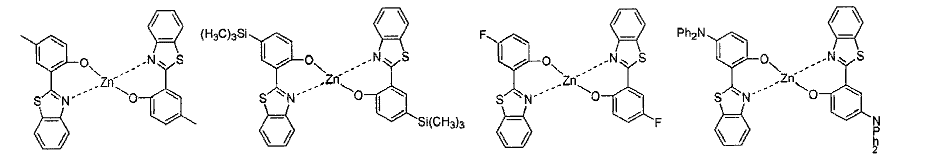

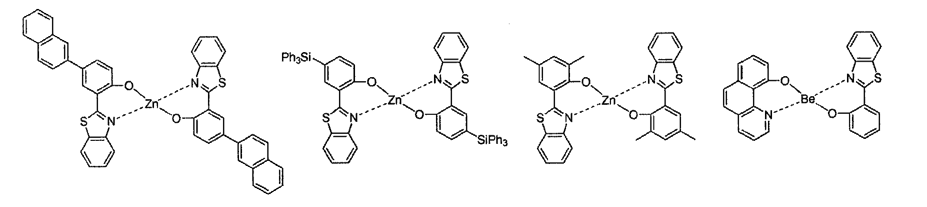

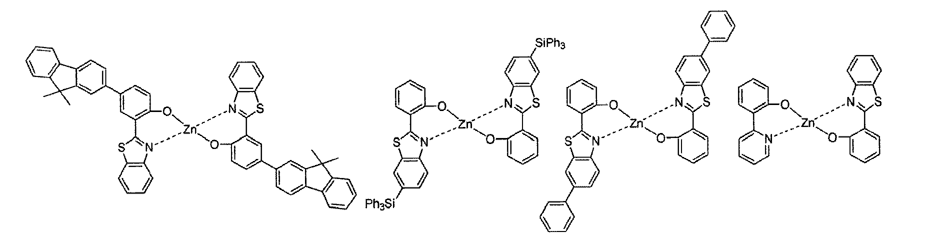

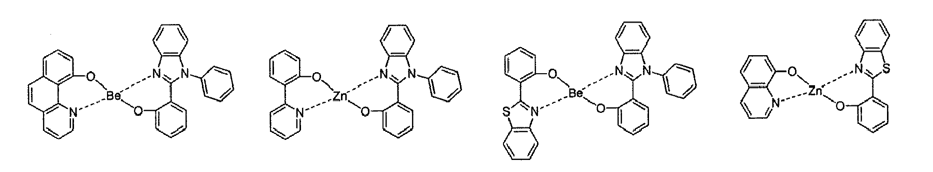

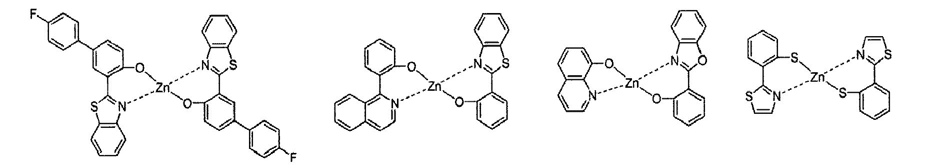

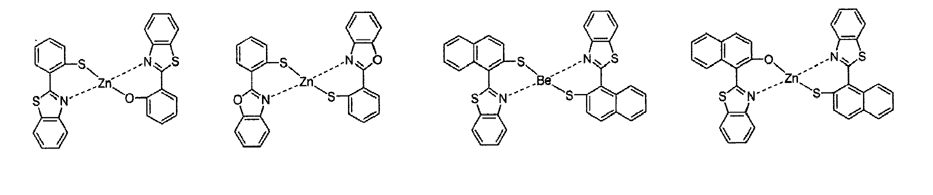

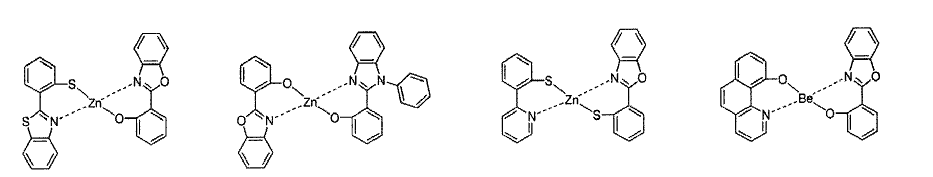

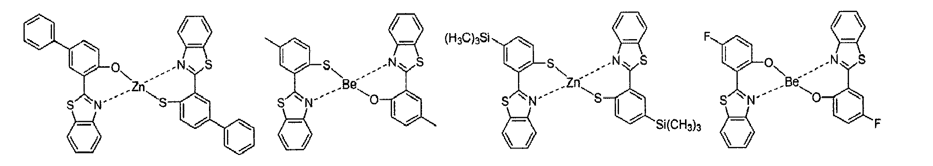

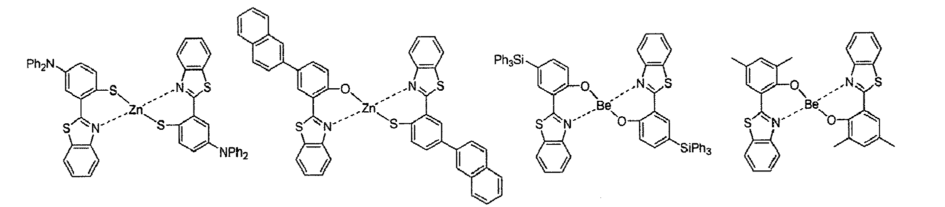

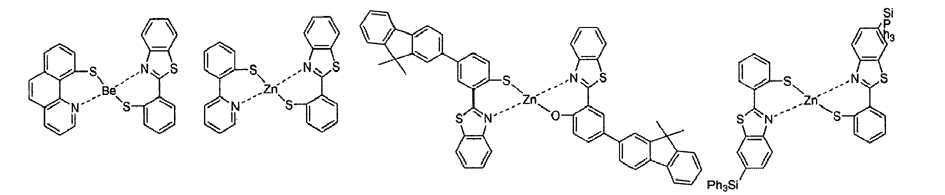

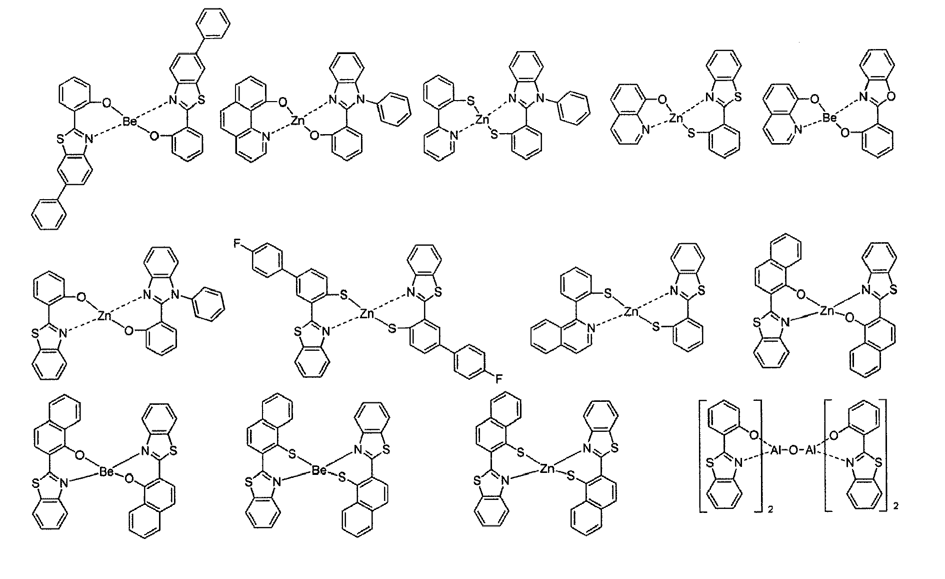

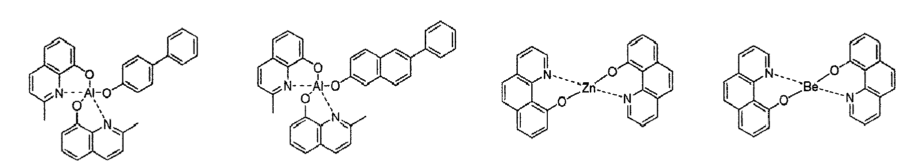

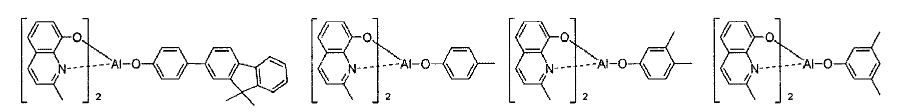

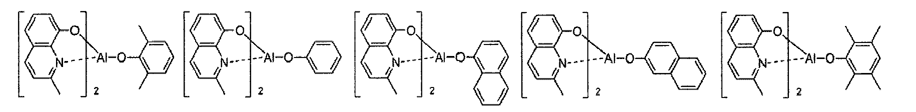

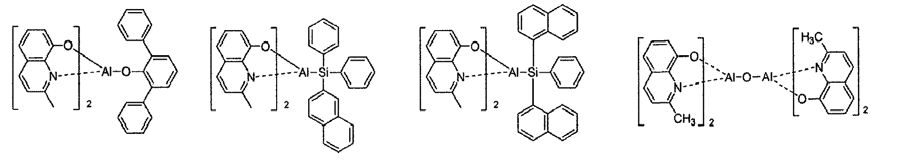

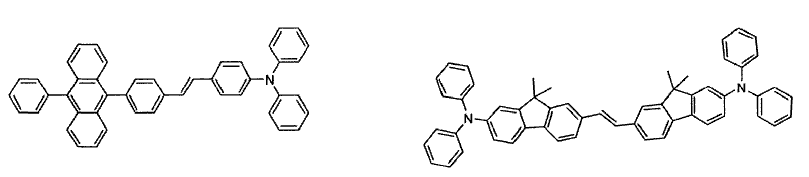

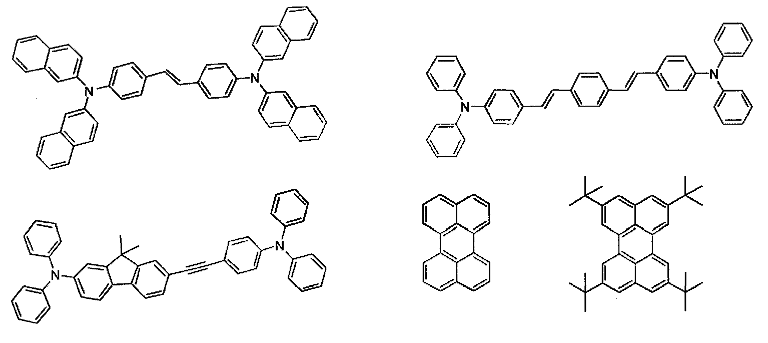

In an organic electroluminescent device according to the present invention, it is preferable to arrange one or more layer(s) (here-in-below, referred to as the "surface layer") selected from chalcogenide layers, metal halide layers and metal oxide layers, on the inner surface of at least one side of the pair of electrodes. Specifically, it is preferable to arrange a chalcogenide layer of silicon and aluminum metal (including oxides) on the anode surface of the EL medium layer, and a metal halide layer or a metal oxide layer on the cathode surface of the EL medium layer. As the result, stability in operation can be obtained.

Examples of chalcogenides preferably include SiOₓ (1≤X≤2), AlOₓ (1≤X≤1.5), SiON, SiAlON, or the like. Examples of metal halides preferably include LiF, MgF₂, CaF₂, fluorides of rare earth metal or the like. Examples of metal oxides preferably include Cs₂O, Li₂O, MgO, SrO, BaO, CaO, or the like.

In an organic electroluminescent device according to the present invention, it is also preferable to arrange, on at least one surface of the pair of electrodes thus manufactured, a mixed region of electron transport compound and a reductive dopant, or a mixed region of a hole transport compound with an oxidative dopant. Accordingly, the electron transport compound is reduced to an anion, so that injection and transportation of electrons from the mixed region to an EL medium are facilitated. In addition, since the hole transport compound is oxidized to form a cation, injection and transportation of holes from the mixed region to an EL medium are facilitated. Preferable oxidative dopants include various Lewis acids and acceptor compounds. Preferable reductive dopants include alkali metals, alkali metal compounds, alkaline earth metals, rare-earth metals, and mixtures thereof.

The organic electroluminescent compounds according to the present invention exhibit high luminous efficiency and excellent life property of material, so that an OLED having very good operation life can be manufactured therefrom.

### Best Mode

The present invention is further described by referring to representative compounds with regard to the organic electroluminescent compounds according to the invention, preparation thereof and luminescent properties of the devices manufactured therefrom, but those examples are provided for illustration of the embodiments only, not being intended to limit the scope of the invention by any means.

### Preparation Examples

[Preparation Example 1] Preparation of Compound (154)

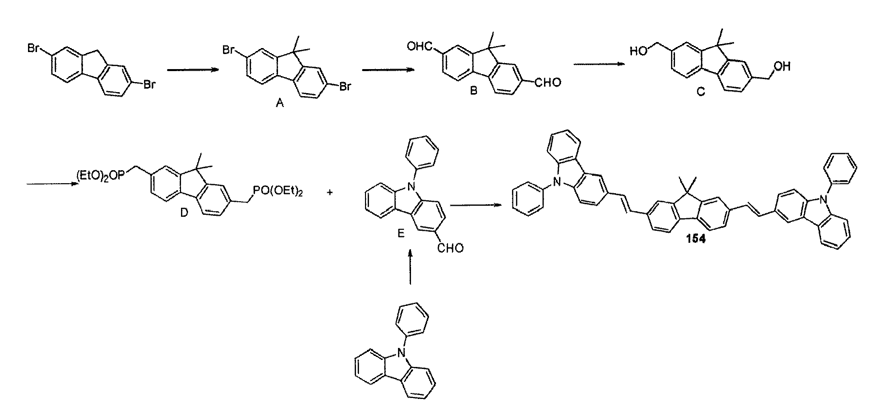

### Preparation of Compound (A)

A reaction vessel was charged with 2,7-dibromofluorene (30.2 g, 100 mmol) and potassium hydroxide (45 g, 80 mmol). After drying under reduced pressure, the vessel was filled with nitrogen gas. Dimethylsulfoxide (550 mL) was added thereto, and the resultant mixture was stirred for 30 minutes. After 30 minutes, water was added thereto in a double water boiler. Iodomethane (57 g, 400 mmol) was slowly added, and the mixture was stirred for 14 hours. The reaction mixture was washed with water (300 mL), and extracted with dichloromethane (300 mL). The extract was dried over anhydrous magnesium sulfate, filtered and concentrated. Recrystallization from methanol (500 mL) gave the target compound (Compound A) (30 g, 85.21 mmol).

### Preparation of Compound (B)

Compound (A) (20.0 g, 56.81 mmol) thus obtained was dissolved in tetrahydrofuran (1000 mL), and the solution was chilled to -78°C. Then 2.5 M butyllithium (n-BuLi) (56.81 mL, 142.02 mmol) was slowly added dropwise thereto. After stirring for 30 minutes, N,N-dimethylformamide (DMF) (13.19 mL, 170.43 mmol) was added thereto. The mixture was stirred for 2 hours while slowly raising the temperature and the reaction was quenched by adding aqueous NH₄Cl solution (800 mL) and distilled water (800 mL). The organic layer was separated and evaporated under reduced pressure. Recrystallization from methanol and hexane gave Compound (B) (11.09 g, 44.31 mmol).

### Preparation of Compound (C)

A reaction vessel was charged with Compound (B) (11.09 g, 44.31 mmol) and NaBH₄ (2.5 g, 66.47 mmol). After removing the air under reduced pressure, the vessel was filled with nitrogen gas. Tetrahydrofuran solvent (600 mL) was added thereto, and the resultant mixture was stirred. While stirring, methanol (350 mL) was slowly added dropwise. When the reaction was completed, the reaction mixture was washed with water (1000 mL), and extracted with ethyl acetate. Purification via column chromatography by using dichloromethane and hexane gave the target compound (Compound C) (8.45 g, 33.12 mmol).

### Preparation of Compound (D)

A reaction vessel was charged with Compound (C) (5.0 g, 19.66 mmol). After removing air therein under reduced pressure, the vessel was filled with nitrogen gas. Then 5 mL portion of triethylphosphite (10.15 mL, 58.98 mmol) was added thereto to obtain complete dissolution. Another reaction vessel was charged with remaining triethylphosphite (5.15 mL), which was stirred at 0°C for 30 minutes while slowly adding I₂ (9.98 g, 39.32 mmol) with the lid open. The mixture of iodine and triethylphosphite was added to the reaction vessel containing Compound (C). The resultant mixture was heated to 150°C, and stirred for 4 hours. When the reaction was completed, triethylphosphite was removed by distillation under reduced pressure. The residue was washed with water 50 mL, and extracted with ethyl acetate (50 mL). Recrystallization from methanol gave Compound (D) (13.59 g, 27.48 mmol).

### Preparation of Compound (E)

A reaction vessel was charged with N,N-dimethylformamide (26.62 mL, 352.24 mmol). After drying under reduced pressure, the vessel was filled with nitrogen gas. Phosphorus oxychloride (16.09 mL, 172.62 mmol) was slowly added dropwise thereto at 0°C. Then the temperature was raised to 25°C, and stirring continued. After 2 hours, N-phenyl-carbazole (14.0 g, 57.54 mmol) was directly added in solid state. After 30 minutes, the mixture was heated and distilled at 90°C with stirring for 18 hours. Then the reaction vessel was cooled to 25°C, and the reaction mixture was slowly added dropwise to concentrated sodium hydroxide solution in a bath at 0°C to neutralize the mixture. The mixture was extracted with dichloromethane (300 mL), and the extract was dried over anhydrous magnesium sulfate, filtered and concentrated. Purification via column chromatography by using ethyl acetate and hexane gave the target compound (Compound E) (12.3 g, 45.34 mmol).

### Preparation of Compound (154)

A reaction vessel was charged with Compound (D) (5.1 g, 9.72 mmol) and Compound (E) (5.8 g, 21.37 mmol), and dried under reduced pressure. Under nitrogen atmosphere, tetrahydrofuran solvent (200 mL) was added thereto, and the mixture stirred. Solution of potassium tert-butoxide (t-BuOK) (4.14 g, 37.17 mmol) dissolved in tetrahydrofuran (30 mL) was slowly added dropwise thereto at 0°C, and the temperature was slowly raised to ambient temperature. After stirring for 4 hours and the reaction was completed, water (500 mL) was poured thereto, and the solid produced was filtered. The solid was washed three times with methanol (1 L). Recrystallization from tetrahydrofuran and methanol and washing with hexane gave the target compound (Compound 154) (5.00 g, 6.6 mmol, yield: 68.0%).

The organic electroluminescent compounds (Compounds 1 to 725) were prepared according to the same procedure as in Preparation Example 1, of which ¹H NMR and MS/FAB data are listed in Table 1.

**Table 1**

| compound | ¹H NMR(CDCl₃, 200 MHz) | MS/FAB | |
|---|---|---|---|
| | | found | calculated |
| 1 | δ = 1.72(6H, s), 7.25∼7.33(11H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 829.0 | 828.4 |
| 2 | δ = 1.72(6H, s), 7.25∼7.33(11H, m), 7.5∼7.63(12H, m), 7.69(1H, m), 7.77(4H, m), 7.87∼8(5H, m), 8.08∼8.12(7H, m), 8.18(1H, m), 8.55(1H, m) | 929.2 | 928.4 |
| 3 | δ = 1.72(6H, s), 7.25∼7.36(13H, m), 7.5(1H, m), 7.59∼7.63(7H, m), 7.69(1 H, m), 7.77(4H, m), 7.83∼8(13H, m), 8.12(1H, m), 8.18(1H, m), 8.55(1H, m) | 929.2 | 928.4 |
| 5 | δ = 1.72(18H, s), 7.07(2H, m), 7.17(4H, m), 7.25∼7.34(15H, m), 7.5(1H, m), 7.63(3H, m), 7.69(1H, m), 7.77(4H, m), 7.87∼8(9H, m), 8.12(1H, m), 8.18(1H, m), 8.55(1 H, m) | 1061.4 | 1060.5 |
| 7 | δ = 1.72(6H, s), 2.34(12H, s), 7.25∼7.37(17H, m), 7.5(1H, m), 7.63(3H, m), 7.69(1H, m), 7.77(4H, m), 7.87∼8(5H, m), 8.12(1H, m), 8.18(1H, m), 8.55(1H, m) | 885.1 | 884.4 |
| 8 | δ = 1.72(6H, s), 2.34(6H, s), 7.24∼7.33(15H, m), 7.42(4H, m), 7.5(1H, m), 7.63(3H, m), 7.69(1H, m), 7.77(4H, m), 7.87∼8(5H, m), 8.12(1H, m), 8.18(1H, m), 8.55(1H, m) | 857.1 | 856.4 |
| 9 | δ = 1.35(18H, s), 1.72(6H, s), 7.25∼7.33(15H, m), 7.46∼7.5(5H, m), 7.63(3H, m), 7.69(1H, m), 7.77(4H, m), 7.87∼8(5H, m), 8.12(1H, m), 8.18(1H, m), 8.55(1H, m) | 941.2 | 940.5 |
| 10 | δ = 1.72(6H, s), 7.25∼7.33(11H, m), 7.4(2H, m), 7.5(1H, m), 7.63(3H, m), 7.69(1H, m), 7.77(4H, m), 7.87∼8.01(9H, m), 8.12(1H, m), 8.18(1H, m), 8.41(2H, m), 8.55(1H, m) | 831.0 | 830.3 |
| 51 | δ = 1.72(6H, s), 7.25(8H, m), 7.5∼7.52(4H, m), 7.63(2H, m), 7.77(2H, m), 7.86(2H, m), 7.93∼8(8H, m), 8.45(2H, m) | 710.9 | 710.2 |
| 53 | δ = 1.72(6H, s), 7.25(8H, m), 7.32∼7.38(4H, m), 7.63∼7.81(12H, m), 7.89∼7.93(4H, m) | 678.8 | 678.3 |
| 56 | δ = 1.72(6H, s), 2.88(8H, m), 6.58∼6.64(8H, m), 6.76∼6.81(4H, m), 7.02∼7.04(4H, m), 7.2∼7.25(12H, m), 7.36(2H, m), 7.6∼7.63(4H, m), 7.77(2H, m), 7.93(2H, m) | 885.1 | 884.4 |
| 57 | δ = 1.72(6H, s), 6.63(6H, m), 6.69(2H, m), 6.81(4H, m), 6.99∼7.05(6H, m), 7.2∼7.25(14H, m), 7.39(2H, m), 7.63(2H, m), 7.77∼7.82(4H, m), 7.93(2H, m) | 881.1 | 880.4 |
| 59 | δ = 1.72(6H, s), 3.81 (4H, s), 6.51(2H, m), 6.57∼6.63(6H, m), 6.69(2H, m), 6.81(2H, m), 6.98∼7.01(4H, m), 7.2∼7.25(12H, m), 7.35(2H, m), 7.54(2H, m), 7.63(2H, m), 7.77(2H, m), 7.93(2H, m) | 857.1 | 856.4 |
| 60 | δ = 1.72(6H, s), 6.59∼6.65(8H, m), 6.77∼6.81(4H, m), 6.89∼6.92(4H, m), 7.2∼7.26(16H, m), 7.63(2H, m), 7.77(2H, m), 7.93(2H, m) | 861.0 | 860.3 |
| 61 | δ = 1.72(6H, s), 6.63(4H, m), 6.81(2H, m), 6.97(2H, m), 7.13∼7.26(24H, m), 7.63(2H, m), 7.77(2H, m), 7.93(2H, m) | 893.2 | 892.3 |
| 62 | δ = 1.72(6H, s), 6.38(4H, m), 6.44(2H, m), 6.56(4H, m), 6.63∼6.64(10H, m), 6.81(4H, m), 6.9(2H, m), 7.2∼7.25(16H, m), 7.63(2H, m), 7.77(2H, m), 7.93(2H, m) | 1011.3 | 1010.4 |
| 65 | δ = 7.16∼7.35(17H, m), 7.45∼7.5(7H, m), 7.58∼7.63(7H, m), 7.69∼7.77(7H, m), 7.87∼8(5H, m), 8.12(1H, m), 8.18(1H, m), 8.55(1H, m) | 951.2 | 950.4 |
| 129 | δ = 7.11(4H, m), 7.25∼0.33(17H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 953.2 | 952.4 |
| 133 | δ = 1.51 (4H, m), 2.09(4H, m), 7.25∼7.33(11H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 855.1 | 854.4 |
| 141 | δ = 3.49(4H, s), 7.2∼7.33(15H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 903.1 | 902.4 |
| 149 | δ = 1.44(6H, m), 2.02(4H, m), 7.25∼7.33(11H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 869.1 | 868.4 |
| 153 | δ = 1.72(6H, s), 6.95(4H, m), 7.25∼7.33(3H, m), 7.45(2H, m), 7.5(5H, m), 7.54∼7.63(20H, m), 7.87(3H, m), 7.94∼8(2H, m), 8.12(1H, m), 8.18(1H, m), 8.55(1H, m) | 881.1 | 880.4 |
| 154 | δ = 1.72(6H, s), 6.95(4H, m), 7.08(1 H, m), 7.25∼7.33(3H, m), 7.45∼7.63(15H, m), 7.7∼7.71(3H, m), 7.87(2H, m), 7.94(2H, m), 8.12(1H, m), 8.46(1H, m), 8.55∼8.59(2H, m) | 728.9 | 728.3 |
| 163 | δ = 1.72(18H, s), 6.95(4H, m), 7.07(2H, m), 7.17(4H, m), 7.25∼7.34(7H, m), 7.5∼7.56(7H, m), 7.63∼7.77(10H, m). 7.87(7H, m), 7.94∼8(2H, m), 8.12(1H, m), 8.18(1H, m). 8.55(1H, m) | 1113.4 | 1112.5 |
| 353 | δ = 1.72(6H, s), 6.95(4H, m), 7.25∼7.33(3H, m), 7.45∼7.69(31H, m), 7.77(4H, m), 7.87∼8(5H, m), 8.12(1H, m), 8.18(1H, m), 8.55(1H, m) | 1033.3 | 1032.4 |
| 381 | δ = 1.72(6H, s), 6.95(4H, m), 7.08(1H, m), 7.25∼7.33(3H, m), 7.45∼7.64(23H, m), 7.7(1H, m), 7.77(2H, m), 7.93∼7.94(4H, m), 8.12(1H, m), 8.46(1H, m), 8.55∼8.59(2H, m) | 881.1 | 880.4 |
| 384 | δ = 1.72(12H, s), 6.95(4H, m), 7.07∼7.08(2H, m), 7.17(2H, m), 7.25∼7.34(5H, m), 7.45∼7.64(18H, m), 7.7(1H, m), 7.77(2H, m), 7.87∼7.94(6H, m), 8.12(1H, m), 8.46(1H, m), 8.55∼8.59(2H, m) | 997.3 | 996.4 |
| 385 | δ = 1.72(12H, s), 7.25∼7.33(11H, m), 7.45∼7.5(7H, m), 7.58∼7.69(8H, m), 7.73(2H, s), 7.77∼7.8(4H, m), 7.87(1H, m), 7.94∼8.04(4H, m), 8.12(1H, m), 8.18(1H, m), 8.55(1H, m) | 945.2 | 944.4 |
| 389 | δ = 1.72(12H, s), 6.95(4H, m), 7.25∼7.33(3H, m), 7.45∼7.57(23H, m), 7.73∼7.77(6H, m), 7.87(1H, m), 7.94∼8(4H, m), 8.12(1H, m), 8.18(1H, m), 8.55(1 H, m) | 997.3 | 996.4 |
| 393 | δ = 1.72(12H, s), 6.95(4H, m), 7.29(2H, m), 7.45∼7.66(32H, m), 7.73(2H, s), 7.77∼7.8(4H, m), 8∼8.04(4H, m), 8.12(2H, m), 8.18(2H, m) | 1149.5 | 1148.5 |
| 397 | δ = 1.72(12H, s), 7.25∼7.33(3H, m), 7.45∼7.5(7H, m), 7.58∼7.69(8H, m), 7.73(2H, s), 7.77∼7.8(4H, m), 7.87(1H, m), 7.94∼8.04(4H, m), 8.12(1H, m), 8.18(1H, m), 8.55(1H, m) | 793.0 | 792.4 |
| 401 | δ = 1.72(12H, s), 6.95(4H, m), 7.08(1H, m), 7.25∼7.33(3H, m), 7.45∼7.5(7H, m), 7.57∼7.63(8H, m), 7.7∼7.74(5H, m), 7.94∼7.98(4H, m), 8.12(1H, m), 8.46(1H, m), 8.55∼8.59(2H, m) | 845.1 | 844.4 |
| 405 | δ = 1.72(12H, s), 6.95(4H, m), 7.08(2H, m), 7.29(2H, m), 7.45∼7.66(24H, m), 7.73(2H, s), 7.8(2H, m), 7.94(2H, m), 8.04(2H, m), 8.12(2H, m), 8.59(2H, m) | 997.3 | 996.4 |
| 465 | δ = 1.72(12H, s), 6.95(4H, m), 7.25(2H, m), 7.33(2H, m), 7.45∼7.69(32H, m), 7.77(6H, m), 7.87∼7.94(8H, m), 8.55(2H, m) | 1225.6 | 1224.5 |
| 469 | δ = 1.72(12H, s), 7.29(2H, m), 7.45∼7.5(8H, m), 7.58∼7.63(10H, m), 7.77(6H, m), 7.93(4H, m), 8(2H, m), 8.12(2H, m), 8.18(2H, m) | 869.1 | 868.4 |
| 477 | δ = 1.72(12H, s), 6.95(4H, m), 7.25(2H, m), 7.33(2H, m), 7.45∼7.64(24H, m), 7.7(2H, m), 7.77(4H, m), 7.93∼7.94(6H, m), 8.46(2H, m), 8.55(2H, m) | 1073.4 | 1072.5 |
| 553 | δ = 1.72(6H, s), 7.25∼7.33(7H, m), 7.45∼7.5(7H, m), 7.58∼7.63(7H, m), 7.69(1H, m), 7.77(4H, m), 7.87∼8(5H, m), 8.12(1H, m), 8.18(1H, m), 8.55(1H, m) | 752.9 | 752.3 |
| 561 | δ = 1.72(6H, s), 6.95(2H, m), 7.08(1H, m), 7.25∼7.33(3H, m), 7.45∼7.63(14H, m), 7.69∼7.77(4H, m), 7.87∼7.94(5H, m), 8.12(1H, m), 8.55∼8.59(2H, m) | 702.9 | 702.3 |
| 568 | δ = 1.72(6H, s), 6.95(2H, m), 7.25∼7.33(3H, m), 7.45(2H, m), 7.5(5H, m), 7.54∼7.63(16H, m), 7.87∼8(5H, m), 8.12(1H, m), 8.18(1H, m), 8.55(1H, m) | 779.0 | 778.3 |
| 571 | δ = 1.72(6H, s), 6.95(2H, m), 7.08(1H, m), 7.25∼7.33(3H, m), 7.45∼7.69(19H, m), 7.77(3H, m), 7.87∼7.94(5H, m), 8.12(1H, m), 8.55∼8.59(2H, m) | 779.0 | 778.3 |
| 580 | δ = 1.72(6H, s), 6.95(2H, m), 7.25∼7.33(3H, m), 7.45∼7.69(23H, m), 7.77(4H, m), 7.87∼8(5H, m), 8.12(1H, m), 8.18(1H, m), 8.55(1H, m) | 855.1 | 854.4 |
| 587 | δ = 1.72(12H, s), 7.25∼7.33(7H, m), 7.45∼7.5(7H, m), 7.58∼7.63(6H, m), 7.69(3H, s), 7.77(4H, s), 7.83∼8(5H, m), 8.12∼8.18(3H, m), 8.55(1H, m) | 869.1 | 868.4 |
| 594 | δ = 1.72(12H, s), 6.95(2H, m), 7.08(1H, m), 7.25∼7.33(3H, m), 7.45∼7.63(13H, m), 7.69(3H, s), 7.69∼7.71(1H, m), 7.77(2H, s), 7.83∼7.87(3H, m), 7.94(2H, m), 8.12∼8.15(2H, m), 8.55∼8.59(2H, m) | 819.0 | 818.4 |
| 601 | δ = 1.72(12H, s), 6.95(2H, m), 7.25∼7.33(3H, m), 7.45∼7.64(17H, m), 7.69(3H, s), 7.69∼7.71(1H, m), 7.77(3H, s), 7.83∼7.87(3H, m), 7.94∼8(2H, m), 8.12∼8.18(3H, m), 8.55(1H, m) | 895.1 | 894.4 |
| 608 | δ = 1.72(12H, s), 6.95(2H, m), 7.08(1H, m), 7.25∼7.33(3H, m), 7.45∼7.64(17H, m), 7.69(3H, s), 7.77(3H, s), 7.83∼7.94(5H, m), 8.12∼8.15(2H, m), 8.55∼8.59(2H, m) | 895.1 | 894.4 |
| 615 | δ = 1.72(12H, s), 6.95(2H, m), 7.25∼7.33(3H, m), 7.45∼7.64(21H, m), 7.69(3H, s), 7.77(4H, s), 7.83∼8(5H, m), 8.12∼8.18(3H, m), 8.55(1H, m) | 971.2 | 970.4 |
| 622 | δ = 1.72(12H, s), 7.25∼7.33(7H, m), 7.45∼7.5(7H, m), 7.58∼7.63(9H, m), 7.69(1H, m), 7.77(6H, m), 7.87∼8(7H, m), 8.12(1H, m), 8.18(1H, m), 8.55(1H, m) | 945.2 | 944.4 |
| 629 | δ = 1.72(12H, s), 6.95(2H, m), 7.08(1H, m), 7.25∼7.33(3H, m), 7.45∼7.63(16H, m), 7.69∼7.77(6H, m), 7.87∼7.94(7H, m), 8.12(1H, m), 8.55∼8.59(2H, m) | 895.1 | 894.4 |
| 636 | δ = 1.72(12H, s), 6.95(2H, m), 7.25∼7.33(3H, m), 7.45(2H, m), 7.5(5H, m), 7.54∼7.63(20H, m), 7.87∼8(7H, m), 8.12(1H, m), 8.18(1H, m), 8.55(1H, m) | 971.2 | 970.4 |
| 643 | δ = 1.72(12H, s), 6.95(2H, m), 7.08(1H, m), 7.25∼7.33(3H, m), 7.45∼7.69(21H, m), 7.77(5H, m), 7.87∼7.94(7H, m), 8.12(1H, m), 8.55∼8.59(2H, m) | 971.2 | 970.4 |
| 650 | δ = 1.72(12H, s), 6.95(2H, m), 7.25∼7.33(3H, m), 7.45∼7.69(25H, m), 7.77(6H, m), 7.87∼8(7H, m), 8.12(1H, m), 8.18(1H, m), 8.55(1H, m) | 1047.3 | 1046.5 |
| 657 | δ = 1.72(6H, s), 6.92(2H, s), 7.08(1H, m), 7.25∼7.33(5H, m), 7.45∼7.63(23H, m), 7.7∼7.71(3H, m), 7.87(2H, m), 7.94(2H, m), 8.12(1H, m), 8.46(1H, m), 8.55∼8.59(2H, m) | 881.1 | 880.4 |
| 658 | δ = 1.72(6H, s), 6.92(2H, s), 7.25∼7.33(5H, m), 7.45(6H, m), 7.5(9H, m), 7.54∼7.63(20H, m), 7.87(3H, m), 7.94∼8(2H, m), 8.12(1H, m), 8.18(1H, m), 8.55(1H, m) | 1033.3 | 1032.4 |
| 659 | δ = 1.72(6H, s), 6.92(2H, s), 7.08(1H, m), 7.25∼7.33(5H, m), 7.45∼7.64(31H, m), 7.7(1H, m), 7.77(2H, m), 7.93∼7.94(4H, m), 8.12(1 H, m), 8.46(1 H, m), 8.55∼8.59(2H, m) | 1033.3 | 1032.4 |
| 660 | δ = 1.72(6H, s), 6.92(2H, s), 7.29∼7.3(4H, m), 7.45∼7.64(40H, m), 7.77(4H, m), 7.93(2H, m), 8(2H, m), 8.12(2H, m), 8.18(2H, m) | 1185.5 | 1184.5 |
| 661 | δ = 1.72(12H, s), 6.92(2H, s), 7.08(2H, m), 7.29∼7.3(4H, m), 7.45∼7.5(16H, m), 7.57∼7.63(8H, m), 7.73(2H, s), 7.74(2H, m), 7.94∼7.98(4H, m), 8.12(2H, m), 8.59(2H, m) | 997.3 | 996.4 |
| 662 | δ = 1.72(12H, s), 6.92(2H, s), 7.29∼7.3(4H, m), 7.45∼7.64(32H, m), 7.73(2H, s), 7.74∼7.77(4H, m), 7.98∼8(4H, m), 8.12(2H, m), 8.18(2H, m) | 1149.5 | 1148.5 |
| 663 | δ = 1.72(12H, s), 6.92(2H, s), 7.08(2H, m), 7.29∼7.3(4H, m), 7.45∼7.66(32H, m), 7.73(2H, s), 7.8(2H, m), 7.94(2H, m), 8.04(2H, m), 8.12(2H, m), 8.59(2H, m) | 1149.5 | 1148.5 |
| 664 | δ = 1.72(12H, s), 6.92(2H, s), 7.29∼7.3(4H, m), 7.45∼7.66(40H, m), 7.73(2H, s), 7.77∼7.8(4H, m), 8∼8.04(4H, m), 8.12(2H, m), 8.18(2H, m) | 1301.7 | 1300.6 |
| 665 | δ = 1.72(12H, s), 6.92(2H, s), 7.08(2H, m), 7.29∼7.3(4H, m), 7.45∼7.64(34H, m), 7.77(4H, m), 7.93∼7.94(6H, m), 8.12(2H, m), 8.59(2H, m) | 1225.6 | 1224.5 |
| 666 | δ = 1.72(12H, s), 6.92(2H, s), 7.29∼7.3(4H, m), 7.45∼7.64(42H, m), 7.77(6H, m), 7.93(4H, m), 8(2H, m), 8.12(2H, m), 8.18(2H, m) | 1377.8 | 1376.6 |
| 667 | δ = 1.72(6H, s), 6.92(1H, s), 7.08(1H, m), 7.29∼7.3(3H, m), 7.45∼7.63(20H, m), 7.71∼7.77(3H, m), 7.87∼8(4H, m), 8.12(2H, m), 8.18(1H, m), 8.59(1H, m) | 779.0 | 778.3 |
| 668 | δ = 1.72(6H, s), 6.92(1H, s), 7.29∼7.3(3H, m), 7.45∼7.64(24H, m), 7.71∼7.77(4H, m), 7.87∼7.93(2H, m), 8(2H, m), 8.12(2H, m), 8.18(2H, m) | 855.1 | 854.4 |
| 669 | δ = 1.72(6H, s), 6.92(1H, s), 7.08(1H, m), 7.29∼7.3(3H, m), 7.45∼7.64(24H, m), 7.77(3H, m), 7.93∼8(4H, m), 8.12(2H, m), 8.18(1H, m), 8.59(1H, m) | 855.1 | 854.4 |
| 670 | δ = 1.72(6H, s), 6.92(1H, s), 7.29∼7.3(3H, m), 7.45∼7.64(28H, m), 7.77(4H, m), 7.93(2H, m), 8(2H, m), 8.12(2H, m), 8.18(2H, m) | 931.2 | 930.4 |
| 671 | δ = 1.72(12H, s), 6.92(1H, s), 7.08(1H, m), 7.29∼7.3(3H, m), 7.45∼7.63(19H, m), 7.69(2H, s), 7.69∼7.71(1H, m), 7.77(2H, s), 7.83∼7.87(2H, m), 7.94∼8(2H, m), 8.12∼8.18(4H, m), 8.59(1H, m) | 895.1 | 894.4 |
| 672 | δ = 1.72(12H, s), 6.92(1H, s), 7.29∼7.3(3H, m), 7.45∼7.64(23H, m), 7.69(2H, s), 7.69∼7.71(1H, m), 7.77(3H, s), 7.83∼7.87(2H, m), 8(2H, m), 8.12∼8.18(5H, m) | 971.2 | 970.4 |
| 673 | δ = 1.72(12H, s), 6.92(1H, s), 7.08(1H, m), 7.29∼7.3(3H, m), 7.45∼7.64(23H, m), 7.69(2H, s), 7.77(3H, s), 7.83(1H, m), 7.93∼8(3H, m), 8.12∼8.18(4H, m), 8.59(1 H, m) | 971.2 | 970.4 |
| 674 | δ = 1.72(12H, s), 6.92(1H, s), 7.29∼7.3(3H, m), 7.45∼7.64(27H, m), 7.69(2H, s), 7.77(4H, s), 7.83(1H, m), 7.93(1 H, m), 8(2H, m), 8.12∼8.18(5H, m) | 1047.3 | 1046.5 |
| 675 | δ = 1.72(12H, s), 6.92(1H, s), 7.08(1H, m), 7.29∼7.3(3H, m), 7.45∼7.63(22H, m), 7.71∼7.77(5H, m), 7.87∼8(6H, m), 8.12(2H, m), 8.18(1 H, m), 8.59(1H, m) | 971.2 | 970.4 |
| 676 | δ = 1.72(12H, s), 6.92(1H, s), 7.29∼7.3(3H, m), 7.45∼7.64(26H, m), 7.71∼7.77(6H, m), 7.87∼7.93(4H, m), 8(2H, m), 8.12(2H, m), 8.18(2H, m) | 1047.3 | 1046.5 |
| 677 | δ = 1.72(12H, s), 6.92(1H, s), 7.08(1H, m), 7.29∼7.3(3H, m), 7.45∼7.64(26H, m), 7.77(5H, m), 7.93∼8(6H, m), 8.12(2H, m), 8.18(1H, m), 8.59(1H, m) | 1047.3 | 1046.5 |
| 678 | δ = 1.72(12H, s), 6.92(1H, s), 7.29∼7.3(3H, m), 7.45∼7.64(30H, m), 7.77(6H, m), 7.93(4H, m), 8(2H, m), 8.12(2H, m), 8.18(2H, m) | 1123.4 | 1122.5 |
| 679 | δ = 1.72(6H, s), 7.25∼7.29(10H, m), 7.45∼7.63(15H, m), 7.77(4H, m), 7.93(2H, m), 8(2H, m), 8.08∼8.12(5H, m), 8.18(2H, m) | 879.10 | 878.37 |
| 687 | δ = 1.72(6H, s), 7.25∼7.29(6H, m), 7.45∼7.63(17H, m), 7.77(4H, m), 7.93(2H, m), 8∼8.01(4H, m), 8.08∼8.12(5H, m), 8.18(2H, m), 8.55(2H, m) | 928.38 | 929.15 |
| 689 | δ = 1.72(6H, s), 7.25∼7.36(4H, m), 7.45∼7.5(4H, m), 7.58∼7.63(7H, m), 7.69(1H, m), 7.77(4H, m), 7.83∼8(9H, m), 8.12(1 H, m), 8.18(1H, m), 8.55(1H, m) | 726.30 | 726.90 |
| 691 | δ = 1.72(6H, s), 6.95(4H, m), 7.08(1H, m), 7.25∼7.36(4H, m), 7.45∼7.63(12H, m), 7.7∼7.71(3H, m), 7.83∼7.87(3H, m), 7.94∼8(5H, m), 8.12(1H, m), 8.46(1 H, m), 8.55∼8.59(2H, m) | 778.33 | 778.98 |
| 703 | δ = 1.72(12H, s), 7.25∼7.33(3H, m), 7.45∼7.63(12H, m), 7.69(3H, s), 7.77(4H, s), 7.83∼8(5H, m), 8.08∼8.18(6H, m), 8.55(1H, m) | 842.37 | 843.06 |
| 704 | δ = 1.72(12H, s), 6.95(4H, m), 7.08(1H, m), 7.25∼7.33(3H, m), 7.45∼7.63(14H, m), 7.69(1H, s), 7.7∼7.71(2H, m), 7.77(2H, s), 7.87(1H, m), 7.94(2H, m), 8.08∼8.12(5H, m), 8.46(1H, m), 8.55∼8.59(2H, m) | 894.40 | 895.14 |
| 715 | δ = 1.72(12H, s), 7.25∼7.33(3H, m), 7.45∼7.63(15H, m), 7.69(1H, m), 7.77(6H, m), 7.87∼8(7H, m), 8.08∼8.12(4H, m), 8.18(1H, m), 8.55(1H, m) | 918.40 | 919.16 |
| 721 | δ = 1.72(12H, s), 6.95(4H, m), 7.08(1H, m), 7.25∼7.33(3H, m), 7.45∼7.63(16H, m), 7.7∼7.77(5H, m), 7.87∼7.94(6H, m), 8.08∼8.12(4H, m), 8.46(1H, m), 8.55∼8.59(2H, m) | 970.43 | 971.23 |
| 725 | δ = 1.35(9H, s), 1.72(12H, s), 6.95(4H, m), 7.08(1H, m), 7.25∼7.33(5H, m), 7.45∼7.63(14H, m), 7.7∼7.77(5H, m), 7.87∼7.94(6H, m), 8.12(1H, m), 8.46(1H, m), 8.55∼8.59(2H, m) | 976.48 | 977.28 |

### [Example 1] Manufacture of OLED's by using the organic electroluminescent compound of the invention

An OLED device was manufactured by using an electroluminescent material according to the invention.

First, a transparent electrode ITO thin film (15 Ω/□) (2) prepared from glass for OLED (1) (manufactured by Samsung-Corning) was subjected to ultrasonic washing with trichloroethylene, acetone, ethanol and distilled water, sequentially, and stored in isopropanol before use.

Then, an ITO substrate was equipped in a substrate folder of a vacuum vapor-deposit device, and 4,4',4"-tris(N,N-(2-naphthyl)-phenylamino)triphenylamine (2-TNATA) (of which the structure is shown below) was placed in a cell of the vacuum vapor-deposit device, which was then ventilated up to 10⁻⁶ torr of vacuum in the chamber. Electric current was applied to the cell to evaporate 2-TNATA, thereby providing vapor-deposit of a hole injecting layer (3) having 60 nm of thickness on the ITO substrate.

Then, to another cell of the vacuum vapor-deposit device, charged was N,N'-bis(α-naphthyl)-N,N'-diphenyl-4,4'-diamine (NPB) (of which the structure is shown below), and electric current was applied to the cell to evaporate NPB, thereby providing vapor-deposit of a hole transport layer (4) with 20 nm of thickness on the hole injecting layer.

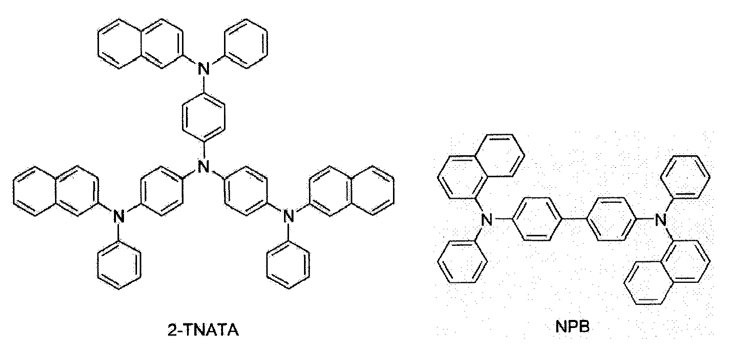

After forming the hole injecting layer and the hole transport layer, an electroluminescent layer was vapor-deposited as follows. To one cell of a vacuum vapor-deposit device, charged was Compound H-28 (of which the structure is shown below) as a host, and a compound according to the invention (Compound 165) was charged to another cell as a dopant. The two substances were evaporated at different rates to give doping at 2 to 5% by weight on the basis of the host, thereby providing vapor-deposit of an electroluminescent layer (5) with a thickness of 30 nm on the hole transport layer.

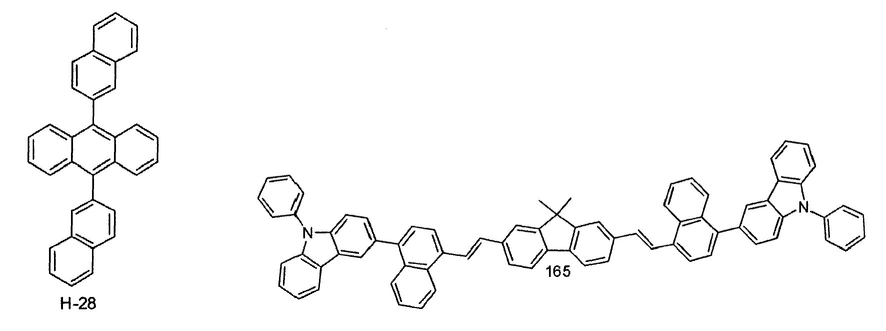

Then, tris(8-hydroxyquinoline)aluminum (III) (Alq) (of which the structure is shown below) was vapor-deposited as an electron transport layer (6) with a thickness of 20 nm, and lithium quinolate (Liq) (of which the structure shown below) was vapor-deposited as an electron injecting layer (7) with a thickness of 1 to 2 nm. Thereafter, an Al cathode (8) was vapor-deposited with a thickness of 150 nm by using another vacuum vapor-deposit device to manufacture an OLED.

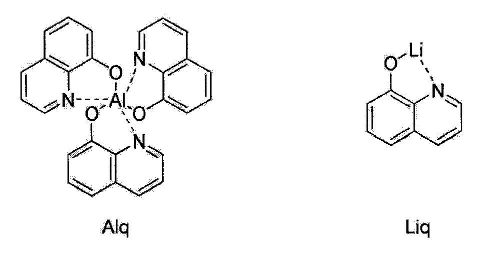

Each material employed for manufacturing an OLED was used as the electroluminescent material after purifying via vacuum sublimation at 10⁻⁶ torr.

### [Comparative Example 1] Manufacture of an OLED by using conventional electroluminescent compound

After forming a hole injecting layer and a hole transport layer according to the same procedure as described in Example 1, dinaphthylanthracene (DNA) was charged to another cell of said vacuum vapor-deposit device as an electroluminescent host material, while Compound (A) (of which the structure is shown below) was charged to still another cell as blue electroluminescent material. An electroluminescent layer was vapor-deposited with a thickness of 30 nm on the hole transport layer, with vapor-deposition rate of 100:1.

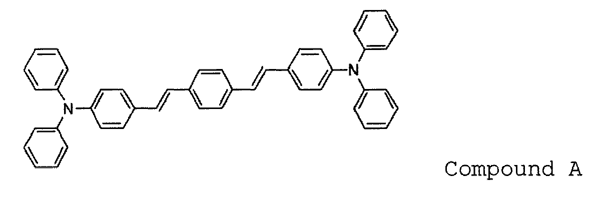

Then, an electron transport layer and an electron injecting layer were vapor-deposited according to the same procedures as in Example 1, and Al cathode was vapor-deposited by using another vacuum vapor-deposit device with a thickness of 150 nm, to manufacture an OLED.

### [Example 2] Electroluminescent properties of OLED's manufactured

The luminous efficiencies of the OLED's comprising the organic electroluminescent compounds according to the present invention (Example 1) or conventional electroluminescent compound (Comparative Example 1) were measured at 1,000 cd/m², respectively, and the results are shown in Table 2.

**Table 2**

| No. | Host | Dopant | Doping concentration (wt%) | Luminous efficiency (cd/A) | Color |
|---|---|---|---|---|---|
| | | | | @ 1,000 cd/m² | |
| 1 | H-28 | 17 | 3.0 | 7.5 | Blue |
| 2 | H-36 | 72 | 3.0 | 7.4 | Blue |
| 3 | H-38 | 132 | 3.0 | 7.0 | Blue |
| 4 | H-50 | 165 | 3.0 | 7.9 | Blue |
| 5 | H-66 | 389 | 3.0 | 8.3 | Blue |
| 6 | H-77 | 473 | 3.0 | 7.5 | Blue |
| 7 | H-79 | 601 | 3.0 | 7.6 | Blue |
| 8 | H-82 | 657 | 3.0 | 7.8 | Blue |
| Comp.1 | DNA | Compound A | 3.0 | 7.3 | Jade green |

As can be seen from Table 2, the blue electroluminescent devices employing the material according to the present invention showed improved luminous efficiency as compared that of Comparative Example 1. Compound (H-66) with 3.0wt% doping of Compound (389) showed the highest luminous efficiency.

Accordingly, the organic electroluminescent compounds according to the present invention can be used as blue electroluminescent material of high efficiency. Moreover, the device, to which the dopant material according to the invention was applied, showed noticeable improvement in view of color purity. The improvement in both color purity and luminous efficiency proves that the materials of the present invention have excellent properties.

## Claims

1. An organic electroluminescent compound represented by Chemical Formula (1): 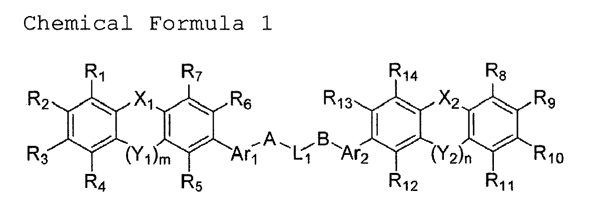 In Chemical Formula (1), L₁ is a substituent selected from the following structures; 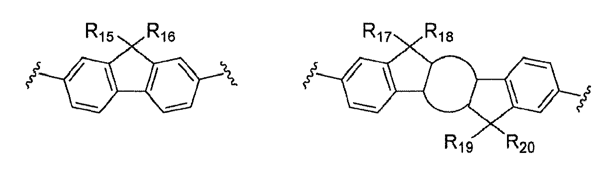 A and B independently represent a chemical bond, or a substituent selected from the following structures; 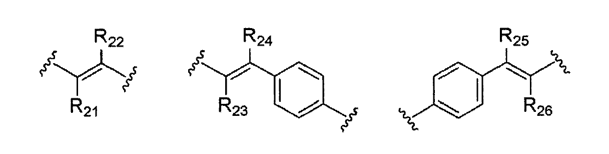 Ar₁ and Ar₂ independently represent a chemical bond, or (C6-C60)arylene, (C3-C60)heteroarylene, 5- or 6-membered heterocycloalkylene containing one or more heteroatom(s) selected from N, O and S, (C3-C60)cycloalkylene, (C2-C60)alkenylene, (C2-C60)alkynylene, (C1-C60)alkylenoxy, (C6-C60)arylenoxy or (C6-C60)arylenethio; the arylene, heteroarylene, heterocycloalkylene, cycloalkylene, alkenylene, alkynylene, alkylenoxy, arylenoxy or arylenethio of Ar₁ and Ar₂ may be further substituted by one or more substituent(s) selected from a group consisting of halogen, (C1-C60)alkyl, halo(C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; 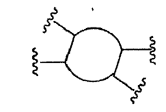 represents 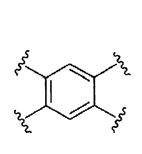 or 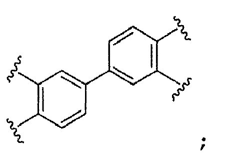 R₁ through R₂₀ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or each of R₁ through R₂₀ may be linked to an adjacent substituent via (C3-C60)alkylene or (C3-C60)alkenylene with or without a fused ring to form an alicyclic ring, or a monocyclic or polycyclic aromatic ring;
R₂₁ through R₂₆ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl;
X₁, X₂, Y₁ and Y₂ independently represent a chemical bond, or -C(R₃₁)(R₃₂)-, -N(R₃₃)-, -S-, -W, -Si(R₃₄)(R₃₅)-, -P(R₃₆)-, - C(=O)-, -B(R₃₇)-, -In(R₃₈)-, -Se-, -Ge(R₃₉)(R₄₀)-, -Sn(R₄₁)(R₄₂)-, -Ga(R₄₃)- or -(R₄₄)C=C(R₄₅)-;
R₃₁ through R₄₅ independently represent hydrogen, halogen, (C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or R₃₁ and R₃₂, R₃₄ and R₃₅, R₃₉ and R₄₀, R₄₁ and R₄₂, or R₄₄ and R₄₅ may be linked via (C3-C60)alkylene or (C3-C60)alkenylene with or without a fused ring to form an alicyclic ring, or a monocyclic or polycyclic aromatic ring;
the alkyl, aryl, heteroaryl, heterocycloalkyl, cycloalkyl, trialkylsilyl, dialkylarylsilyl, triarylsilyl, adamantyl, bicycloalkyl, alkenyl, alkynyl, alkylamino or arylamino of R₁ through R₂₆ and R₃₁ through R₄₅ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; and
m and n independently represent an integer from 0 to 4; provided that, if 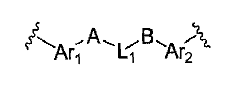 represents 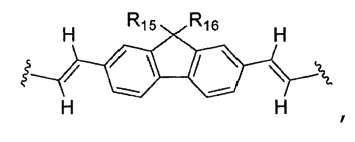 both X₁ and X₂ represent NR₃₃, and both Y₁ and Y₂ represent a chemical bond, then R₃₃ does not represent hydrogen or (C1-C5)alkyl.

2. The organic electroluminescent compound according to claim 1, wherein 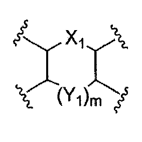 and 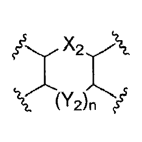 are selected from the following structures: 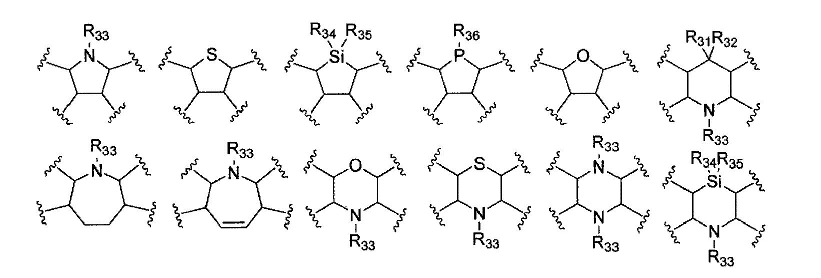 wherein, R₃₁ through R₃₆ independently represent (C1-C60)alkyl, (C6-C60)aryl or (C3-C60)heteroaryl, or R₃₁ and R₃₂ or R₃₄ and R₃₅ may be linked via (C3-C60)alkylene or (C3-C60)alkenylene with or without a fused ring to form an alicyclic ring, or a monocyclic or polycyclic aromatic ring; and the alkyl, aryl or heteroaryl of R₃₁ through R₃₆ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl;
provided that if both 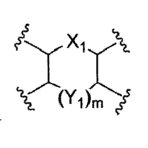 and 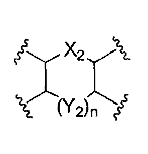 represent 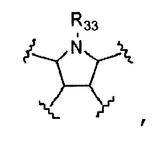 R₃₃ does not represent (C1-C5)alkyl.

3. An organic electroluminescent device which is comprised of a first electrode; a second electrode; and at least one organic layer(s) interposed between the first electrode and the second electrode; wherein the organic layer comprises an organic electroluminescent compound represented by Chemical Formula (1): 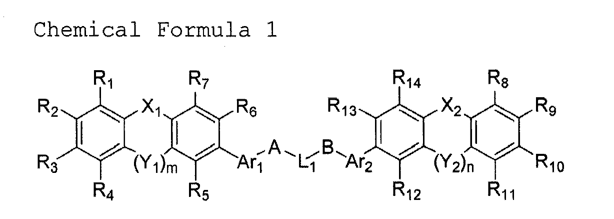 In Chemical Formula (1), L₁ is a substituent selected from the following structures; 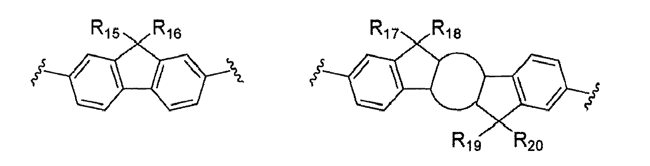 A and B independently represent a chemical bond, or a substituent selected from the following structures; 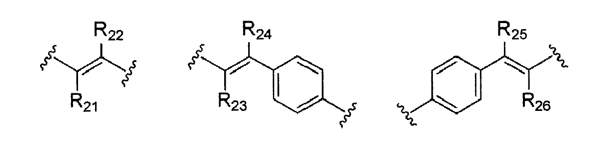 Ar₁ and Ar₂ independently represent a chemical bond, or (C6-C60)arylene, (C3-C60)heteroarylene, 5- or 6-membered heterocycloalkylene containing one or more heteroatom(s) selected from N, O and S, (C3-C60)cycloalkylene, (C2-C60)alkenylene, (C2-C60)alkynylene, (C1-C60)alkylenoxy, (C6-C60)arylenoxy or (C6-C60)arylenethio; the arylene, heteroarylene, heterocycloalkylene, cycloalkylene, alkenylene, alkynylene, alkylenoxy, arylenoxy or arylenethio of Ar₁ and Ar₂ may be further substituted by one or more substituent(s) selected from a group consisting of halogen, (C1-C60)alkyl, halo(C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; 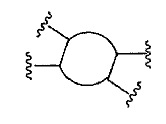 represents 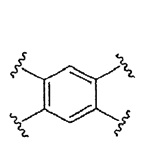 or 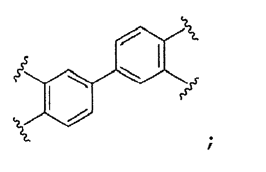 R₁ through R₂₀ independently represent hydrogen, halogen, (C1-C60)alkyl, (C6-C60) aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or each of R₁ through R₂₀ may be linked to an adjacent substituent via (C3-C60)alkylene or (C3-C60)alkenylene with or without a fused ring to form an alicyclic ring, or a monocyclic or polycyclic aromatic ring;
R₂₁ through R₂₆ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl;
X₁, X₂, Y₁ and Y₂ independently represent a chemical bond, or -C(R₃₁)(R₃₂)-, -N(R₃₃)-, -S-, -O-, -Si(R₃₄)(R₃₅)-, -P(R₃₆)-, - C(=O)-, -B(R₃₇)-, -In(R₃₈)-, -Se-, -Ge(R₃₉)(R₄₀)-, -Sn(R₄₁)(R₄₂)-, -Ga(R₄₃)- or -(R₄₄)C=C(R₄₅)-;
R₃₁ through R₄₅ independently represent hydrogen, halogen, (C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or R₃₁ and R₃₂, R₃₄ and R₃₅, R₃₉ and R₄₀, R₄₁ and R₄₂, or R₄₄ and R₄₅ may be linked via (C3-C60)alkylene or (C3-C60)alkenylene with or without a fused ring to form an alicyclic ring, or a monocyclic or polycyclic aromatic ring;
the alkyl, aryl, heteroaryl, heterocycloalkyl, cycloalkyl, trialkylsilyl, dialkylarylsilyl, triarylsilyl, adamantyl, bicycloalkyl, alkenyl, alkynyl, alkylamino or arylamino of R₁ through R₂₆ and R₃₁ through R₄₅ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; and
m and n independently represent an integer from 0 to 4; provided that, if 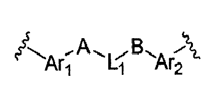 represents 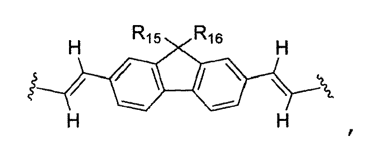 both X1 and X2 represent NR33, and both Y1 and Y2 represent a chemical bond, then R33 does not represent hydrogen or (C1-C5)alkyl and one or more host(s) selected from the compounds represented by Chemical Formula (5) or (6):
(Ar10)a-X-(Ar20)b Chemical Formula 5
(Ar30)c-Y-(Ar40)d Chemical Formula 6
wherein, X represents (C6-C60)arylene or (C4-C60)heteroarylene;
Y represents anthracenylene;
Ar₁₀ through Ar₄₀ are independently selected from hydrogen, (C1-C60)alkyl, (C1-C60)alkoxy, halogen, (C4-C60)heteroaryl, (C5-C60)cycloalkyl and (C6-C60)aryl; the cycloalkyl, aryl or heteroaryl of Ar₁₀ through Ar₄₀ may be further substituted by one or more substituent(s) selected from a group consisting of (C6-C60)aryl or (C4-C60)heteroaryl with or without one or more substituent(s) selected from a group consisting of (C1-C60)alkyl with or without halogen substituent(s), (C1-C60)alkoxy, (C3-C60)cycloalkyl, halogen, cyano, tri(C1-C60)alkylsilyl, di(C1-C60)alkyl(C6-C60)arylsilyl and tri(C6-C60)arylsilyl; (C1-C60)alkyl with or without halogen substituent(s), (C1-C60)alkoxy, (C3-C60)cycloalkyl, halogen, cyano, tri(C1-C60)alkylsilyl, di(C1-C60)alkyl(C6-C60)arylsilyl and tri(C6-C60)arylsilyl; and
a, b, c and d independently represent an integer from 0 to 4.

4. The organic electroluminescent device according to claim 3, wherein the organic layer comprises one or more compound(s) selected from a group consisting of arylamine compounds and styrylarylamine compounds.

5. The organic electroluminescent device according to claim 3, wherein the organic layer comprises one or more metal(s) selected from a group consisting of organic metals of Group 1, Group 2, 4^{th} period and 5^{th} period transition metals, lanthanide metals and d-transition elements in the Periodic Table of Elements.

6. An organic electroluminescent device according to claim 3, which is an organic electroluminescent display comprising a compound having the electroluminescent peak with wavelength of 480 to 560 nm, or a compound having the electroluminescent peak with wavelength of not less than 560 nm, in addition to the organic electroluminescent compound according to claim 1 or 2.

7. The organic electroluminescent device according to claim 3, wherein the organic layer comprises a charge generating layer as well as the electroluminescent layer.

8. The organic electroluminescent device according to claim 3, wherein a mixed region of reductive dopant and organic substance, or a mixed region of oxidative dopant and organic substance is placed on the inner surface of one or both electrode(s) among the pair of electrodes.

9. An organic solar cell which comprises an organic electroluminescent compound represented by Chemical Formula (1): 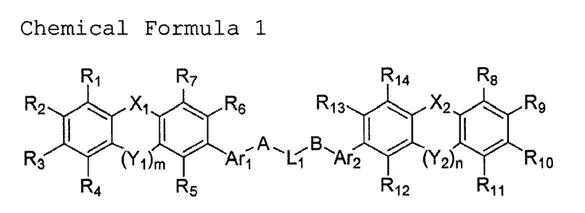 In Chemical Formula (1), L₁ is a substituent selected from the following structures; 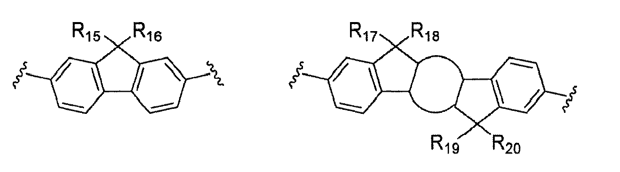 A and B independently represent a chemical bond, or a substituent selected from the following structures; 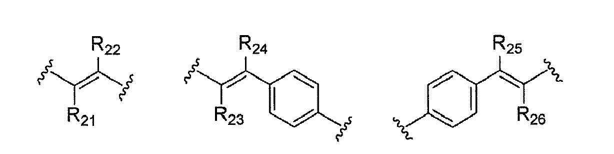 Ar₁ and Ar₂ independently represent a chemical bond, or (C6-C60)arylene, (C3-C60)heteroarylene, 5- or 6-membered heterocycloalkylene containing one or more heteroatom (s) selected from N, O and S, (C3-C60)cycloalkylene, (C2-C60)alkenylene, (C2-C60)alkynylene, (C1-C60)alkylenoxy, (C6-C60)arylenoxy or (C6-C60)arylenethio; the arylene, heteroarylene, heterocycloalkylene, cycloalkylene, alkenylene, alkynylene, alkylenoxy, arylenoxy or arylenethio of Ar₁ and Ar₂ may be further substituted by one or more substituent(s) selected from a group consisting of halogen, (C1-C60)alkyl, halo(C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; 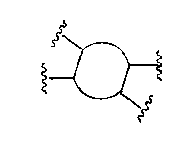 represents 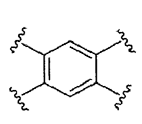 or 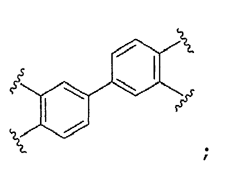 R₁ through R₂₀ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or each of R₁ through R₂₀ may be linked to an adjacent substituent via (C3-C60)alkylene or (C3-C60)alkenylene with or without a fused ring to form an alicyclic ring, or a monocyclic or polycyclic aromatic ring;
R₂₁ through R₂₆ independently represent hydrogen, halogen, (C1-C60)alkyl, (C6-C60)aryl, (C3-C60)heteroaryl, 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl;
X₁, X₂, Y₁ and Y₂ independently represent a chemical bond, or -C(R₃₁)(R₃₂)-, -N(R₃₃)-, -S-, -O-, -Si(R₃₄)(R₃₅)-, -P(R₃₆)-,-C(=O)-, -B(R₃₇)-, -In(R₃₈)-, -Se-, -Ge(R₃₉)(R₄₀)-, -Sn(R₄₁)(R₄₂)-, -Ga(R₄₃)- or -(R₄₄)C=C(R₄₅)-;
R₃₁ through R₄₅ independently represent hydrogen, halogen, (C1-C60)alkyl, (C6-C60)aryl, (C3-C60)heteroaryl, 5- or 6-membered heterocycloalkyl containing one or more heteroatom(s) selected from N, O, S and Si, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro or hydroxyl, or R₃₁ and R₃₂, R₃₄ and R₃₅, R₃₉ and R₄₀, R₄₁ and R₄₂, or R₄₄ and R₄₅ may be linked via (C3-C60)alkylene or (C3-C60)alkenylene with or without a fused ring to form an alicyclic ring, or a monocyclic or polycyclic aromatic ring;
the alkyl, aryl, heteroaryl, heterocycloalkyl, cycloalkyl, trialkylsilyl, dialkylarylsilyl, triarylsilyl, adamantyl, bicycloalkyl, alkenyl, alkynyl, alkylamino or arylamino of R₁ through R₂₆ and R₃₁ through R₄₅ may be further substituted by one or more substituent(s) selected from halogen, (C1-C60)alkyl with or without halogen substituent(s), (C6-C60)aryl, (C3-C60)heteroaryl with or without (C6-C60)aryl substituent(s), 5- or 6-membered heterocycloalkyl containing one or more heteroatom(s) selected from N, O and S, (C3-C60)cycloalkyl, tri(C1-C60)alkylsilyl, di(C1-C60)alkyl(C6-C60)arylsilyl, tri(C6-C60)arylsilyl, adamantyl, (C7-C60)bicycloalkyl, (C2-C60)alkenyl, (C2-C60)alkynyl, (C1-C60)alkoxy, cyano, (C1-C60)alkylamino, (C6-C60)arylamino, (C6-C60)ar(C1-C60)alkyl, (C6-C60)aryloxy, (C6-C60)arylthio, (C1-C60)alkoxycarbonyl, carboxyl, nitro and hydroxyl; and
m and n independently represent an integer from 0 to 4; provided that, if 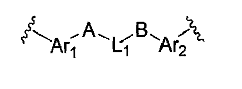 represents 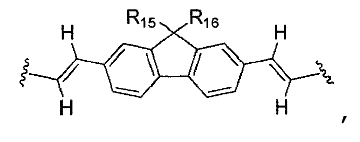 both X₁ and X₂ represent NR₃₃, and both Y₁ and Y₂ represent a chemical bond, then R₃₃ does not represent hydrogen or (C1-C5)alkyl.
